(19) Europäisches Patentamt
European Patent Office
Office européen des brevets

(11) **EP 3 798 823 A1**

(12) **EUROPEAN PATENT APPLICATION**

(43) Date of publication:
**31.03.2021 Bulletin 2021/13**

(51) Int Cl.:
***G06F 9/30*** (2018.01)

(21) Application number: **20178989.8**

(22) Date of filing: **09.06.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2019 US 201916586114**

(71) Applicant: **Intel Corporation**
**Santa Clara, CA 95054 (US)**

(72) Inventors:
• **Pillai, Kamlesh R.**
**560017 Bangalore (IN)**
• **Hughes, Christopher J.**
**Santa Clara, CA 95051 (US)**
• **Heinecke, Alexander**
**San Jose, CA 95134 (US)**

(74) Representative: **Samson & Partner Patentanwälte mbB**
**Widenmayerstraße 6**
**80538 München (DE)**

(54) **APPARATUSES, METHODS, AND SYSTEMS FOR INSTRUCTIONS OF A MATRIX OPERATIONS ACCELERATOR**

(57) Systems, methods, and apparatuses relating to a matrix operations accelerator are described. In one embodiment, a processor includes a matrix operations accelerator circuit that includes a two-dimensional grid of fused multiply accumulate circuits that is switchable from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from at least one first input two-dimensional matrix and at least one second input two-dimensional matrix, and store the output values in resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

FIG. 1A

**Description**

## TECHNICAL FIELD

The disclosure relates generally to computer processor architecture, and, more specifically, to apparatuses, systems, and methods for executing instructions to perform a matrix operation using a matrix operations accelerator circuit.

## BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a micro-instruction, e.g., an instruction that results from a processor's decoder decoding macro-instructions.

## BRIEF DESCRIPTION OF THE DRAWINGS

The present disclosure is illustrated by way of example and not limitation in the figures of the accompanying drawings, in which like references indicate similar elements and in which:

Figure 1A illustrates an embodiment of configured tiles according to embodiments of the disclosure.
Figure 1B illustrates an embodiment of configured tiles according to embodiments of the disclosure.
Figure 2 illustrates several examples of matrix storage according to embodiments of the disclosure.
Figure 3 illustrates an embodiment of a system utilizing a matrix (tile) operations accelerator according to embodiments of the disclosure.
Figures 4 and 5 show different embodiments of how memory is shared using a matrix operations accelerator.
Figure 6 illustrates an embodiment of matrix multiply accumulate operation using tiles ("TMMA").
Figure 7 illustrates an embodiment of a subset of the execution of an iteration of a chained fused multiply accumulate instruction.
Figure 8 illustrates an embodiment of a subset of the execution of an iteration of a chained fused multiply accumulate instruction.
Figure 9 illustrates an embodiment of a subset of the execution of an iteration of a chained fused multiply accumulate instruction.
Figure 10 illustrates an embodiment of a subset of the execution of an iteration of a chained fused multiply accumulate instruction.
Figure 11 illustrates power-of-two sized SIMD implementations wherein the accumulators use input sizes that are larger than the inputs to the multipliers according to an embodiment.
Figure 12 illustrates an embodiment of a system utilizing matrix operations circuitry.
Figure 13 illustrates an embodiment of a processor core pipeline supporting matrix operations using tiles.
Figure 14 illustrates an embodiment of a processor core pipeline supporting matrix operations using tiles.
Figure 15 illustrates an example of a matrix expressed in row major format and column major format.
Figure 16 illustrates an example of usage of matrices (tiles).
Figure 17 illustrates an embodiment a method of usage of matrices (tiles).
Figure 18 illustrates support for configuration of the usage of tiles according to an embodiment.
Figure 19 illustrates an embodiment of a description of the matrices (tiles) to be supported.
Figures 20 (A)-(D) illustrate examples of register(s).
Figure 21 illustrates an embodiment of a matrix operations accelerator circuit comprising a two-dimensional grid of processing element circuits.
Figure 22 is a block diagram illustrating use of a TILEPARTIALDOTPRODUCT instruction to accelerate a matrix operation according to some embodiments.
Figure 23 illustrates a method 2300 of processing a TILEPARTIALDOTPRODUCT instruction according to embodiments of the disclosure.
Figure 24 illustrates an embodiment of a matrix operations accelerator circuit comprising a two-dimensional grid of processing element circuits that includes a row of configuration switches to switch between a first mode and a second mode.
Figure 25 illustrates an embodiment of a configuration switch.

Figure 26 illustrates an embodiment of a matrix operations accelerator circuit comprising a two-dimensional grid of processing element circuits that includes a plurality of rows of configuration switches to switch between a plurality of modes.

Figure 27A is a block diagram illustrating a generic vector friendly instruction format and class A instruction templates thereof according to embodiments of the disclosure.

Figure 27B is a block diagram illustrating the generic vector friendly instruction format and class B instruction templates thereof according to embodiments of the disclosure.

Figure 28A is a block diagram illustrating fields for the generic vector friendly instruction formats in Figures 27A and 27B according to embodiments of the disclosure.

Figure 28B is a block diagram illustrating the fields of the specific vector friendly instruction format in Figure 28A that make up a full opcode field according to one embodiment of the disclosure.

Figure 28C is a block diagram illustrating the fields of the specific vector friendly instruction format in Figure 28A that make up a register index field according to one embodiment of the disclosure.

Figure 28D is a block diagram illustrating the fields of the specific vector friendly instruction format in Figure 28A that make up the augmentation operation field 2750 according to one embodiment of the disclosure.

Figure 29 is a block diagram of a register architecture according to one embodiment of the disclosure.

Figure 30A is a block diagram illustrating both an exemplary in-order pipeline and an exemplary register renaming, out-of-order issue/execution pipeline according to embodiments of the disclosure.

Figure 30B is a block diagram illustrating both an exemplary embodiment of an in-order architecture core and an exemplary register renaming, out-of-order issue/execution architecture core to be included in a processor according to embodiments of the disclosure.

Figure 31A is a block diagram of a single processor core, along with its connection to the on-die interconnect network and with its local subset of the Level 2 (L2) cache, according to embodiments of the disclosure.

Figure 31B is an expanded view of part of the processor core in Figure 31A according to embodiments of the disclosure.

Figure 32 is a block diagram of a processor that may have more than one core, may have an integrated memory controller, and may have integrated graphics according to embodiments of the disclosure.

Figure 33 is a block diagram of a system in accordance with one embodiment of the present disclosure.

Figure 34 is a block diagram of a more specific exemplary system in accordance with an embodiment of the present disclosure.

Figure 35, shown is a block diagram of a second more specific exemplary system in accordance with an embodiment of the present disclosure.

Figure 36, shown is a block diagram of a system on a chip (SoC) in accordance with an embodiment of the present disclosure.

Figure 37 is a block diagram contrasting the use of a software instruction converter to convert binary instructions in a source instruction set to binary instructions in a target instruction set according to embodiments of the disclosure.

## DETAILED DESCRIPTION

In the following description, numerous specific details are set forth. However, it is understood that embodiments may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Matrices may be increasingly important in many computing tasks such as machine learning and other bulk data processing. Deep Learning is a class of machine learning algorithms. Deep learning architectures, such as deep neural networks, may be applied to fields including computer vision, speech recognition, natural language processing, audio recognition, social network filtering, machine translation, bioinformatics and drug design.

Inference and training, two tools used for deep learning, may utilize low precision arithmetic. Maximizing throughput of deep learning algorithms and computations may assist in meeting the needs of deep learning processors, for example, those performing deep learning in a data center.

Matrix-matrix multiplication (a.k.a., GEMM or General Matrix Multiplication) is a compute-heavy operation on certain processors. Special hardware for matrix multiplication (e.g., GEMM) is a good option for improving the peak compute (and energy efficiency) of certain applications, such as deep learning. Some of these applications, including deep learning, can operate on input data elements with relatively few bits without losing accuracy, as long as the output elements have enough bits (e.g., more than the inputs).

In certain processors, handling matrices is a difficult and/or instruction intensive task. For example, rows of a matrix could be put into a plurality of packed data (e.g., SIMD or vector) registers and then operated on individually. For example, an add two 8x2 (e.g., row by column) matrices may require a load or gather into four packed data registers depending upon data sizes. Then a first add of packed data registers corresponding to a first row from each matrix is performed and a second add of packed data registers corresponding to a second row from each matrix is performed. Then the resulting packed data registers are scattered back to memory. While for small matrices this scenario may be acceptable, it is often not acceptable with larger matrices.

## DISCUSSION

Described herein are mechanisms to support matrix operations in computer hardware such as central processing units (CPUs), graphic processing units (GPUs), and accelerators. The matrix operations utilize 2-dimensional (2-D) data structures representing one or more packed regions of memory such as registers. Throughout this description, these 2-D data structures are referred to as tiles. Note that a matrix may be smaller than a tile (use less than all of a tile) or utilize a plurality of tiles (the matrix is larger than the size of any one tile). Throughout the description, matrix (tile) language is used to indicate operations performed using tiles that impact a matrix; whether or not that matrix is larger than any one tile is not typically relevant.

Each tile may be acted upon by different operations such as those that are detailed herein and include, but are not limited to: matrix (tile) multiplication, tile add, tile subtract, tile diagonal, tile zero, tile transform, tile dot product, tile broadcast, tile row broadcast, tile column broadcast, tile multiplication, tile multiplication and accumulation, tile move, etc. Additionally, support for operators such as the use of a scale and/or bias may be used with these operations or in support of non-numeric applications in the future, for instance, OpenCL "local memory," data compression/decompression, etc. Also described herein are instructions for performing matrix operation (e.g., TILEPARTIALDOTPRODUCT) instructions.

Portions of storage (such as memory (non-volatile and volatile), registers, cache, etc.) are arranged into tiles of different horizontal and vertical dimensions. For example, a tile may have horizontal dimension of 4 (e.g., four rows of a matrix) and a vertical dimension of 8 (e.g., 8 columns of the matrix). Typically, the horizontal dimension is related to element sizes (e.g., 2-, 4-, 8-, 16-, 32-, 64-, 128-bit, etc.). Multiple datatypes (single precision floating point, double precision floating point, integer, etc.) may be supported.

## EXEMPLARY USAGE OF CONFIGURED TILES

In some embodiments, tile parameters can be configured. For example, a given tile may be configured to provide tile options. Exemplary tile options include but are not limited to: a number of rows of the tile, a number of columns of the tile, whether the tile is VALID, and whether the tile consists of a PAIR of equal-sized tiles.

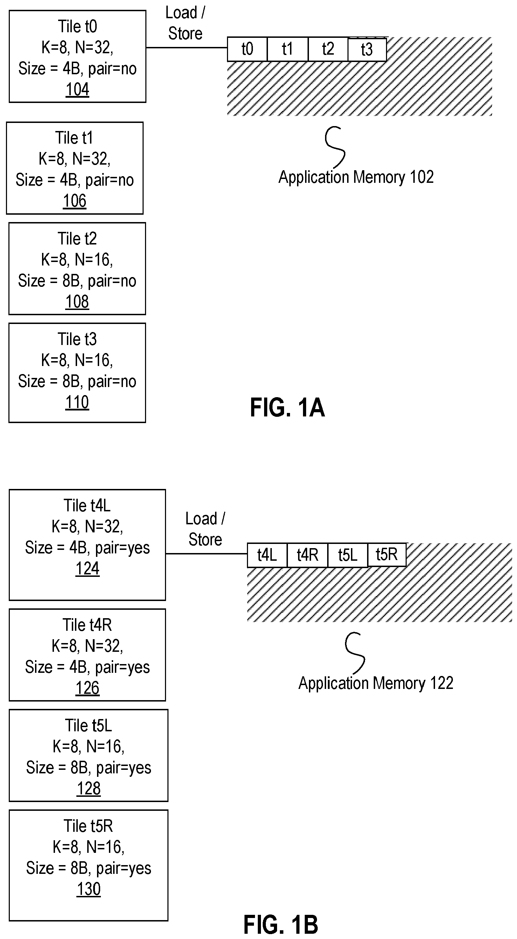

Figure 1A illustrates an embodiment of configured tiles. As shown, 4 kB of application memory 102 have stored thereon 4 1kB titles, tile t0 104, tile t1 106, tile t2 108, and tile t3 110. In this example, the 4 tiles do not consist of pairs, and each have elements arranged in rows and columns. Tile t0 104 and tile t1 106 have K rows and N columns of 4-byte elements (e.g., single precision data), where K equals 8 and N=32. Tile t2 108 and tile t3 110 have K rows and N/2 columns of 8-byte elements (e.g., double precision data). As the double precision operands are twice the width of single precision, this configuration is consistent with a palette, used to provide tile options, supplying at least 4 names with total storage of at least 4 kB. In operation, the tiles can be loaded from and stored to memory using load and store operations. Depending upon the instruction encoding scheme used, the amount of available application memory, as well as the size, number, and configuration of available tiles varies.

Figure 1B illustrates an embodiment of configured tiles. As shown, 4 kB of application memory 122 have stored thereon 2 pairs of IkB-titles, the first pair being tile t4L 124 and tile t4R 126, and the second pair being tile t5L 128 and tile t5R 130. As shown the pairs of tiles are divided into a left tile and a right tile. In other embodiments, the pair of tiles are divided into an even tile and an odd tile. In this example, the 4 tiles each have elements arranged in rows and columns. Tile t4L 124 and tile t4R 126 have K rows and N columns of 4-byte elements (e.g., single precision floating point data), where K equals 8 and N equals 32. Tile t5L 128 and tile t5R 130 have K rows and N/2 columns of 8-byte elements (e.g., double precision floating point data). As the double precision operands are twice the width of single precision, this configuration is consistent with a palette, used to provide tile options, supplying at least 2 names with total storage of at least 4 kB. The four tiles of Figure 1A use 4 names, each naming a 1 kB tile, whereas the 2 pairs of tiles in Figure 1B can use 2 names to specify the paired tiles. In some embodiments, tile instructions accept a name of a paired tile as an operand. In operation, the tiles can be loaded from and stored to memory using load and store operations. Depending upon the instruction encoding scheme used, the amount of available application memory, as well as the size, number, and configuration of available tiles varies.

In some embodiments, tile parameters are definable. For example, a "palette" is used to provide tile options. Exemplary options include, but are not limited to: the number of tile names, the number of bytes in a row of storage, the number of rows and columns in a tile, etc. For example, a maximum "height" (number of rows) of a tile may be defined as:

Tile Max Rows = Architected Storage / (The Number of Palette Names * The Number of Bytes per row).

As such, an application can be written such that a fixed usage of names will be able to take advantage of different storage sizes across implementations.

Configuration of tiles is done using a tile configuration ("TILECONFIG") instruction, where a particular tile usage is defined in a selected palette. This declaration includes the number of tile names to be used, the requested number of rows and columns per name (tile), and, in some embodiments, the requested datatype of each tile. In some embodiments, consistency checks are performed during the execution of a TILECONFIG instruction to determine that it matches the restrictions of the palette entry.

## EXEMPLARY TILE STORAGE TYPES

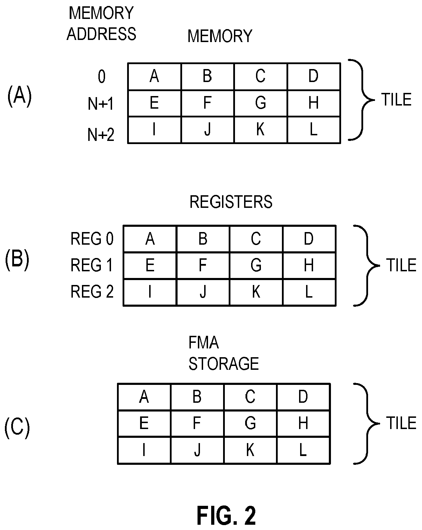

Figure 2 illustrates several examples of matrix storage. In (A), a tile is stored in memory. As shown, each "row" consists of four packed data elements. To get to the next "row," a stride value is used. Note that rows may be consecutively stored in memory. Strided memory accesses allows for access of one row to then next when the tile storage does not map the underlying memory array row width.

Tile loads from memory and stores to memory are typically strided accesses from the application memory to packed rows of data. Exemplary TILELOAD and TILESTORE instructions, or other instruction references to application memory as a TILE operand in load-op instructions, are, in some embodiments, restartable to handle (up to) 2*rows of page faults, unmasked floating point exceptions, and/or interrupts per instruction.

In (B), a matrix is stored in a tile comprised of a plurality of registers such as packed data registers (single instruction, multiple data (SIMD) or vector registers). In this example, the tile is overlaid on three physical registers. Typically, consecutive registers are used, however, this need not be the case.

In (C), a matrix is stored in a tile in non-register storage accessible to a fused multiply accumulate (FMA) circuit used in tile operations. This storage may be inside of a FMA, or adjacent to it. Additionally, in some embodiments, discussed below, the storage may be for a data element and not an entire row or tile.

The supported parameters for the TMMA architecture are reported via CPUID. In some embodiments, the list of information includes a maximum height and a maximum SIMD dimension. Configuring the TMMA architecture requires specifying the dimensions for each tile, the element size for each tile and the palette identifier. This configuration is done by executing the TILECONFIG instruction.

Successful execution of a TILECONFIG instruction enables subsequent TILE operators. A TILERELEASEALL instruction clears the tile configuration and disables the TILE operations (until the next TILECONFIG instructions executes). In some embodiments, XSAVE, XSTORE, etc. are used in context switching using tiles. In some embodiments, 2 XCR0 bits are used in XSAVE, one for TILECONFIG metadata and one bit corresponding to actual tile payload data.

TILECONFIG not only configures the tile usage, but also sets a state variable indicating that the program is in a region of code with tiles configured. An implementation may enumerate restrictions on other instructions that can be used with a tile region such as no usage of an existing register set, etc.

Exiting a tile region is typically done with the TILERELEASEALL instruction. It takes no parameters and swiftly invalidates all tiles (indicating that the data no longer needs any saving or restoring) and clears the internal state corresponding to being in a tile region.

In some embodiments, tile operations will zero any rows and any columns beyond the dimensions specified by the tile configuration. For example, tile operations will zero the data beyond the configured number of columns (factoring in the size of the elements) as each row is written. For example, with 64-byte rows and a tile configured with 10 rows and 12 columns, an operation writing FP32 elements would write each of the first 10 rows with 12*4 bytes with output/result data and zero the remaining 4*4 bytes in each row. Tile operations also fully zero any rows after the first 10 configured rows. When using 1K tile with 64-byte rows, there would be 16 rows, so in this example, the last 6 rows would also be zeroed.

In some embodiments, a context restore instruction (e.g., XRSTOR), when loading data, enforces that the data beyond the configured rows for a tile will be maintained as zero. If there is no valid configuration, all rows are zeroed. XRSTOR of tile data can load garbage in the columns beyond those configured. It should not be possible for XRSTOR to clear beyond the number of columns configured because there is not an element width associated with the tile configuration.

Context save (e.g., XSAVE) exposes the entire TILE storage area when writing it to memory. If XRSTOR loaded garbage data in to the rightmost part of a tile, that data will be saved by XSAVE. XSAVE will write zeros for rows beyond the number specified for each tile.

In some embodiments, tile instructions are restartable. The operations that access memory allow restart after page faults. The computational instructions that deal with floating point operations also allow for unmasked floating-point exceptions, with the masking of the exceptions controlled by a control and/or status register.

To support restarting instructions after these events, the instructions store information in the start registers detailed below.

MATRIX (TILE) OPERATION SYSTEMS

EXEMPLARY HARDWARE SUPPORT

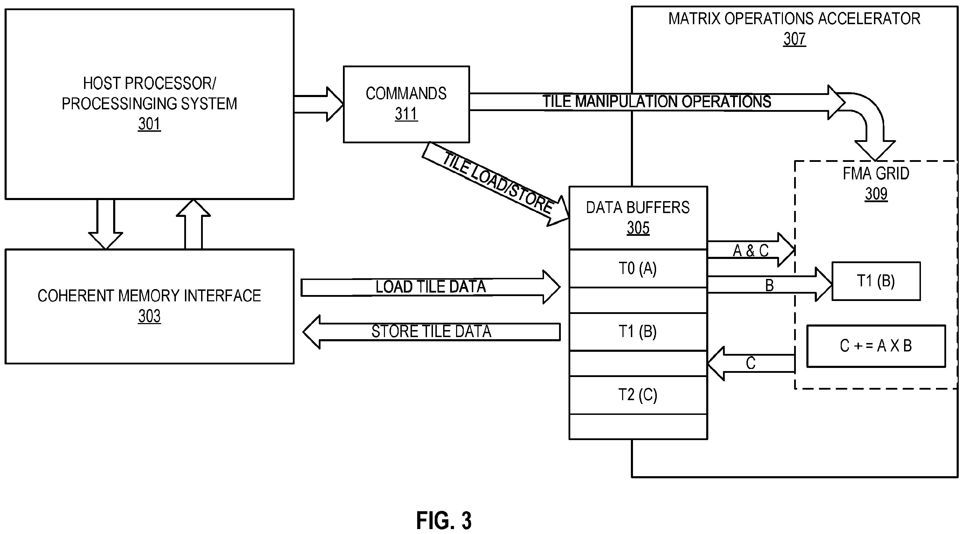

Figure 3 illustrates an embodiment of a system utilizing a matrix (tile) operations accelerator. In this illustration, a host processor/processing system 301 communicates commands 311 (e.g., matrix manipulation operations such as arithmetic or matrix manipulation operations, or load and store operations) to a matrix operations accelerator 307. However, this is shown this way for discussion purposes only. As detailed later, this accelerator 307 may be a part of a processing core. Typically, commands 311 that are tile manipulation operator instructions will refer to tiles as register-register ("reg-reg") or register-memory ("reg-mem") format. Other commands such as TILESTORE, TILELOAD, TILECONFIG, etc., do not perform data operations on a tile. Commands may be decoded instructions (e.g., micro-ops) or macro-instructions for the accelerator 307 to handle.

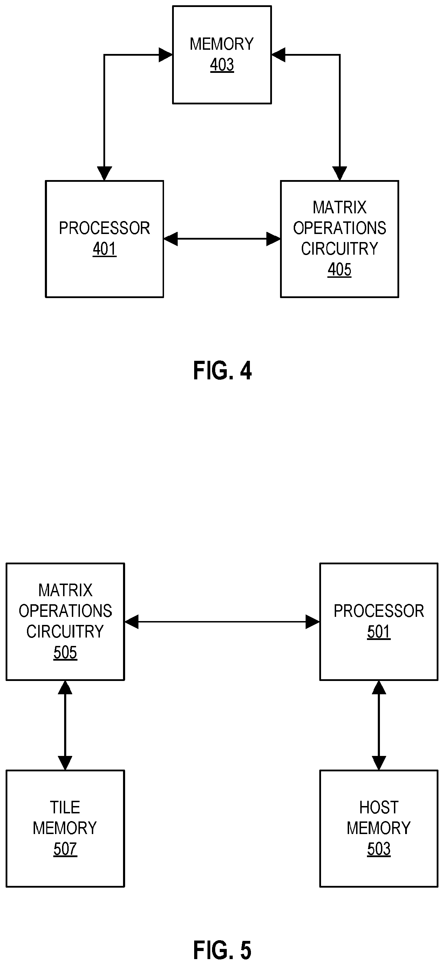

In this example, a coherent memory interface 303 is coupled to the host processor/processing system 301 and matrix operations accelerator 307 such that they can share memory. Figures 4 and 5 show different embodiments of how memory is shared using a matrix operations accelerator. As shown in Figure 4, the host processor 401 and matrix operations accelerator circuitry 405 share the same memory 403. Figure 5 illustrates an embodiment where the host processor 501 and matrix operations accelerator 505 do not share memory but can access each other's memory. For example, processor 501 can access tile memory 507 and utilize its host memory 503 as normal. Similarly, the matrix operations accelerator 505 can access host memory 503, but more typically uses its own memory 507. Note these memories may be of different types.

In some embodiments, tiles are supported using an overlay over physical registers. For example, a tile may utilize 16 1,024-bit registers, 32 512-bit registers, etc. depending on the implementation. In some embodiments, the matrix operations utilize 2-dimensional (2-D) data structures representing one or more packed regions of memory such as registers. Throughout this description, these 2-D data structures are referred to as tiles or tile registers.

In some embodiments, the matrix operations accelerator 307 includes a plurality of FMAs 309 coupled to data buffers 305 (in some implementations, one or more of these buffers 305 are stored in the FMAs of the grid as shown). The data buffers 305 buffer tiles loaded from memory and/or tiles to be stored to memory (e.g., using a tileload or tilestore instruction). Data buffers may be, for example, a plurality of registers. Typically, these FMAs are arranged as a grid of chained FMAs 309 which are able to read and write tiles. In this example, the matrix operations accelerator 307 is to perform a matrix multiply operation using tiles T0, T1, and T2. At least one of tiles is housed in the FMA grid 309. In some embodiments, all tiles in an operation are stored in the FMA grid 309. In other embodiments, only a subset is stored in the FMA grid 309. As shown, T1 is housed and T0 and T2 are not. Note that A, B, and C refer to the matrices of these tiles which may or may not take up the entire space of the tile.

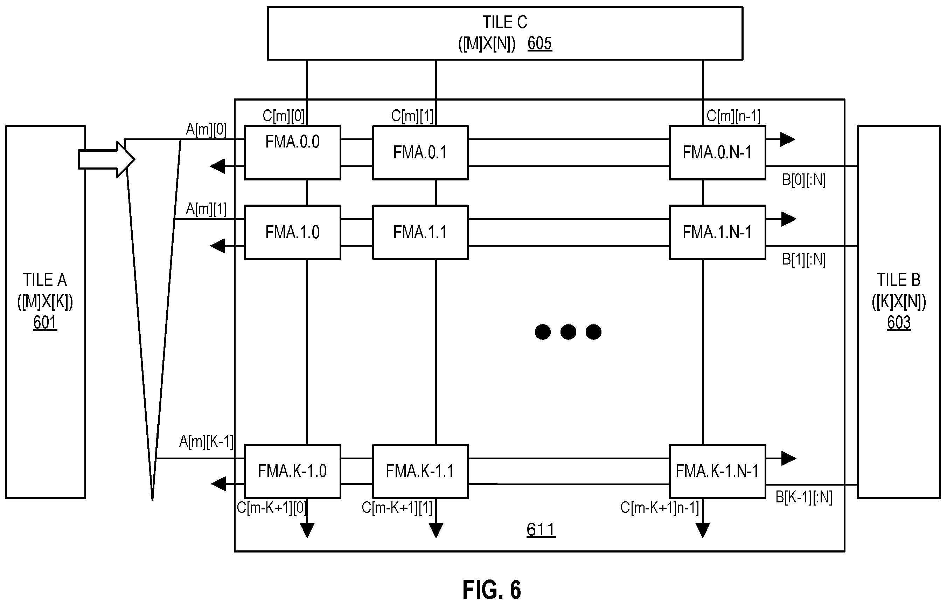

Figure 6 illustrates an embodiment of matrix multiply accumulate operation using tiles ("TMMA").

The number of rows in the matrix (TILE A 601) matches the number of serial (chained) FMAs comprising the computation's latency in certain embodiments. An implementation is free to recirculate on a grid of smaller height, but the computation remains the same.

The source/destination vector comes from a tile of N rows (TILE C 605) and the grid of FMAs 611 performs N vector-matrix operations resulting in a complete instruction performing a matrix multiplication of tiles. Tile B 603 is the other vector source and supplies "broadcast" terms to the FMAs in each stage.

In operation, in some embodiments, the elements of matrix B (stored in a tile B 603) are spread across the rectangular grid of FMAs. Matrix B (stored in tile A 601) has its elements of a row transformed to match up with the columnar dimension of the rectangular grid of FMAs. At each FMA in the grid, an element of A and B are multiplied and added to the incoming summand (from above in the Figure) and the outgoing sum is passed to the next row of FMAs (or the final output).

The latency of a single step is proportional to K (row height of matrix B) and dependent TMMAs typically have enough source-destination rows (either in a single tile or across tile) to hide that latency. An implementation may also split the SIMD (packed data element) dimension M (row height of matrix A) across time steps, but this simply changes the constant that K is multiplied by. When a program specifies a smaller K than the maximum enumerated by the TMMA, an implementation is free to implement this with "masking" or "early outs."

The latency of an entire TMMA is proportional to N*K. The repeat rate is proportional to N. The number of MACs per TMMA instruction is N*K*M.

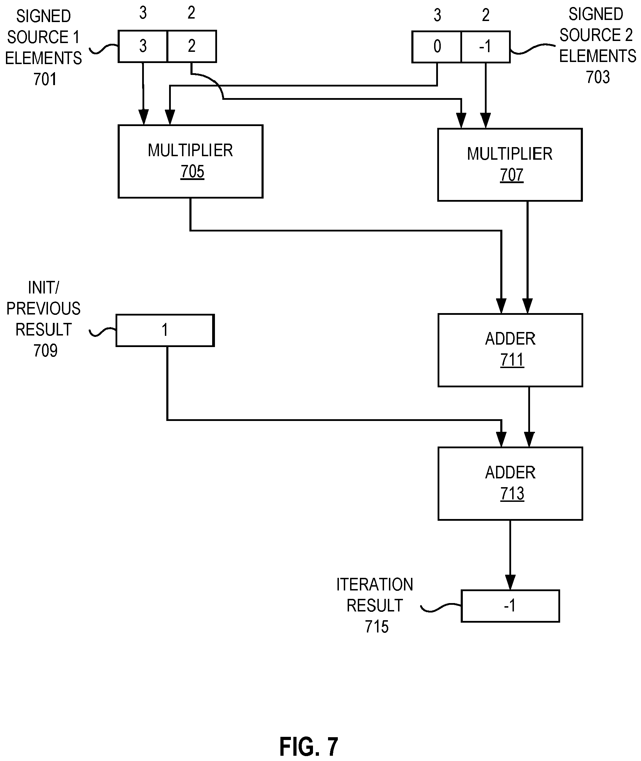

Figure 7 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1 701) and a second signed source (source 2 703) each have four packed data elements. Each of these packed data elements stores signed data such as floating-point data. A third signed source (source 3 709) has two packed data elements, each of which stores signed data. The sizes of the first and second signed sources 701 and 703 are half that of the third signed source (initial value or previous result) 709. For example, the first and second signed sources 701 and 703 could have 32-bit packed data elements (e.g., single precision floating point) while the third signed source 709 could have 64-bit packed data elements (e.g., double precision floating point).

In this illustration, only the two most significant packed data element positions of the first and second signed sources 701 and 703 and the most significant packed data element position of the third signed source 709 are shown. Of course, the other packed data element positions would also be processed.

As illustrated, packed data elements are processed in pairs. For example, the data of the most significant packed data element positions of the first and second signed sources 701 and 703 are multiplied using a multiplier circuit 705, and the data from second most significant packed data element positions of the first and second signed sources 701 and 703 are multiplied using a multiplier circuit 707. In some embodiments, these multiplier circuits 705 and 707 are reused for other packed data elements positions. In other embodiments, additional multiplier circuits are used so that the packed data elements are processed in parallel. In some contexts, parallel execution is done using lanes that are the size of the signed third source 709. The results of each of the multiplications are added using addition circuitry 711.

The result of the addition of the results of the multiplications is added to the data from most significant packed data element position of the signed source 3 709 (using a different adder 713 or the same adder 711).

Finally, the result of the second addition is either stored into the signed destination 715 in a packed data element position that corresponds to the packed data element position used from the signed third source 709 or passed on to the next iteration if there is one. In some embodiments, a writemask is applied to this storage such that if a corresponding writemask (bit) is set, the storage happens, and, if not set, the storage does not happen.

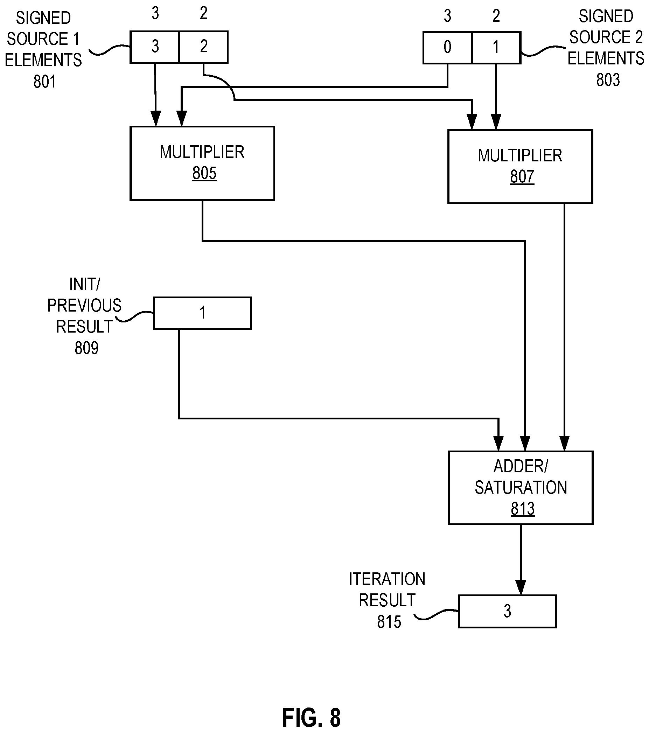

Figure 8 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on signed sources wherein the accumulator is 2x the input data size.

A first signed source (source 1 801) and a second signed source (source 2 803) each have four packed data elements. Each of these packed data elements stores signed data such as integer data. A third signed source (source 3 809) has two packed data elements, each of which stores signed data. The sizes of the first and second signed sources 801 and 803 are half that of the third signed source 809. For example, the first and second signed sources 801 and 803 could have 32-bit packed data elements (e.g., single precision floating point) the third signed source 809 could have 64-bit packed data elements (e.g., double precision floating point).

In this illustration, only the two most significant packed data element positions of the first and second signed sources 801 and 803 and the most significant packed data element position of the third signed source 809 are shown. Of course, the other packed data element positions would also be processed.

As illustrated, packed data elements are processed in pairs. For example, the data of the most significant packed data element positions of the first and second signed sources 801 and 803 are multiplied using a multiplier circuit 805, and the data from second most significant packed data element positions of the first and second signed sources 801 and 803 are multiplied using a multiplier circuit 807. In some embodiments, these multiplier circuits 805 and 807 are reused for other packed data elements positions. In other embodiments, additional multiplier circuits are used so that the packed data elements are processed in parallel. In some contexts, parallel execution is done using lanes that are the size of the signed third source (initial value or previous iteration result) 809. The results of each of the multiplications are added to the signed third source 809 using addition/saturation circuitry 813.

Addition/saturation (accumulator) circuitry 813 preserves a sign of an operand when the addition results in a value that is too big. In particular, saturation evaluation occurs on the infinite precision result between the multi-way-add and the write to the destination or next iteration. When the accumulator 813 is floating point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

Unsigned saturation means the output values are limited to a maximum unsigned number for that element width (all Is). Signed saturation means a value is limited to the be in the range between a minimum negative number and a max positive number for that element width (for bytes for example, the range is from -128 (= - 2^7) to 127(=2^7-1)).

The result of the addition and saturation check is stored into the signed result 815 in a packed data element position that corresponds to the packed data element position used from the signed third source 809 or passed on to the next iteration if there is one. In some embodiments, a writemask is applied to this storage such that if a corresponding writemask (bit) is set, the storage happens, and, if not set, the storage does not happen.

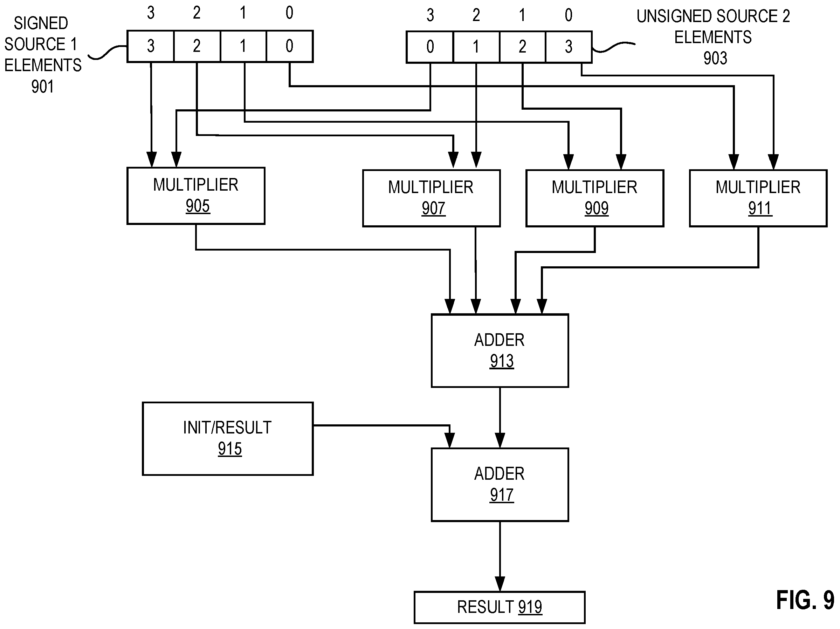

Figure 9 illustrates an embodiment of a subset of the execution of an iteration of a chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source (source 1 901) and a second unsigned source (source 2 903) each have four packed data elements. Each of these packed data elements has data such as floating point or integer data. A third signed source (initial value or result 915) has a packed data element of which stores signed data. The sizes of the first and second sources 901 and 903 are a quarter of the third signed source 915. For example, the first and second sources 901 and 903 could have 16-bit packed data elements (e.g., word) and the third signed source 915 could have 64-bit packed data elements (e.g., double precision floating point or 64-bit integer).

In this illustration, the four most significant packed data element positions of the first and second sources 901 and 903 and the most significant packed data element position of the third signed source 915 are shown. Of course, other packed data element positions would also be processed if there are any.

As illustrated, packed data elements are processed in quadruplets. For example, the data of the most significant packed data element positions of the first and second sources 901 and 903 are multiplied using a multiplier circuit 905, data from second most significant packed data element positions of the first and second sources 901 and 903 are multiplied using a multiplier circuit 907, data from third most significant packed data element positions of the first and second sources 901 and 903 are multiplied using a multiplier circuit 909, and data from the least significant packed data element positions of the first and second sources 901 and 903 are multiplied using a multiplier circuit 911. In some embodiments, the signed packed data elements of the first source 901 are sign extended and the unsigned packed data elements of the second source 903 are zero extended prior to the multiplications.

In some embodiments, these multiplier circuits 905-911 are reused for other packed data elements positions. In other embodiments, additional multiplier circuits are used so that the packed data elements are processed in parallel. In some contexts, parallel execution is done using lanes that are the size of the signed third source 915. The results of each of the multiplications are added using addition circuitry 913.

The result of the addition of the results of the multiplications is added to the data from most significant packed data element position of the signed source 3 915 (using a different adder 917 or the same adder 913).

Finally, the result 919 of the second addition is either stored into the signed destination in a packed data element position that corresponds to the packed data element position used from the signed third source 915 or passed to the next iteration. In some embodiments, a writemask is applied to this storage such that if a corresponding writemask (bit) is set, the storage happens, and, if not set, the storage does not happen.

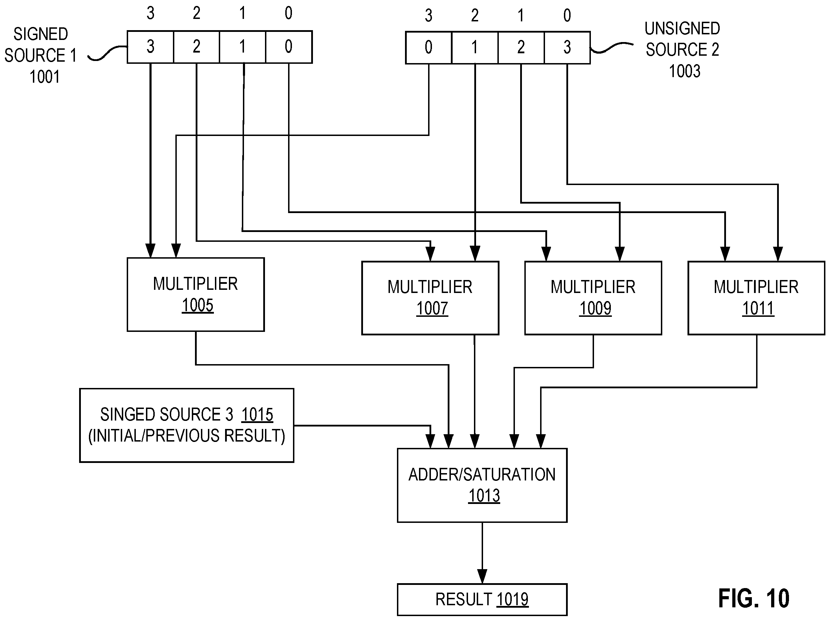

Figure 10 illustrates an embodiment of a subset of the execution of an iteration of chained fused multiply accumulate instruction. In particular, this illustrates execution circuitry of an iteration of one packed data element position of the destination. In this embodiment, the chained fused multiply accumulate is operating on a signed source and an unsigned source wherein the accumulator is 4x the input data size.

A first signed source 1001 and a second unsigned source 1003 each have four packed data elements. Each of these packed data elements stores data such as floating point or integer data. A third signed source 1015 (initial or previous result) has a packed data element of which stores signed data. The sizes of the first and second sources are a quarter of the third signed source 1015 (initial or previous result). For example, the first and second sources could have 16-bit packed data elements (e.g., word) and the third signed source 1015 (initial or previous result) could have 64-bit packed data elements (e.g., double precision floating point or 64-bit integer).

In this illustration, the four most significant packed data element positions of the first signed source 1001 and the second unsigned source 1003 and the most significant packed data element position of the third signed source 1015 are shown. Of course, other packed data element positions would also be processed if there are any.

As illustrated, packed data elements are processed in quadruplets. For example, the data of the most significant packed data element positions of the first signed source 1001 and the second unsigned source 1003 are multiplied using a multiplier circuit 1005, data from second most significant packed data element positions of the first signed source 1001 and the second unsigned source 1003 are multiplied using a multiplier circuit 1007, data from third most significant packed data element positions of the first signed source 1001 and the second unsigned source 1003 are multiplied using a multiplier circuit 1009, and data from the least significant packed data element positions of the first signed source 1001 and the second unsigned source 1003 are multiplied using a multiplier circuit 1011. In some embodiments, the signed packed data elements of the first signed source 1001 are sign extended and the unsigned packed data elements of the second unsigned source 1003 are zero extended prior to the multiplications.

In some embodiments, these multiplier circuits 1005-1011 are reused for other packed data elements positions. In other embodiments, additional multiplier circuits are used so that the packed data elements are processed in parallel. In some contexts, parallel execution is done using lanes that are the size of third signed source 1015 (initial or previous result). The result of the addition of the results of the multiplications is added to the data from most significant packed data element position of third signed source 1015 (initial or previous result) using adder/saturation 1013 circuitry.

Addition/saturation (accumulator) circuitry 1013 preserves a sign of an operand when the addition results in a value that is too big or too small for signed saturation. In particular, saturation evaluation occurs on the infinite precision result between the multi-way-add and the write to the destination. When the accumulator 1013 is floating point and the input terms are integer, the sum of products and the floating-point accumulator input value are turned into infinite precision values (fixed point numbers of hundreds of bits), the addition of the multiplication results and the third input is performed, and a single rounding to the actual accumulator type is performed.

The result 1019 of the addition and saturation check is stored into the signed destination in a packed data element position that corresponds to the packed data element position used from third signed source 1015 (initial or previous result) or passed to the next iteration. In some embodiments, a writemask is applied to this storage such that if a corresponding writemask (bit) is set, the storage happens, and, if not set, the storage does not happen.

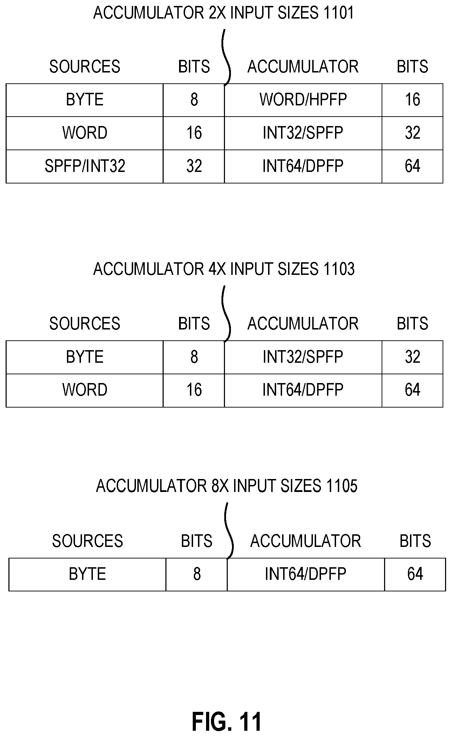

Figure 11 illustrates power-of-two sized SIMD implementations wherein the accumulators use input sizes that are larger than the inputs to the multipliers according to an embodiment. Note the source (to the multipliers) and accumulator values may be signed or unsigned values. For an accumulator having 2X input sizes (in other words, the accumulator input value is twice the size of the packed data element sizes of the sources), table 1101 illustrates different configurations. For byte sized sources, the accumulator uses word or half-precision floating-point (HPFP) values that are 16-bit in size. For word sized sources, the accumulator uses 32-bit integer or single-precision floating-point (SPFP) values that are 32-bit in size. For SPFP or 32-bit integer sized sources, the accumulator uses 64-intenger or double-precision floating-point (DPFP) values that are 64-bit in size.

For an accumulator having 4X input sizes (in other words, the accumulator input value is four times the size of the packed data element sizes of the sources), table 1103 illustrates different configurations. For byte sized sources, the accumulator uses 32-bit integer or single-precision floating-point (SPFP) values that are 32-bit in size. For word sized sources, the accumulator uses 64-bit integer or double-precision floating-point (DPFP) values that are 64-bit in size in some embodiments.

For an accumulator having 8X input sizes (in other words, the accumulator input value is eight times the size of the packed data element sizes of the sources), table 1105 illustrates a configuration. For byte sized sources, the accumulator uses 64-bit integer.

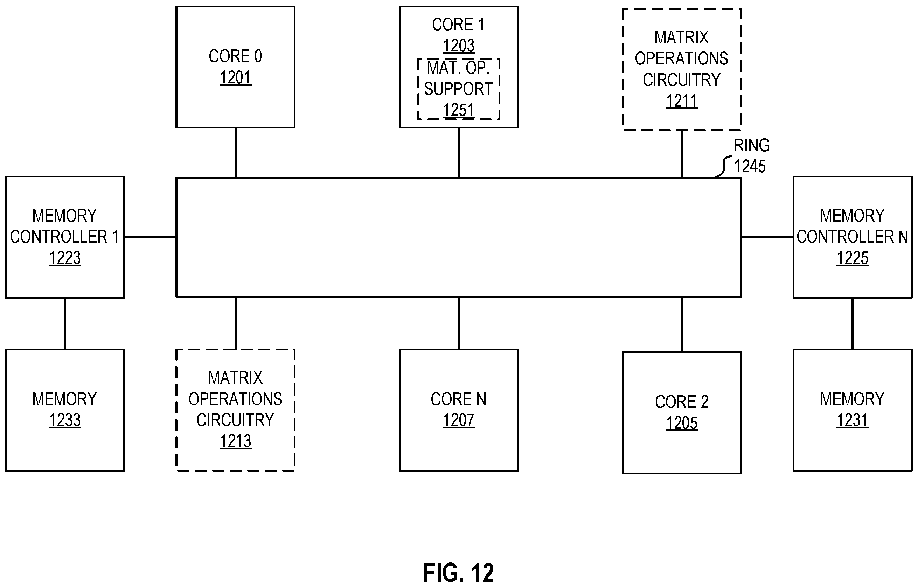

As hinted at earlier, matrix operations circuitry may be included in a core, or as an external accelerator. Figure 12 illustrates an embodiment of a system utilizing matrix operations circuitry. In this illustration, multiple entities are coupled with a ring interconnect 1245.

A plurality of cores, core 0 1201, core 1 1203, core 2 1205, and core N 1207 provide non-tile-based instruction support. In some embodiments, matrix operations circuitry 1251 is provided in a core 1203, and in other embodiments matrix operations circuitry 1211 and 1213 are accessible on the ring interconnect 1245.

Additionally, one or more memory controllers 1223-1225 are provided to communicate with memory 1233 and 1231 on behalf of the cores and/or matrix operations circuitry.

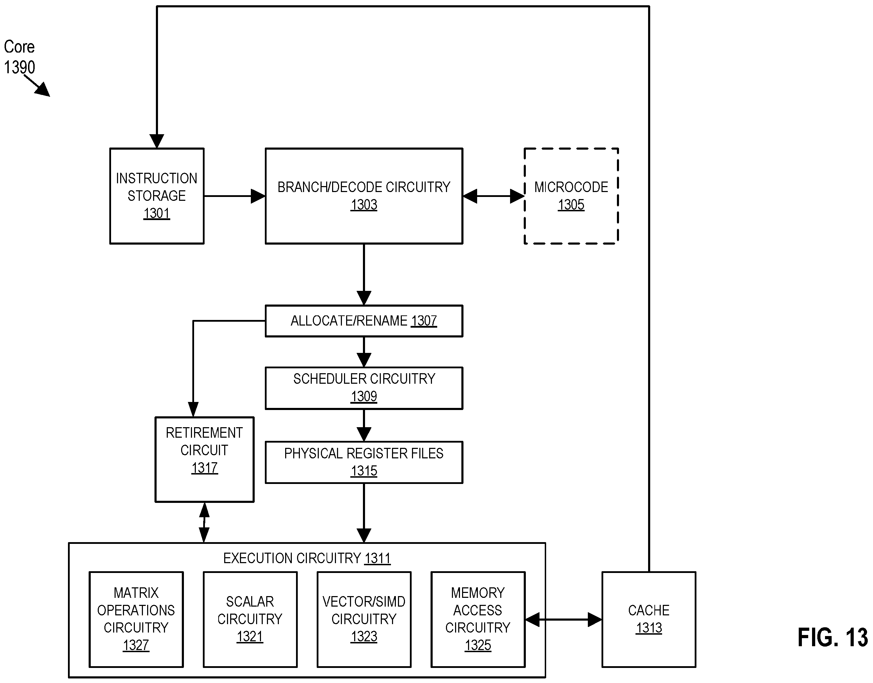

Figure 13 illustrates an embodiment of a processor core pipeline supporting matrix operations using tiles. Branch prediction and decode circuitry 1303 performs branch predicting of instructions, decoding of instructions, and/or both from instructions stored in instruction storage 1301. For example, instructions detailed herein may be stored in instruction storage. In some implementations, separate circuitry is used for branch prediction and in some embodiments, at least some instructions are decoded into one or more micro-operations, microcode entry points, microinstructions, other instructions, or other control signals using microcode 1305. The branch prediction and decode circuitry 1303 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1303 is coupled to allocate/rename 1307 circuitry which is coupled, in some embodiments, to scheduler circuitry 1309. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1309 represents any number of different schedulers, including reservations stations, central instruction window, etc. The scheduler circuitry 1309 is coupled to, or includes, physical register file(s) 1315. Each of the physical register file(s) 1315 represents one or more physical register files, different ones of which store one or more different data types, such as scalar integer, scalar floating point, packed integer, packed floating point, vector integer, vector floating point, status (e.g., an instruction pointer that is the address of the next instruction to be executed), tiles, etc. In one embodiment, the physical register file(s) 1315 comprises vector registers circuitry, write mask registers circuitry, and scalar registers circuitry. These register circuits may provide architectural vector registers, vector mask registers, and general-purpose registers. The physical register file(s) 1315 is overlapped by a retirement circuit 1317 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1317 and the physical register file(s) 1315 are coupled to the execution circuitry 1311.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (LI) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1311 is a set of one or more execution circuits, including scalar circuitry 1321, vector/SIMD circuitry 1323, and matrix operations circuitry 1327, as well as memory access circuitry 1325 to access cache 1313. The execution circuits perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scalar circuitry 1321 performs scalar operations, the vector/SIMD circuitry 1323 performs vector/SIMD operations, and matrix operations circuitry 1327 performs matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1303 performs a decode stage; 3) the allocate/rename 1307 circuitry performs an allocation stage and renaming stage; 4) the scheduler circuitry 1309 performs a schedule stage; 5) physical register file(s) (coupled to, or included in, the scheduler circuitry 1309 and allocate/rename 1307 circuitry and a memory unit perform a register read/memory read stage; the execution circuitry 1311 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1390 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

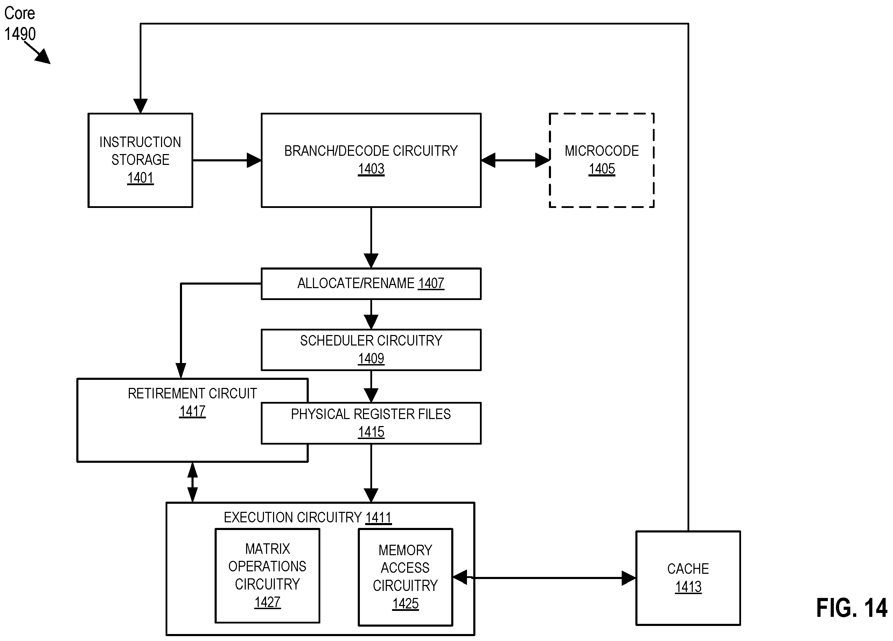

Figure 14 illustrates an embodiment of a processor core pipeline supporting matrix operations using tiles. Branch prediction and decode circuitry 1403 performs branch predicting of instructions, decoding of instructions, and/or both from instructions stored in instruction storage 1401. For example, instructions detailed herein may be stored in instruction storage. In some implementations, separate circuitry is used for branch prediction and in some embodiments, at least some instructions are decoded into one or more micro-operations, microcode entry points, microinstructions, other instructions, or other control signals using microcode 1405. The branch prediction and decode circuitry 1403 may be implemented using various different mechanisms. Examples of suitable mechanisms include, but are not limited to, look-up tables, hardware implementations, programmable logic arrays (PLAs), microcode read only memories (ROMs), etc.

The branch prediction and decode circuitry 1403 is coupled to allocate/rename 1407 circuitry which is coupled, in some embodiments, to scheduler circuitry 1409. In some embodiments, these circuits provide register renaming, register allocation, and/or scheduling functionality by performing one or more of: 1) renaming logical operand values to physical operand values (e.g., a register alias table in some embodiments), 2) allocating status bits and flags to the decoded instruction, and 3) scheduling the decoded instruction for execution on execution circuitry out of an instruction pool (e.g., using a reservation station in some embodiments).

The scheduler circuitry 1409 represents any number of different schedulers, including reservations stations, central instruction window, etc. The scheduler unit(s) scheduler circuitry 1409 is coupled to, or includes, physical register file(s) 1415. Each of the physical register file(s) 1415 represents one or more physical register files, different ones of which store one or more different data types, such as scalar integer, scalar floating point, packed integer, packed floating point, vector integer, vector floating point, status (e.g., an instruction pointer that is the address of the next instruction to be executed), tiles, etc. In one embodiment, the physical register file(s) 1415 comprises vector registers circuitry, write mask registers circuitry, and scalar registers circuitry. These register circuits may provide architectural vector registers, vector mask registers, and general-purpose registers. The physical register file(s) 1415 is overlapped by a retirement circuit 1417 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement circuit 1417 and the physical register file(s) 1415 are coupled to the execution circuitry 1411.

While register renaming is described in the context of out-of-order execution, it should be understood that register renaming may be used in an in-order architecture. While the illustrated embodiment of the processor may also include separate instruction and data cache units and a shared L2 cache unit, alternative embodiments may have a single internal cache for both instructions and data, such as, for example, a Level 1 (LI) internal cache, or multiple levels of internal cache. In some embodiments, the system may include a combination of an internal cache and an external cache that is external to the core and/or the processor. Alternatively, all of the cache may be external to the core and/or the processor.

The execution circuitry 1411 a set of one or more execution circuits 1427 and a set of one or more memory access circuits 1425 to access cache 1413. The execution circuits 1427 perform matrix (tile) operations detailed herein.

By way of example, the exemplary register renaming, out-of-order issue/execution core architecture may implement a pipeline as follows: 1) an instruction fetch circuit performs fetch and length decoding stages; 2) the branch and decode circuitry 1403 performs a decode stage; 3) the allocate/rename 1407 circuitry performs an allocation stage and renaming stage; 4) the scheduler circuitry 1409 performs a schedule stage; 5) physical register file(s) (coupled to, or included in, the scheduler circuitry 1409 and allocate/rename 1407 circuitry and a memory unit perform a register read/memory read stage; the execution circuitry 1411 performs an execute stage; 6) a memory unit and the physical register file(s) unit(s) perform a write back/memory write stage; 7) various units may be involved in the exception handling stage; and 8) a retirement unit and the physical register file(s) unit(s) perform a commit stage.

The core may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1490 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

## LAYOUT

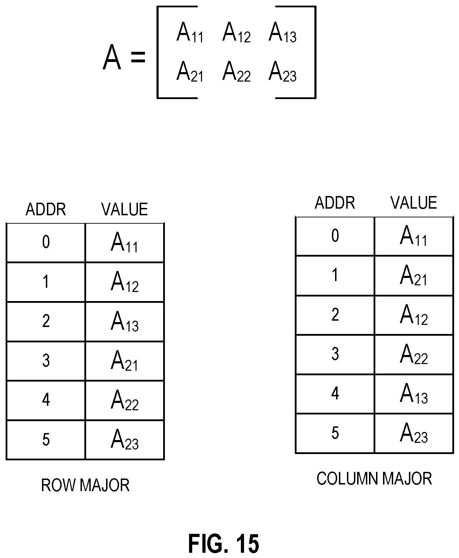

Throughout this description, data is expressed using row major data layout. Column major users should translate the terms according to their orientation. Figure 15 illustrates an example of a matrix expressed in row major format and column major format. As shown, matrix A is a 2x3 matrix. When this matrix is stored in row major format, the data elements of a row are consecutive. When this matrix is stored in column major format, the data elements of a column are consecutive. It is a well-known property of matrices that $A^{T}*B^{T} = (BA)^{T}$, where superscript T means transform. Reading column major data as row major data results in the matrix looking like the transform matrix.

In some embodiments, row-major semantics are utilized in hardware, and column major data is to swap the operand order with the result being transforms of matrix, but for subsequent column-major reads from memory it is the correct, non-transformd matrix.

For example, if there are two column-major matrices to multiply:

```
a b          g i k      ag+bh ai+bj ak+bl
c d * h j l =   cg+dh ci+dj ck+dl
e f                  eg+fh ei+fj ek+fl
(3x2)        (2x3)      (3x3)
```

The input matrices would be stored in linear memory (column-major) as:

a c e b d f
and
g h i j k l.

Reading those matrices as row-major with dimensions 2x3 and 3x2, they would appear as:

a c e            and            g h
b d f                           i j
                                k l

Swapping the order and matrix multiplying:

g h            a c e      ag+bh cg+dh eg+fh
i j      *     b d f =    ai+bj ci+dj ei+fj
k l                      ak+bl ck+dl ek+fl

The transform matrix is out and can then be stored in in row-major order:

ag+bh    cg+dh    eg+fh    ai+bj    ci+dj    ei+fj    ak+bl    ck+dl    ek+fl

and used in subsequent column major computations, it is the correct un-transformd matrix:

ag+bh    ai+bj    ak+bl
cg+dh    ci+dj    ck+dl
eg+fh    ei+fj    ek+fl

Exemplary Usage

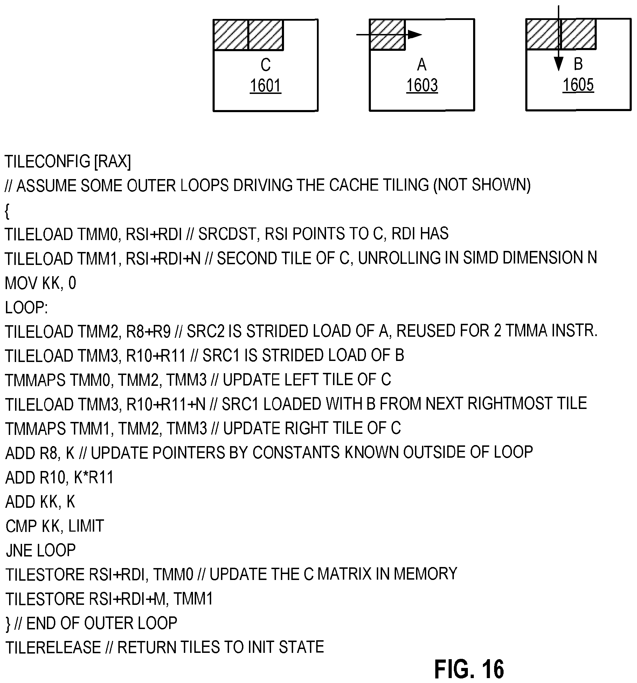

Figure 16 illustrates an example of usage of matrices (tiles). In this example, matrix C 1601 includes two tiles, matrix A 1603 includes one tile, and matrix B 1605 includes two tiles. This figure shows an example of the inner loop of an algorithm to compute a matrix multiplication. In this example, two result tiles, tmm0 and tmm1, from matrix C 1601 are used to accumulate the intermediate results. One tile from the matrix A 1603 (tmm2) is re-used twice as it multiplied by two tiles from matrix B 1605. Pointers to load a new A matrix (tile) and two new B matrices (tiles) from the directions indicated by the arrows. An outer loop, not shown, adjusts the pointers for the C tiles.

The exemplary code as shown includes the usage of a tile configuration instruction and is executed to configure tile usage, load tiles, a loop to process the tiles, store tiles to memory, and release tile usage.

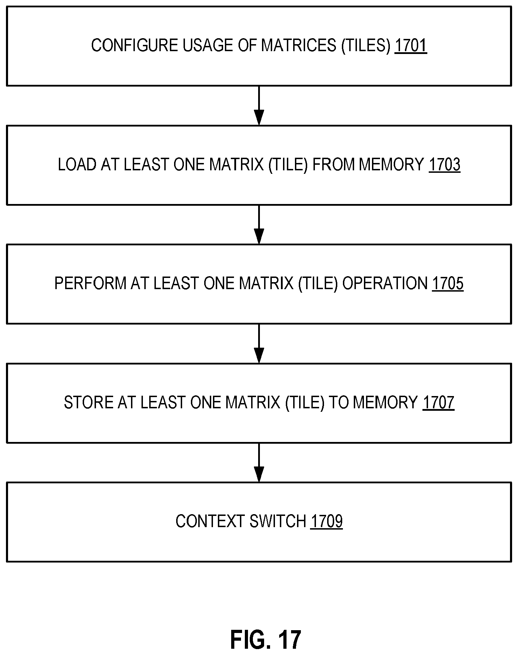

Figure 17 illustrates an embodiment of usage of matrices (tiles). At 1701, tile usage is configured. For example, a TILECONFIG instruction is executed to configure tile usage including setting a number of rows and columns per tile. Typically, at least one matrix (tile) is loaded from memory at 1703. At least one matrix (tile) operation is performed at 1705 using the matrices (tiles). At 1707, at least one matrix (tile) is stored out to memory and a context switch can occur at 1709.

EXEMPLARY CONFIGURATION

TILE CONFIGURATION HARDWARE SUPPORT

As discussed above, tile usage typically needs to be configured prior to use. For example, full usage of all rows and columns may not be needed. Not only does not configuring these rows and columns save power in some embodiments, but the configuration may be used to determine if an operation will generate an error. For example, a matrix multiplication of the form (N x M) * (L x N) will typically not work if M and L are not the same.

Prior to using matrices using tiles, in some embodiments, tile support is to be configured. For example, how many rows and columns per tile, tiles that are to be used, etc. are configured. A TILECONFIG instruction is an improvement to a computer itself as it provides for support to configure the computer to use a matrix accelerator (either as a part of a processor core, or as an external device). In particular, an execution of the TILECONFIG instruction causes a configuration to be retrieved from memory and applied to matrix (tile) settings within a matrix accelerator.

TILE USAGE CONFIGURATION

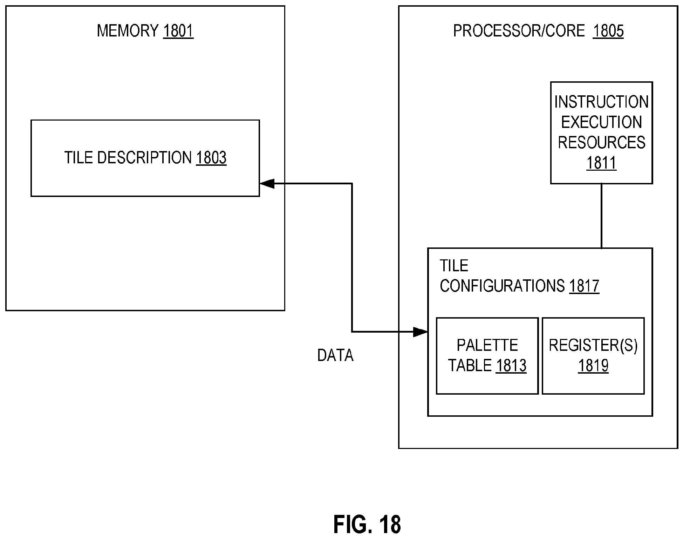

Figure 18 illustrates support for configuration of the usage of tiles according to an embodiment. A memory 1801 contains the tile description 1803 of the matrices (tiles) to be supported.

Instruction execution resources 1811 of a processor/core 1805 stores aspects of a tile description 1803 into tile configurations 1817. The tile configurations 1817 include palette table 1813 to detail what tiles for a palette are configured (the number of rows and columns in each tile) and a marking that matrix support is in use. In particular, instruction execution resources 1811 are configured to use tiles as specified by the tile configurations 1817. The instruction execution resources 1811 may also include a machine specific register or configuration register to indicate tile usage. Additional values such as in-use and start values are also set. The tile configurations 1817 utilize register(s) 1819 to store tile usage and configuration information.

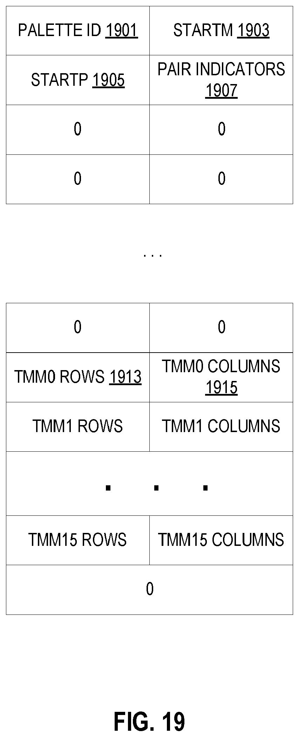

Figure 19 illustrates an embodiment of a description of the matrices (tiles) to be supported. This is the description that is to be stored upon an execution of a STTILECFG instruction. In this example, each field is a byte. In byte [0], a palette ID 1901 is stored. The palette ID is used to index a palette table 1813 which stores, per palette ID, a number of bytes in a tile, and bytes per row of the tiles that are associated with this ID as defined by the configuration.

Byte 1 stores a value to be stored in a "startRow" register 1903 and byte 2 stores a value to be stored in a register, startP 1905. To support restarting instructions after these events, the instructions store information these registers. To support restarting instructions after break events such as those detailed above, the instructions store information in these registers. The startRow value indicates the row that should be used for restart. The startP value indicates the position within the row for store operations when pairs are used and, in some embodiments, indicates the lower half of the row (in the lower tile of a pair) or higher half of the row (in the higher tile of a pair). Generally, the position in the row (the column) is not needed.

With the exception of TILECONFIG and STTILECFG, successfully executing matrix (tile) instructions will set both startRow and startP to zero.

Any time an interrupted matrix (tile) instruction is not restarted, it is the responsibility of software to zero the startRow and startP values. For example, unmasked floating point exception handlers might decide to finish the operation in software and change the program counter value to another instruction, usually the next instruction. In this case the software exception handler must zero the startRow and startP values in the exception presented to it by the operating system before resuming the program. The operating system will subsequently reload those values using a restore instruction.

Byte 3 stores an indication of pairs (1b per tile) of tiles 1907.

Bytes 16-17 store the number of rows 1913 and columns 1915 for tile 0, bytes 18-19 store the number of rows and columns for tile 1, etc. In other words, each 2-byte group specifies a number of rows and columns for a tile. If a group of 2 bytes is not used to specify tile parameters, they should have the value zero. Specifying tile parameters for more tiles than the implementation limit or the palette limit results in a fault. Unconfigured tiles are set to an initial state with 0 rows, 0 columns.

Finally, the configuration in memory typically ends with an ending delineation such as all zeros for several consecutive bytes.

EXEMPLARY TILE AND TILE CONFIGURATION STORAGE

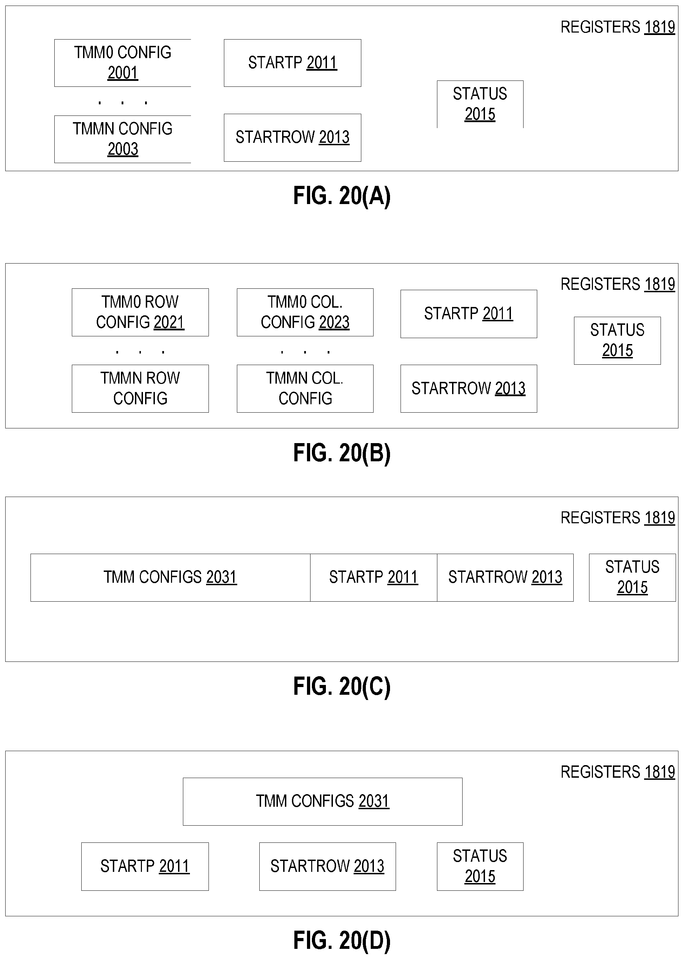

Figures 20(A)-(D) illustrate examples of register(s) 1819. Figure 20(A) illustrates a plurality of registers 1819. As shown each tile (TMM0 2001 ... TMMN 2003) has a separate register with each register storing a row and column size for that particular tile. StartP 2011 and StartRow 2013 are stored in separate registers. One or more status registers 2015 are set (e.g., TILES CONFIGURED = 1) to indicate tiles are configured for use.

Figure 20(B) illustrates a plurality of registers 1819. As shown each tile has separate registers for its rows and columns. For example, TMM0 rows configuration 2021, TMM0 columns configuration 2023, StartP 2011 and StartRow 2013 are stored in separate registers. One or more status registers 2015 are set (e.g., TILES_CONFIGURED = 1) to indicate tiles are configured for use.

Figure 20(C) illustrates a single register 1819. As shown, this register stores tile configurations (rows and columns per tile) 2031, StartP 2011, and StartRow 2013 are stored in single register as packed data registers. One or more status registers 2015 are set (e.g., TILES_CONFIGURED = 1) to indicate tiles are configured for use.

Figure 20(D) illustrates a plurality of registers 1819. As shown, a single register stores tile configuration (rows and columns per tile) 2031. StartP and StartRow are stored in separate registers 2011 and 2013. One or more status registers 2015 are set (e.g., TILES_CONFIGURED = 1) to indicate tiles are configured for use.

Other combinations are contemplated such as combining the start registers into a single register where they are shown separately, etc.

CONFIGURABLE SYSTOLIC ARRAY

As mentioned above, hardware for General Matrix Multiplication (a.k.a., GEMM) is a good option for improving the peak compute (and energy efficiency) of certain applications, such as deep learning. The huge computational demand of applications based on Deep Neural Networks (DNNs) may lead to the use of hardware (e.g., accelerator) employing numerous (e.g., hundreds) of processing elements, e.g., fused multiply add (FMA) circuits. However, (e.g., DNN) accelerators may be optimized for a very regular dataflow pattern of dense matrix multiplications. In certain embodiments, an accelerator uses a systolic array implementation to maximize performance and area/power efficiency. A systolic array may include dense two-dimensional arrays optimized for very regular dataflows.

However, operations (e.g., problems) that do not perfectly map to those dataflows, and thus the hardware optimized for those dataflows, can lead to heavy underutilization of the processing elements (e.g., arithmetic logic unit (ALU) circuits) in the systolic array, for example, because some fraction of execution does not perfectly map to the regular dataflow. In one embodiment, certain matrix multiplications underutilize the hardware array, for example, multiplications that arise due to small problem sizes or around boundaries of a matrix that are not a multiple of the array size.

In certain embodiments, accelerators optimized for a fixed matrix size suffer from underutilization problems. For example, consider a workload with a matrix width of 36, and a systolic array (e.g., matrix operations accelerator circuit) width of 32. If the array is zero padded (or the entire tile is reconfigured), the hardware will process a full width tile that is 32 elements wide on the first pass, and then a tile that is only 4 elements wide in the next pass. Thus, the overall efficiency is 56.25% (averaging 32/32 = 100% and 4/32 =12.5%). In certain embodiments, the movement of values to a vector accelerator (e.g., a vector stack that is separate from a matrix operations accelerator circuit) is expensive and the peak compute rate is much less than the systolic array (e.g., matrix operations accelerator circuit).

Certain embodiments herein are a configurable systolic array (e.g., matrix operations accelerator circuit) which supports multiple simultaneous smaller matrix multiplications and new instructions to drive that hardware. In certain hardware, the decoding and executing of an instruction causes the configurable systolic array hardware (e.g., matrix operations accelerator circuit) to compute C = A * B + C, where A, B, and C are each two-dimensional matrices, and for each element of C, the hardware computes a dot product of one row of input matrix A with one column of matrix B. Certain embodiments herein are new instructions (and hardware support in the systolic array) that take A and B (e.g., and C) inputs that are each composed of multiple matrices "glued" together and produce multiple output matrices.

An advantage of this solution is that it allows hardware to be more flexible, and thus have maximum utilization under more conditions than other solutions. For example, if the number of processing elements (e.g., ALU circuits) in an array is 32x32 in size, and the A matrix is 16 wide by 32 tall, the hardware allows a user to effectively "glue" two such A matrices together to get an A' that's 32x32, and thus fully utilize the array.

For deep learning, and other applications, the embodiments herein allow for the execution of a single instruction to simultaneously operate on multiple small matrices in a systolic array so that utilization of the processing elements (e.g., ALU circuits) is high. Further, the embodiments herein provide this capability without paying a high performance/area/power tax on large matrix operations.

Designing accelerators for each different size of matrix is impractical in certain embodiments. A systolic array implementation may employ a dense two-dimensional grid of processing elements (e.g., FMA circuits) for a fixed size input and/or output matrix. Thus, in contrast to smaller matrix sizes than the fixed size being served by either reconfiguring registers (e.g., which only improves efficiency in one dimension, and only a certain amount) or padding the matrix with zeros to make them fit to the size of the array, embodiments herein utilize hardware (and an instruction or instructions) that operates on multiple small matrices at a same time (e.g., that are processed together). Certain embodiments herein provide for a matrix operations accelerator circuit that does not utilize data values (e.g., inputs) that are moved to or from a vector stack (e.g., Intel® AVX stack though a data cache unit (DCU)) and/or zero padding of the data values (e.g., inputs).

In certain embodiments, a matrix operations accelerator circuit takes as input a plurality (e.g., two or three) (e.g., each being two-dimensional) matrices A (of dimensions $M \times K$, where M and K are integers), B (of dimensions $K \times N$, where K and N are integers), and C (of dimension $M \times N$, where M and N are integers), and then performs an operation (e.g., a fused multiply add) on respective elements to produce a resultant that is stored in a matrix (e.g., back into matrix C of dimension $M \times N$, where M and N are integers). In one embodiment, M, K, and N are less than or equal to 16. In certain embodiments, the matrix operations accelerator circuit performs the following operation:

$$updated\ c_{i,j} = c_{i,j} + \sum_{l=0}^{K-1} a_{i,l} * b_{l,j}$$

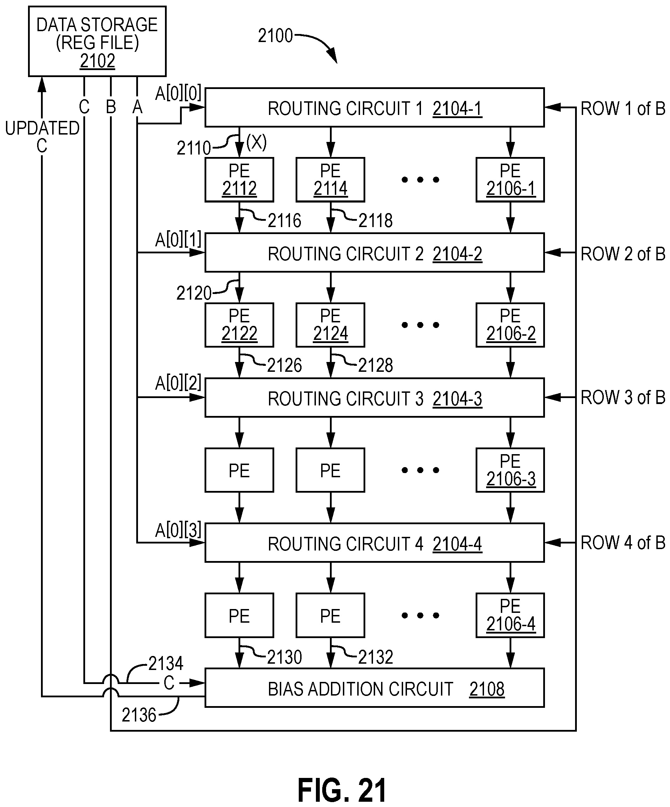

Figure 21 illustrates an embodiment of a matrix operations accelerator circuit 2100 comprising a two-dimensional grid of processing element circuits 2106-1 to 2106-4. In certain embodiments, data storage 2102 (e.g., register file) includes a plurality of registers, e.g., having a respective set of registers that represents a first input two-dimensional matrix (A), a second input two-dimensional matrix (B), and a third input two-dimensional matrix (C) (e.g., and result storage). In one embodiment, output two-dimensional matrix resultant is stored in the registers that form third input two-dimensional matrix (C), e.g., overwriting the values for the input two-dimensional matrix (C) after they have been utilized by the matrix operations accelerator circuit 2100. Depicted matrix operations accelerator circuit 2100 includes a plurality of routing circuits 2104-1 to 2104-4 to route the input values (e.g., from matrix A and matrix B) to the processing elements according to the operation to be performed.

Note that the figures herein may not depict all data communication couplings (e.g., connections). One of ordinary skill in the art will appreciate that this is to not obscure certain details in the figures. Note that a double headed arrow in the figures may not require two-way communication, for example, it may indicate one-way communication (e.g., to or from that component or device). Any or all combinations of communications paths may be utilized in certain embodiments herein. A single line may include multiple paths therein, e.g., multiple channels. For example, line 2110 may include multiple paths (e.g., "X", where X is any positive integer), e.g., one path for a value from matrix A and one path for a value from matrix B.

On request to perform an operation (e.g., by decoding and executing of an instruction to cause that operation), matrix operations accelerator circuit 2100 is to send values from matrix A and matrix B to a respective routing circuit in certain embodiments. For example, the operation may be to multiply matrix A by matrix B and then add a respective resultant to a corresponding value from matrix C. In one embodiment, first routing circuit 2104-1 is to receive a first value A[0][0] from matrix A[row] [column] (the value from row index zero and column index zero) and broadcast that value to each processing element 2106-1 in that row to a first input of each of the processing elements 2106-1 and a set of values from the first row of matrix B and send those values to a respective second input of each of the processing elements 2106-1 (e.g., such that processing element 2112 receives the value from B[0][0], processing element 2114 receives the value from B[0][1], etc.). In one embodiment, processing element 2112 provides on its output 2116 the resultant of the multiplication of A[0][0] * B[0][0] and processing element 2114 provides on its output 2118 the resultant of the multiplication of A[0][0] * B[0][1], Outputs (e.g., output 2116 and 2118) are sent to routing circuit 2 2104-2.

In one embodiment, second routing circuit 2104-2 is to receive a second value A[0][1] from matrix A[row] [column] (the value from row index zero and column index one) and broadcast that value to each processing element 2106-2 in that row to a first input of each of the processing elements 2106-2, a set of values from the second row of matrix B and send those values to a respective second input of each of the processing elements 2106-1 (e.g., such that processing element 2122 receives the value from B[1][0], processing element 2124 receives the value from B[1][1], etc.), and a respective output from the outputs of the above row of processing elements 2106-1. In one embodiment, processing element 2122 provides on its output 2126 the resultant of the multiplication of A[0][1] * B[1][0] added to the output 2116 (A[0][0] * B[0][0]), and processing element 2124 provides on its output 2128 the resultant of the multiplication of A[0][1] * B[1][1] added to the output 2118 (A[0][0] * B[0][1]). In certain embodiments, this fused multiply add operation is continued by each row of processing elements 2106-3 to 2106-4 to generate an output 2130 and an output 2132 from processing elements 2106-4. Note that four is an example number of rows of processing elements (e.g., and rows and columns of each of matrices A, B, and C), but it may be any plurality of rows. As the end of the rows of processing elements for the matrix operations accelerator circuit 2100 have been reached, bias addition circuit 2108 is to add a respective element from matrix C from input 2134 (e.g., a set of parallel input ports) (e.g., a respective element from the first row of matrix C) and store the resultant in the respective element of matrix C (e.g., in a respective element position of the first row of matrix C) via output 2136 (e.g., a set of parallel output ports). For example, the first element from the first row of matrix C being added to the resultant from output 2130 and that result stored back into the first element location of the first row of matrix C, and the second element from the first row of matrix C being added to the resultant from output 2132 and that result stored back into the second element location of the first row of matrix C. This can be repeated for each row of matrix A to generate the entire multiplication of matrix A * matrix B (e.g., and adding a bias from matrix C into the respective resultants).

Certain embodiments of circuitry thus use a two-dimensional (2D) array of processing elements (PEs) (e.g., FMA units), for example, with some input and output buffers and local control logic circuitry. In one embodiment, each PE gets some of its inputs from a data store, such as a register file, and other inputs from other PEs, and the final row of PEs sends its output back to the data store. Thus, the PEs form a pipeline in these embodiments. A user may generally intend to perform a sequence of operations on a large set of data elements (e.g., more data elements than PEs). So, the elements may be input into the top of the array to start the pipeline, and let data trickle downward, through the pipeline (providing additional inputs at various stages of the pipeline, where appropriate).

In one embodiment, each instance of a processing element is a fused multiply accumulate (FMA) circuit that includes a multiplier circuit (e.g., that takes a first input a, a second input b, and produces a resultant output) and an adder circuit (e.g., that adds resultant output from multiplier circuit as a first input with a third input c to produce a resultant).

Certain embodiments herein are new instructions (and hardware support in the systolic array) that take A and B (e.g., and C) inputs that are each composed of multiple matrices "glued" together and produce multiple output matrices instead of only operating on a single matrix A, a single matrix B, and a single matrix C. To simplify the control used for data flow within the two-dimensional of FMA circuits, certain embodiments herein provide control for a dot product operation on multiple matrices without modifying the control for the fused multiply accumulate operations.

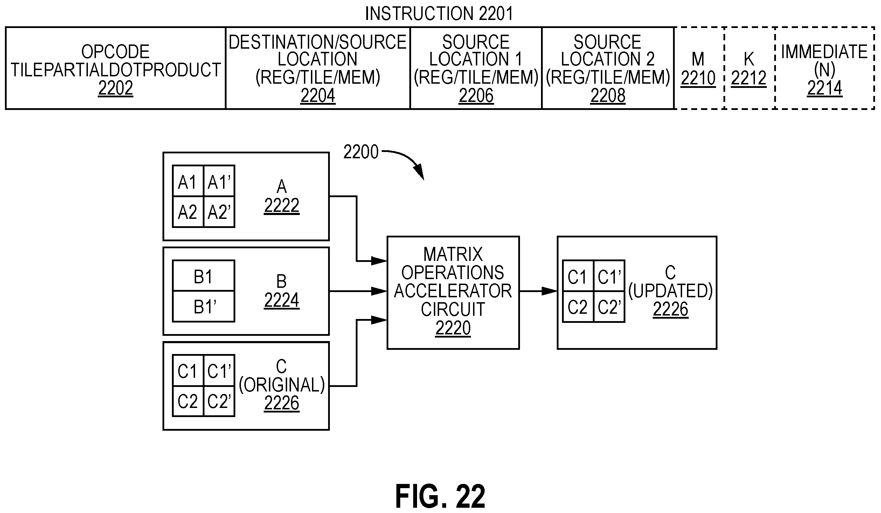

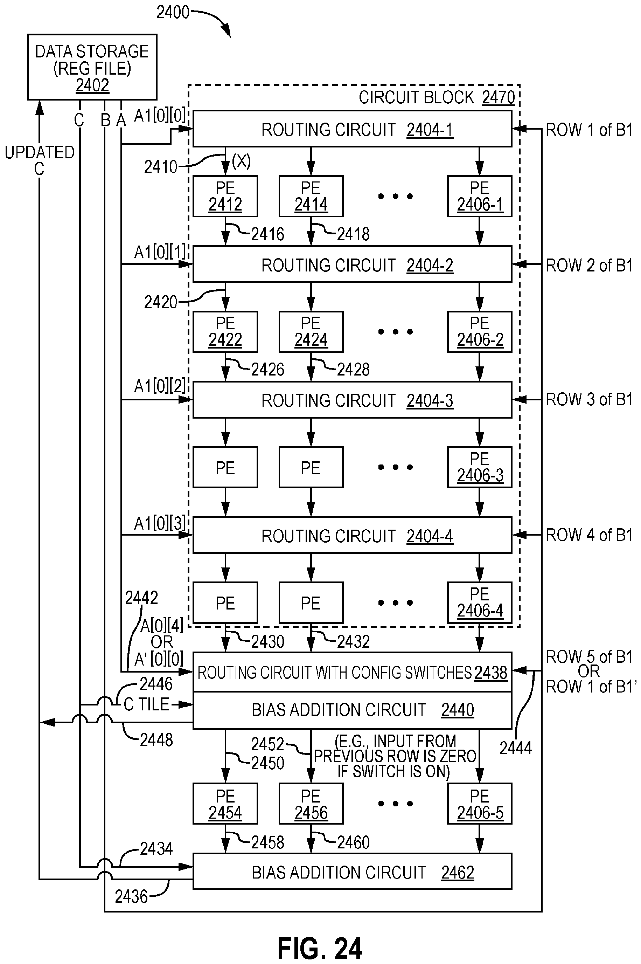

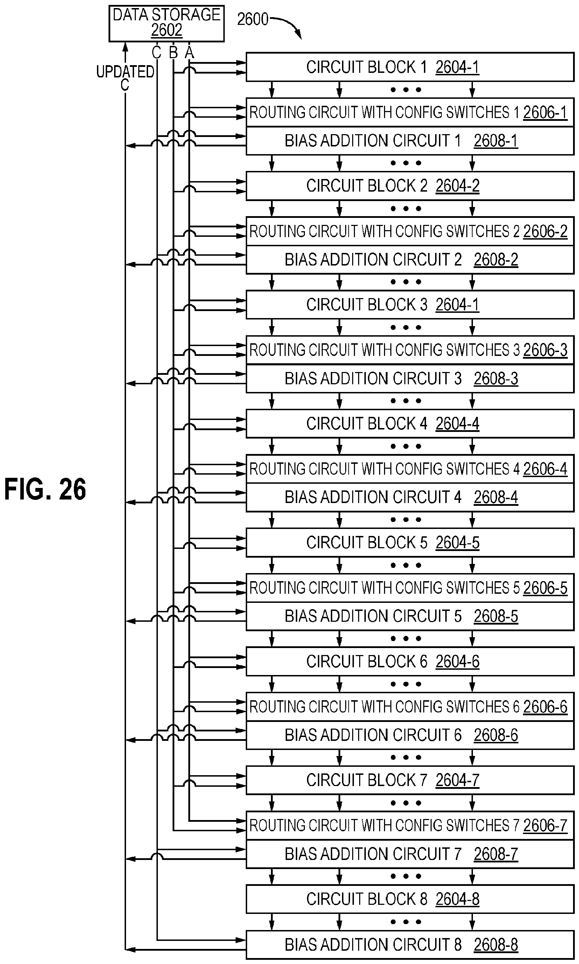

Figure 22 is a block diagram illustrating use of a TILEPARTIALDOTPRODUCT instruction 2201 to accelerate a matrix operation according to some embodiments. Instruction 2201 is to cause a (matrix A * matrix B) + matrix C operation to be performed by matrix operations accelerator circuit 2220. Matrix operations accelerator circuit 2220 may be an instance of matrix operations accelerator circuit 2400 in Figure 24 or matrix operations accelerator circuit 2600 in Figure 26.

Instead of only operating on a single matrix A, a single matrix B, and a single matrix C, the instruction 2201 (and matrix operations accelerator circuit 2400 in Figure 24 and matrix operations accelerator circuit 2600 in Figure 26) allow simultaneous operation on a plurality of input matrices. For example, embodiments herein may (e.g., by re-laying out the data) fetch an A tile with multiple A matrices side-by-side (e.g., where matrix A 2222 includes a first row A1 of data and a second row A2 of data from the same A matrix, while A1' and A2' are the first row of data and the second row of data from another "A" matrix, respectively). Depending on the application, embodiments herein can form a B tile by either replicating the same B matrix or stitching multiple B matrices (e.g., as shown in Figure 22 with first row B1 of data and first row B1' of data being from different B matrices). In another embodiment, B matrix may be replicated, e.g., such that B1'=B1. In certain embodiments, the hardware supports accessing multiple C matrices (e.g., as shown in Figure 22). In one embodiment, another instruction (e.g., as indicated in software) is to form the A tile from different matrices, the B tile from either different B matrices or a replicated B matrix, and a C tile from either different C matrices or a replicated C matrix (e.g., C1' = C1 and C2'=C2 and/or C1=C2).

Thus, certain embodiments of instruction 2201, when decoded and executed, correctly operate on A & B inputs that are each composed of multiple matrices "glued" together and produce multiple output matrices after adding the respective C values.

Thus, in one mode of operation, a matrix operations accelerator circuit generates updated C1 = (A1 * B1 + A1' * B1' + ...) + C1. However, when A and A' are different matrices that are input together, this is not the desired operation in certain embodiments. Instead, in another mode of operation, matrix operations accelerator circuit is to perform fewer operations per output element, e.g., updated C1 = A1*B1 + C1. That means there are more output elements in the second mode than in the first mode. The resultant, updated C matrices may either be packed into multiple output matrices glued together (e.g., as shown in updated matrix C 2226 in Figure 22), or may have multiple independent destinations.

An example format of the instruction has a mnemonic of TILEPARTIALDOT PRODUCT (or TPNDP for "tile partial 'N' dot product") where the N is the number of different matrices that are logically glued together. For example, if two A matrices are input into one A tile input (e.g., and likewise, two B matrices into one B tile), the instruction may be referred to as TP2DP. The instruction may have a format of: TPNDP tsrcdest, tsrc1, tsrc2, where the first field "tsrcdest" identifies a tile source/destination (e.g., tile 2226), the second field "tsrc1" identifies a second tile source (e.g., tile 2222), and the third field "tsrc2" identifies a third tile source (e.g., tile 2224). In one embodiment (e.g., having a large output tile), the size of the output tile is implicit. In an embodiment having multiple output tiles, the number of output tiles is N (where N is any positive integer). The specific tile registers may be consecutive, starting with tsrcdest (e.g., tmm0 and tmm1, if tmm0 is specific and N=2), or may use another convention to choose a group of multiple registers. Certain embodiments utilize a new instruction for handling matrices of given, different sizes glued together. For example, if the matrix operations accelerator circuit is capable of handling four matrices glued together, but if only provided an input of two matrices glued together (one of which is three times as large as the other), then one quarter of the elements are from one matrix, and three quarters from another matrix, and this may be specified in the opcode (e.g., T1AND3DP) or via an immediate value passed to the instruction (e.g., TPDP tsrcdest, tsrc1, tsrc2, imm8). Possible encoding of the immediate is discussed below.

Figure 22 is a block diagram illustrating use of a TILEPARTIALDOTPRODUCT instruction 2201 to accelerate a matrix dot product operation, according to some embodiments. As shown, instruction 2201 includes an opcode 2202 (e.g. TILETRANSFORM), which indicates that the processor is to perform a dot product on matrices according to this disclosure. In particular, in response to the opcode, the processor is to perform a respective operation on each of multiple matrices stored in a single input tile in certain embodiments. For example, where source location 1 2206 stores one or more A matrices, source location 2 2208 stores one or more B matrices, and source location 3 2204 stores one or more C matrices. Optionally, the instruction may include a field (e.g., an operand or the opcode) that indicates the M 2210 (e.g., number of rows) and K 2212 (e.g., number of columns) of one or more of the input or output matrices. The size and/or number of matrices "glued" together may be specified in one or more of several ways: as operands to the TILEPARTIALDOTPRODUCT instruction, as suffixes or prefixes to the specified opcode, as part of an immediate 2214 provided with the instruction, as part of control registers programmed by software before issuing the instruction (e.g., TILECONFIG), or even as architectural default values. M and K may each be chosen from an unlimited range of integer values in certain embodiments.

Instruction 2201 further specifies destination matrix (e.g., tile) location 2204. Each specified matrix locations may be in any of a memory location, a collection of vector registers, and a collection of tile registers. Here, specified sources 2206, 2208, and 2210 and destination matrix 2216 each includes multiple elements. In one embodiment, an element is 64-bits or 32-bits.

Also shown is system 2200 for executing the TILEPARTIALDOTPRODUCT instruction 2201. The system includes source location 1 2222 storing one or more A matrices, source location 2224 storing one or more B matrices, and source location 3 2226 storing one or more C matrices, matrix operations accelerator circuit 2220 and specified destination matrix (tile) 2226.

Alternate, inferior approaches to performing these matrix operations may exist, but do not achieve the power and performance gains of the disclosed embodiments performing the TILEPARTIALDOTPRODUCT instruction. In some other approaches, software can load data into vector/SIMD registers, perform the transform using vector instructions, write the reformatted data to memory, and then load the reformatted data into a 2D/vector/tile register. But doing the format transitions in vector instructions may be slow, requires complex software tuning, and may require more space in the cache.

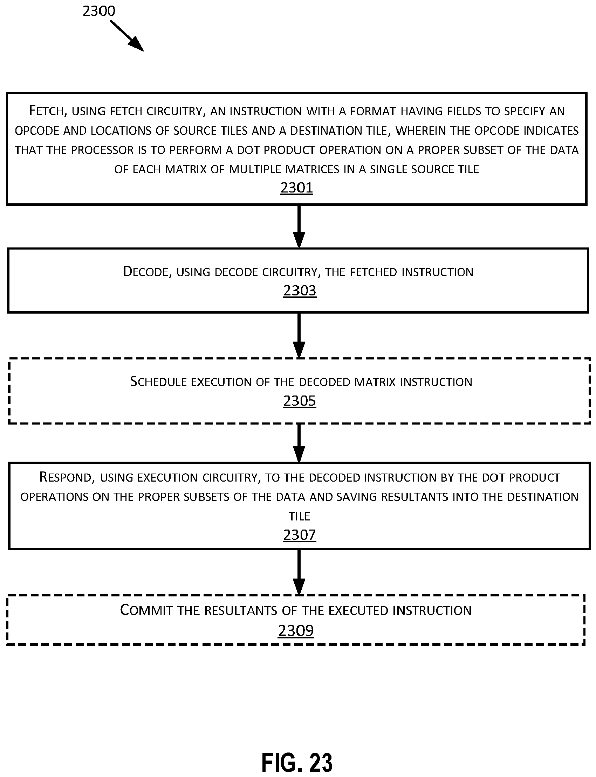

Figure 23 illustrates a method 2300 of processing a TILEPARTIALDOTPRODUCT instruction according to embodiments of the disclosure. Method 2300 includes fetch, using fetch circuitry, an instruction with a format having fields to specify an opcode and locations of source tiles and a destination tile, wherein the opcode indicates that the processor is to perform a dot product operation on a proper subset of the data of each matrix of multiple matrices in a single source tile, decode, using decode circuitry, the fetched instruction 2303, schedule execution of the decoded matrix instruction 2305, respond, using execution circuitry, to the decoded instruction by performing the dot product operations on the proper subsets of the data and saving resultants into the destination tile 2307, and commit the resultants of the executed instruction 2309. In one embodiment, an instruction switches a matrix operations accelerator circuit between a first mode (e.g., with only a single matrix in each input tile/ respective set of registers) and a second mode (e.g., with multiple matrices in at least one of the input tiles/respective set of registers).

In certain embodiments, the operation begins as with matrix operations accelerator circuit 2100 in Figure 21 where the data values are input into the beginning of the array to start the pipeline, with the consecutive results trickling forward through the pipeline (e.g., providing additional inputs at various stages of the pipeline, as appropriate). For example, with data flowing downward from one PE to the next PE through a routing channel. To provide configurability to a matrix operations accelerator circuit, certain embodiments herein add configuration switches at regular intervals into a matrix operations accelerator circuit (e.g., configuration switches 2438 in Figure 23 after the fourth row of PEs). In certain embodiments, a configuration switch is a pair of demultiplexors and multiplexors. In one embodiment, when the configuration switch is turned on, a demulitplexer writes out to the C buffer after adding the initial C value to the resultant output from the previous PE and the multiplexor towards the next PE will forward a zero value instead of forwarding the previous PE's output. Thus, certain embodiments herein break the chain of the dot product and begins a new chain. In one embodiment, if the configuration switch is turned off, the complete matrix operations accelerator circuit behaves as a single pipeline with one output stage to C, e.g., such that when input data values are inserted at the beginning of the pipeline (e.g., into processing elements 2406-1), results flow forward (e.g., downwards in the depicted orientation) until they reach a configuration switch which is turned on. At this stage, the pipeline breaks and writes out the value to the buffer after adding it to the corresponding C element in certain embodiments, e.g., and the next stage in the pipeline gets loaded as if the previous PE's output value was zero. Thus, it can be thought of as a start of a new pipeline.

In certain embodiments, the configuration switches are controlled by one or more instructions. For example, with a first (e.g., single matrices in each tile multiplication) instruction to turn off all configuration switches and a second (e.g., multiple matrices in each tile) instruction to turn on one or more rows of configuration switches. For example, an instruction for handling two evenly sized matrices (e.g., two evenly sized matrices in each of tiles A, B, and C) logically glued together (e.g., TP2DP as discussed above) will turn on a row of configuration switches in the middle of the array of PEs to perform A * B + C for a first set of matrices stored in tiles A, B, and C and perform A' * B' + C' for a second set of matrices also stored in tiles A, B, and C.

Figure 24 illustrates an embodiment of a matrix operations accelerator circuit 2400 comprising a two-dimensional grid of processing element circuits 2406-1 to 2406-5 that includes a row of configuration switches (e.g., routing circuit with configuration switches) to switch between a first mode and a second mode. In one embodiment, the decoding and executing of an instruction switches the matrix operations accelerator circuit 2400 from a first mode (e.g., with only a single matrix in each input tile/ respective set of registers) to a second mode (e.g., with multiple matrices in at least one of the input tiles/respective set of registers), or from the second mode to the first mode.

In certain embodiments, data storage 2402 (e.g., register file) includes a plurality of registers, e.g., having a respective set of registers that represents at least one (e.g., a plurality of) first input two-dimensional matrix (A), at least one (e.g., a plurality of) second input two-dimensional matrix (B), and at least one (e.g., a plurality of) third input two-dimensional matrix (C) (e.g., and result storage). In one embodiment, output two-dimensional matrix resultant is stored in the registers that form the at least one third input two-dimensional matrix (C), e.g., overwriting the values for the input two-dimensional matrix (C) after they have been utilized by the matrix operations accelerator circuit 2400.

In one embodiment, when in a first mode, the values stored in a first plurality of registers represents a single input two-dimensional matrix A and the values stored in a second plurality of registers represents a single input two-dimensional matrix B (e.g., and the values stored in a third plurality of registers represents a single input two-dimensional matrix C), and when in a second mode, the values stored in a first plurality of registers represent multiple input two-dimensional matrices A and A' and the values stored in a second plurality of registers represent multiple input two-dimensional matrices B and B' (e.g., and the values stored in a third plurality of registers represent multiple input two-dimensional matrices C and C').

Depicted matrix operations accelerator circuit 2400 includes a plurality of routing circuits 2402-1 to 2402-4 to route the input values (e.g., from matrices A and A' and matrices B and B') to the processing elements according to the operation to be performed.

Note that the figures herein may not depict all data communication couplings (e.g., connections). One of ordinary skill in the art will appreciate that this is to not obscure certain details in the figures. Note that a double headed arrow in the figures may not require two-way communication, for example, it may indicate one-way communication (e.g., to or from that component or device). Any or all combinations of communications paths may be utilized in certain embodiments herein. A single line may include multiple paths therein, e.g., multiple channels. For example, line 2410 may include multiple paths (e.g., "X", where X is any positive integer), e.g., one path for a value from matrix A and one path for a value from matrix B.

On request to perform an operation (e.g., by decoding and executing of an instruction to cause that operation), matrix operations accelerator circuit 2400 is to send values from tile A and tile B to a respective routing circuit in certain embodiments. For example, the operation may be to multiply matrix A from tile A by matrix B from tile B and then add a respective resultant to a corresponding value in matrix C from tile C when in a first mode, and multiply matrix A from tile A by matrix B from tile B and then add a respective resultant to a corresponding value in matrix C from tile C as well as multiply matrix A' from tile A by matrix B' from tile B and then add a respective resultant to a corresponding value in matrix C' from tile C when in a second mode.

In one embodiment, first routing circuit 2404-1 is to receive a first value A[0][0] from matrix A[row] [column] (the value from row index zero and column index zero) and broadcast that value to each processing element 2406-1 in that row to a first input of each of the processing elements 2406-1 and a set of values from the first row of matrix B and send those values to a respective second input of each of the processing elements 2406-1 (e.g., such that processing element 2412 receives the value from B[0][0], processing element 2414 receives the value from B[0][1], etc.). In one embodiment, processing element 2412 provides on its output 2416 the resultant of the multiplication of A[0][0] * B[0][0] and processing element 2414 provides on its output 2418 the resultant of the multiplication of A[0][0] * B[0][1], Outputs (e.g., output 2416 and 2418) are sent to routing circuit 2 2404-2.

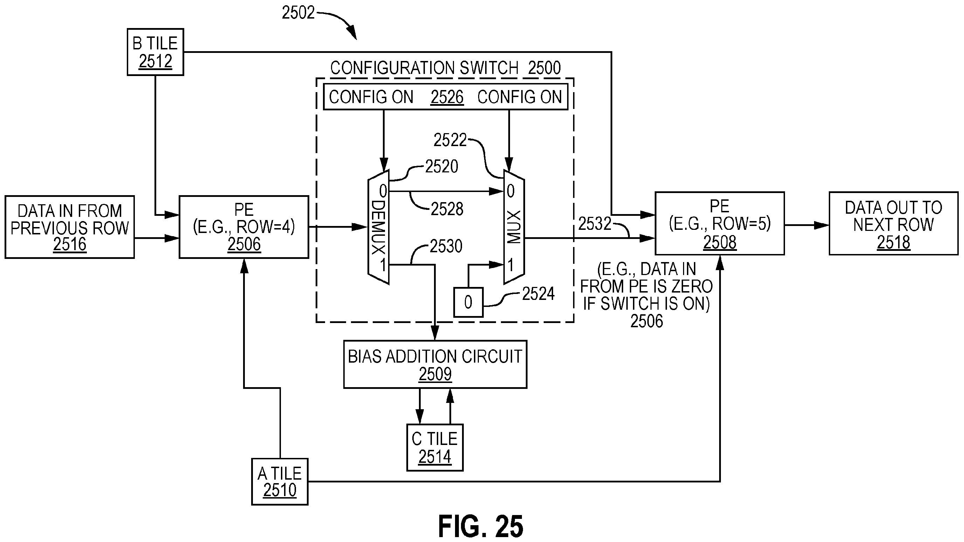

In one embodiment, second routing circuit 2404-2 is to receive a second value A[0][1] from matrix A[row] [column] (the value from row index zero and column index one) and broadcast that value to each processing element 2406-2 in that row to a first input of each of the processing elements 2406-2, a set of values from the second row of matrix B and send those values to a respective second input of each of the processing elements 2406-1 (e.g., such that processing element 2422 receives the value from B[1][0], processing element 2424 receives the value from B[1][1], etc.), and a respective output from the outputs of the above row of processing elements 2406-1. In one embodiment, processing element 2422 provides on its output 2426 the resultant of the multiplication of A[0][1] * B[1][0] added to the output 2416 (A[0][0] * B[0][0]), and processing element 2424 provides on its output 2428 the resultant of the multiplication of A[0][1] * B[1][1] added to the output 2418 (A[0][0] * B[0][1]). In certain embodiments, this fused multiply add operation is continued by each row of processing elements 2406-3 to 2406-4 to generate an output 2430 and an output 2432 from processing elements 2406-4. In comparison to matrix operations accelerator circuit 2100 in Figure 21, matrix operations accelerator circuit 2400 in Figure 24 includes routing circuit with configuration switches 2438. Configuration switches 2438 may be multiple (e.g., parallel) instances of configuration switch 2500 from Figure 25.

In certain embodiments, in the first mode, the configuration switches 2438 are to pass the resultants from fourth row of processing elements 2406-4 (e.g., output 2430 and output 2432) to the next row of processing elements 2406-5 (e.g., output 2430 as an input to PE 2454 and output 2432 as an input to PE 2456) to be added to the results of row five of processing elements 2406-5. For depicted row five of processing elements 2406-5, routing circuit with configuration switches 2438 in the first mode is to receive a value A[0][4] on input 2442 from matrix A[row] [column] (the value from row index zero and column index four) and broadcast that value to each processing element 2406-5 in that row to a first input of each of the processing elements 2406-5 and a set of values on the inputs 2444 from the fourth row of matrix B and send those values to a respective second input of each of the processing elements 2406-5 (e.g., such that input 2450 of processing element 2454 receives the value from B[4][0], input 2452 of processing element 2456 receives the value from B[4][1], etc.). In one embodiment of the first mode, processing element 2454 provides on its output 2458 the resultant of the multiplication of A[0][0] * B[0][0] + A[0][1] * B[1][0] + A[0][2] * B[2][0] + A[0][3] * B[3][0] + A[0][4] * B[4][0] and processing element 2456 provides on its output 2460 the resultant of the multiplication of A[0][0] * B[0][1] + A[0][1] * B[1][1] + A[0][2] * B[2][1] + A[0][3] * B[3][1] + A[0][4] * B[4][1]. As the end of the rows of processing elements for the matrix operations accelerator circuit 2400 have been reached, bias addition circuit 2462 is to add a respective element from matrix C from input 2434 (e.g., a set of parallel input ports) (e.g., a respective element from the first row of matrix C) and store the resultant in the respective element of matrix C (e.g., in a respective element position of the first row of matrix C) via output 2436 (e.g., a set of parallel output ports). For example, the first element from the first row of matrix C being added to the resultant from output 2458 and that result stored back into the first element location of the first row of matrix C, and the second element from the first row of matrix C being added to the resultant from output 2460 and that result stored back into the second element location of the first row of matrix C. This can be repeated for each row of matrix A to generate the entire multiplication of matrix A * matrix B (e.g., and adding a bias from matrix C into the respective resultants). In certain embodiments of the first mode, bias addition circuit 2440 is thus not used when operating on a single matrix in each of the tiles (e.g., with a tile being a proper subset of registers of a matrix operations accelerator circuit).

In certain embodiments, in the second mode (e.g., where tile A includes matrix A and matrix A', tile B includes matrix B and matrix B', and tile C includes matrix C and matrix C') the configuration switches 2438 are not to pass the resultants from fourth row of processing elements 2406-4 (e.g., output 2430 and output 2432) to the next row of processing elements 2406-5 (e.g., output 2430 is not an input to PE 2454 and output 2432 is not an input to PE 2456) to be added to the results of row five of processing elements 2406-5. In the second mode (e.g., in an example where matrix A is four columns wide), routing circuit with configuration switches 2438 is to send the resultant values from fourth row of processing elements 2406-4 (e.g., output 2430 and output 2432) to bias addition circuit 2440.

In certain embodiments of the second mode, first processing element from fourth row 2406-4 provides on its output 2430 the resultant of the multiplication of A[0][0] * B[0][0] + A[0][1] * B[1][0] + A[0][2] * B[2][0] + A[0][3] * B[3][0] and second processing element 2456 from fourth row 2406-4 provides on its output 2432 the resultant of the multiplication of A[0][0] * B[0][1] + A[0][1] * B[1][1] + A[0][2] * B[2][1] + A[0][3] * B[3][1]. As the end of the rows of the first subset of matrices (e.g., matrices A, B, and C), bias addition circuit 2440 is to add a respective element from matrix C from input 2446 (e.g., a set of parallel input ports) (e.g., a respective element from the first row of matrix C) and store the resultant in the respective element of matrix C (e.g., in a respective element position of the first row of matrix C) via output 2448 (e.g., a set of parallel output ports). For example, the first element from the first row of matrix C being added to the resultant from output 2430 and that result stored back into the first element location of the first row of matrix C, and the second element from the first row of matrix C being added to the resultant from output 2432 and that result stored back into the second element location of the first row of matrix C.

In certain embodiments of the second mode, routing circuit with configuration switches 2438 in the second mode is to receive a value A'[0][0] from matrix A' (and not the A[0][4] from matrix A) on input 2442 from matrix A' [row] [column] (the value from row index zero and column index zero for the second matrix A') and broadcast that value to each processing element 2406-5 in that row to a first input of each of the processing elements 2406-5 and a set of values on the inputs 2444 from the first row of matrix B' (and not the fourth row of matrix B) and send those values to a respective second input of each of the processing elements 2406-5 (e.g., such that input 2450 of processing element 2454 receives the value from B'[0][0], input 2452 of processing element 2456 receives the value from B'[0][1], etc.), but without output 2430 being an input to PE 2454 and without output 2432 being an input to PE 2456.

In certain embodiments of the second mode, processing element 2454 provides on its output 2458 the resultant of the multiplication of A'[0][0] * B'[0][0] and processing element 2456 provides on its output 2460 the resultant of the multiplication of A'[0][0] * B'[0][1]. As the end of the rows of processing elements for the matrix operations accelerator circuit 2400 have been reached, bias addition circuit 2462 is to add a respective element from matrix C' (and not matrix C) from input 2434 (e.g., a set of parallel input ports) (e.g., a respective element from the first row of matrix C) and store the resultant in the respective element of matrix C' (e.g., in a respective element position of the first row of matrix C') via output 2436 (e.g., a set of parallel output ports). For example, the first element from the first row of matrix C' being added to the resultant from output 2458 and that result stored back into the first element location of the first row of matrix C', and the second element from the first row of matrix C' being added to the resultant from output 2460 and that result stored back into the second element location of the first row of matrix C. This can be repeated for: (i) each row of matrix A to generate the entire multiplication of matrix A * matrix B (e.g., and adding a bias from matrix C into the respective resultants) and (ii) each row of matrix A' to generate the entire multiplication of matrix A' * matrix B' (e.g., and adding a bias from matrix C' into the respective resultants). In certain embodiments of the second mode, bias addition circuit 2440 is used when operating on a plurality of matrices in each of the tiles (e.g., with a tile being a proper subset of registers of a matrix operations accelerator circuit). Note that five is an example number of rows of processing elements (e.g., and a maximum number of rows and columns of each of matrices A, B, and C to be processed), but it may be any plurality of rows.

Figure 25 illustrates an embodiment of a configuration switch 2500. Depicted circuit 2502 includes configuration switch 2500 and a bias addition circuit 2504. Depicted configuration switch 2500 is coupled between a first (e.g., upstream) processing element 2506 and a second (e.g., downstream) processing element 2508. For example, first processing element 2506 may be processing element 2430 in Figure 24 and second processing element may be processing element 2454 in Figure 24.

In the depicted embodiment, first processing element 2506 includes a first input 2516 to source data (e.g., a resultant) from a previous PE (e.g., a PE in a previous row), a second input 2510 to source data from tile A (e.g., matrix A and/or matrix A' stored therein), and a third input 2512 to source data from tile B (e.g., matrix B and/or matrix B' stored therein). In one embodiment, first processing element 2506 multiplies an element from tile A sourced from second input 2510 by an element from tile B sourced from third input 2512 to produce an intermediate resultant, then adds that intermediate resultant to the data element from first input 2516 to produce a resultant. In one embodiment, that resultant is then passed to configuration switch 2500, e.g., into an input port of demultiplexer 2520.

In certain embodiments, a first control value (e.g., zero) is sent to configuration switch input 2526 to cause (i) the resultant from first processing element 2506 to be steered from the input port of demultiplexer 2520 to an output port coupled to path 2528 and into a first input port of multiplexer 2522, and (ii) the resultant is sent out of the output port of multiplexer 2522 and into a first input port 2532 of the second processing element 2508. In the depicted embodiment, the second processing element includes a first input 2532 to source data (e.g., a resultant) from previous PE 2506 (e.g., in the first mode) or a zero from source 2524 (e.g., in the second mode), a second input 2510 to source data from tile A (e.g., matrix A and/or matrix A' stored therein), and a third input 2512 to source data from tile B (e.g., matrix B and/or matrix B' stored therein). In one embodiment, second processing element 2508 multiplies an element from tile A sourced from second input 2510 by an element from tile B sourced from third input 2512 to produce an intermediate resultant, then adds that intermediate resultant to the resultant from PE 2506 sourced from first input 2532 to produce a resultant. In one embodiment, that resultant is then passed downstream via output 2518, e.g., into an input port of another processing element.

In certain embodiments, a second control value (e.g., one) is sent to configuration switch input 2526 to cause (i) the resultant from first processing element 2506 to be steered from the input port of demultiplexer 2520 to an output port coupled to path 2530 and into bias addition circuit 2504, and (ii) cause a zero from source 2524 to be sent out of the output port of multiplexer 2522 and into a first input port 2532 of the second processing element 2508. In the depicted embodiment, the second processing element includes a first input 2532 to source data (e.g., a resultant) from previous PE 2506 (e.g., in the first mode) or a zero from source 2524 (e.g., in the second mode), a second input 2510 to source data from tile A (e.g., matrix A and/or matrix A' stored therein), and a third input 2512 to source data from tile B (e.g., matrix B and/or matrix B' stored therein). In one embodiment, second processing element 2508 multiplies an element from tile A sourced from second input 2510 by an element from tile B sourced from third input 2512 to produce an intermediate resultant, then adds that intermediate resultant to the zero from source 2524 sourced from first input 2532 to produce a resultant (e.g., with the dot product chain broken for a new matrix A' instead of for matrix A). In one embodiment, that resultant is then passed downstream via output 2518, e.g., into an input port of another processing element. In one embodiment, bias addition circuit 2504 is to source a respective element from port 2514 to tile C, add that respective element to the resultant from path 2530, and store the updated resultant back into respective element position of tile C via port 2514. In certain embodiments, a respective instance of circuit 2502 is provided between each pair of upstream and downstream PEs that are to support multiple modes as discussed herein.

Figure 26 illustrates an embodiment of a matrix operations accelerator circuit 2602 comprising a two-dimensional grid of processing element circuits that includes a plurality of rows of configuration switches 2606-1 to 2606-7 to switch between a plurality of modes. In certain embodiments, each circuit block 2604-1 to 2604-8 is an instance of circuit block 2470 from Figure 25. In the depicted embodiment, circuit blocks 2604-1 to 2604-7 are coupled to a respective instance of a routing circuit with configuration switches 2606-1 to 2606-7 (e.g., as discussed in reference to Figure 24), which are then coupled to a respective instance of bias addition circuitry (e.g., as discussed in reference to Figure 24), and circuit block 2604-8 is coupled to bias addition circuit 2608-8. Figure 26 illustrates that multiple proper subsets (e.g., rows) of configuration switches may be included to control where, in a first mode, resultant data is to continue to pipeline through matrix operations accelerator circuit 2602 or, in a different mode, resultant data is steered out of the processing elements to stop the pipelining of data, e.g., to steer that resultant data to a respective instance of a bias addition circuit to update a respective value in tile C with that resultant data.

The control value(s) to select the mode may be provided by the decoding and executing of an instruction (e.g., a partial dot product instruction discussed herein). In one embodiment, an instruction includes an immediate value to explicitly encode the control for the configuration switches. The immediate (e.g., configuration parameter) is an encoded value and the table below shows how it may be decoded and programmed to turn on or turn off a respective set (e.g., row) of configuration switches, e.g., for an array with seven rows of configuration switches. If the application wants multiple configuration switches to be turned on for the same array, a different encoding may be used. The instruction may carry the number of output tiles or the size of the output tile), or the hardware may infer this from the number of configuration switches turned on.

TABLE: Example Configuration Values

| Configuration Parameter (e.g., encoded value) | Columns (or rows) of First Matrix (e.g., A) | Columns (or rows) of Second Matrix (e.g., A') | Decoder output (e.g., a respective bit sent to each row of switches) | Configuration Switches |
|---|---|---|---|---|
| 000 | 32 | 0 | 0000000 | All rows of switches are in first mode (e.g., off) |
| 001 | 4 | 28 | 0000001 | Row 1 of switches (e.g., switches 2606-1) are in second mode (e.g., on) |
| 010 | 8 | 24 | 0000010 | Row 2 of switches (e.g., switches 2606-2) are in second mode (e.g., on) |
| 011 | 12 | 20 | 0000100 | Row 3 of switches (e.g., switches 2606-3) are in second mode (e.g., on) |
| 100 | 16 | 16 | 0001000 | Row 4 of switches (e.g., switches 2606-4) are in second mode (e.g., on) |
| 101 | 20 | 12 | 0010000 | Row 5 of switches (e.g., switches 2606-5) are in second mode (e.g., on) |
| 110 | 24 | 8 | 0100000 | Row 6 of switches (e.g., switches 2606-6) are in second mode (e.g., on) |
| 111 | 28 | 4 | 1000000 | Row 7 of switches (e.g., switches 2606-7) are in second mode (e.g., on) |

Exemplary architectures, systems, etc. that the above may be used in are detailed below.

At least some embodiments of the disclosed technologies can be described in view of the following examples:

Example 1. An apparatus comprising:

a matrix operations accelerator circuit comprising a two-dimensional grid of fused multiply accumulate circuits;
a first plurality of registers that represents at least one first input two-dimensional matrix coupled to the matrix operations accelerator circuit;
a second plurality of registers that represents at least one second input two-dimensional matrix coupled to the matrix operations accelerator circuit;
a decoder, of a core coupled to the matrix operations accelerator circuit, to decode a single instruction into a decoded single instruction, the single instruction including a field that identifies a resultant storage; and
an execution circuit of the core to execute the decoded single instruction to:
switch the matrix operations accelerator circuit from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from the at least one first input two-dimensional matrix and the at least one second input two-dimensional matrix, and store the output values in the resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

2. The apparatus of example 1, wherein the single instruction comprises a second field to indicate the matrix operations accelerator circuit is to execute in the first mode when the second field is a first value and in the second mode when the second field is a second value.

3. The apparatus of example 2, wherein the second field is an immediate of the single instruction.

4. The apparatus of example 1, wherein the resultant storage is a third plurality of registers that represents at least one output two-dimensional matrix formed by execution of the decoded single instruction.

5. The apparatus of example 4, wherein the execution of the decoded single instruction is to: in the first mode, add values from the third plurality of registers that represents at least one third input two-dimensional matrix initially stored in the third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

6. The apparatus of example 1, wherein the execution of the decoded single instruction is to:

in the first mode, add values from at least one third input two-dimensional matrix initially stored in a third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

7. The apparatus of example 1, wherein the resultant storage is a third plurality of registers that represents a plurality of output two-dimensional matrices formed by execution of the decoded single instruction.

8. The apparatus of example 1, wherein the first proper subset of fused multiply accumulate circuits is one of a row or a column of the two-dimensional grid of fused multiply accumulate circuits and the second proper subset of fused multiply accumulate circuits is another of the one of the row or the column of the two-dimensional grid of fused multiply accumulate circuits.

Example 9. A method comprising:

decoding, with a decoder of a processor core, a single instruction into a decoded single instruction, wherein the processor core is coupled to a matrix operations accelerator circuit comprising a two-dimensional grid of fused multiply accumulate circuits, the matrix operations accelerator circuit is coupled to a first plurality of registers that represents at least one first input two-dimensional matrix and a second plurality of registers that represents at least one second input two-dimensional matrix, and the single instruction includes a field that identifies a resultant storage; and
executing the decoded single instruction with an execution circuit of the processor core to:
switch the matrix operations accelerator circuit from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from the at least one first input two-dimensional matrix and the at least one second input two-dimensional matrix, and store the output values in the resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

10. The method of example 9, wherein the single instruction comprises a second field indicating that the matrix operations accelerator circuit is to execute in the first mode when the second field is a first value and in the second mode when the second field is a second value.

11. The method of example 10, wherein the second field is an immediate of the single instruction.

12. The method of example 9, wherein the resultant storage is a third plurality of registers that represents at least one output two-dimensional matrix formed by execution of the decoded single instruction.

13. The method of example 12, wherein the executing the decoded single instruction is to:

in the first mode, add values from the third plurality of registers that represents at least one third input two-dimensional matrix initially stored in the third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

14. The method of example 9, wherein the executing the decoded single instruction is to:

in the first mode, add values from at least one third input two-dimensional matrix initially stored in a third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

15. The method of example 9, wherein the resultant storage is a third plurality of registers that represents a plurality of output two-dimensional matrices formed by execution of the decoded single instruction.

16. The method of example 9, wherein the first proper subset of fused multiply accumulate circuits is one of a row or a column of the two-dimensional grid of fused multiply accumulate circuits and the second proper subset of fused multiply accumulate circuits is another of the one of the row or the column of the two-dimensional grid of fused multiply accumulate circuits.

Example 17. A non-transitory machine readable medium that stores code that when executed by a machine causes the machine to perform a method comprising:

decoding, with a decoder of a processor core, a single instruction into a decoded single instruction, wherein the processor core is coupled to a matrix operations accelerator circuit comprising a two-dimensional grid of fused multiply accumulate circuits, the matrix operations accelerator circuit is coupled to a first plurality of registers that represents at least one first input two-dimensional matrix and a second plurality of registers that represents at least one second input two-dimensional matrix, and the single instruction includes a field that identifies a resultant storage; and
executing the decoded single instruction with an execution circuit of the processor core to:
switch the matrix operations accelerator circuit from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from the at least one first input two-dimensional matrix and the at least one second input two-dimensional matrix, and store the output values in the resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

18. The non-transitory machine readable medium of example 17, wherein the single instruction comprises a second field indicating that the matrix operations accelerator circuit is to execute in the first mode when the second field is a first value and in the second mode when the second field is a second value.

19. The non-transitory machine readable medium of example 18, wherein the second field is an immediate of the single instruction.

20. The non-transitory machine readable medium of example 17, wherein the resultant storage is a third plurality of registers that represents at least one output two-dimensional matrix formed by execution of the decoded single instruction.

21. The non-transitory machine readable medium of example 20, wherein the executing the decoded single instruction is to:

in the first mode, add values from the third plurality of registers that represents at least one third input two-dimensional matrix initially stored in the third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

22. The non-transitory machine readable medium of example 17, wherein the executing the decoded single instruction is to:

in the first mode, add values from at least one third input two-dimensional matrix initially stored in a third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

23. The non-transitory machine readable medium of example 17, wherein the resultant storage is a third plurality of registers that represents a plurality of output two-dimensional matrices formed by execution of the decoded single instruction.

24. The non-transitory machine readable medium of example 17, wherein the first proper subset of fused multiply accumulate circuits is one of a row or a column of the two-dimensional grid of fused multiply accumulate circuits and the second proper subset of fused multiply accumulate circuits is another of the one of the row or the column of the two-dimensional grid of fused multiply accumulate circuits.

In yet another embodiment, an apparatus comprises a data storage device that stores code that when executed by a hardware processor causes the hardware processor to perform any method disclosed herein. An apparatus may be as described in the detailed description. A method may be as described in the detailed description.

DETAILED EXEMPLARY SYSTEMS, PROCESSORS, AND EMULATION

Detailed herein are examples of hardware, software, etc. to execute the above described instructions. For example, what is described below details aspects of instruction execution including various pipeline stages such as fetch, decode, schedule, execute, retire, etc.

INSTRUCTION SETS

An instruction set may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or subformats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. A set of SIMD extensions referred to as the Advanced Vector Extensions (AVX) (AVX1 and AVX2) and using the Vector Extensions (VEX) coding scheme has been released and/or published (e.g., see Intel® 64 and IA-32 Architectures Software Developer's Manual, November 2018; and see Intel® Architecture Instruction Set Extensions Programming Reference, October 2018).

Exemplary Instruction Formats

Embodiments of the instruction(s) described herein may be embodied in different formats. Additionally, exemplary systems, architectures, and pipelines are detailed below. Embodiments of the instruction(s) may be executed on such systems, architectures, and pipelines, but are not limited to those detailed.

Generic Vector Friendly Instruction Format

A vector friendly instruction format is an instruction format that is suited for vector instructions (e.g., there are certain fields specific to vector operations). While embodiments are described in which both vector and scalar operations are supported through the vector friendly instruction format, alternative embodiments use only vector operations the vector friendly instruction format.

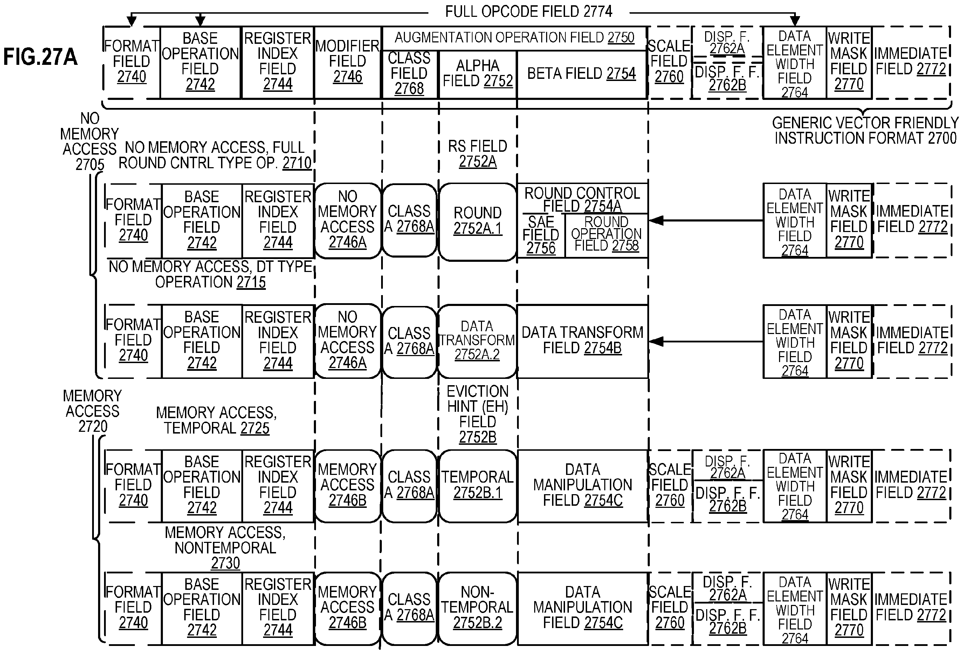

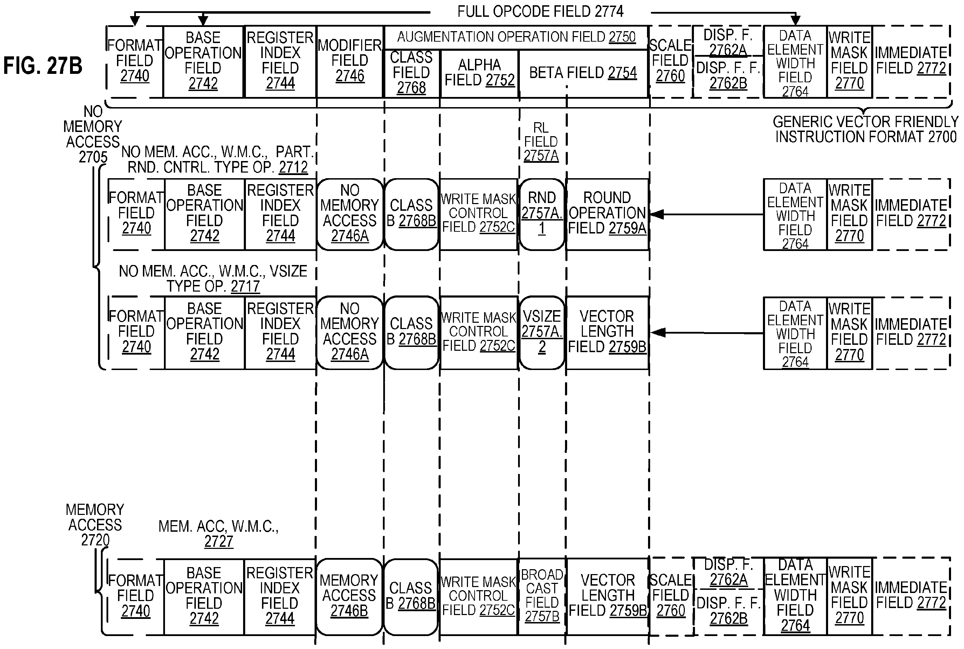

Figures 27A-27B are block diagrams illustrating a generic vector friendly instruction format and instruction templates thereof according to embodiments of the disclosure. Figure 27A is a block diagram illustrating a generic vector friendly instruction format and class A instruction templates thereof according to embodiments of the disclosure; while Figure 27B is a block diagram illustrating the generic vector friendly instruction format and class B instruction templates thereof according to embodiments of the disclosure. Specifically, a generic vector friendly instruction format 2700 for which are defined class A and class B instruction templates, both of which include no memory access 2705 instruction templates and memory access 2720 instruction templates. The term generic in the context of the vector friendly instruction format refers to the instruction format not being tied to any specific instruction set.

While embodiments of the disclosure will be described in which the vector friendly instruction format supports the following: a 64 byte vector operand length (or size) with 32 bit (4 byte) or 64 bit (8 byte) data element widths (or sizes) (and thus, a 64 byte vector consists of either 16 doubleword-size elements or alternatively, 8 quadword-size elements); a 64 byte vector operand length (or size) with 16 bit (2 byte) or 8 bit (1 byte) data element widths (or sizes); a 32 byte vector operand length (or size) with 32 bit (4 byte), 64 bit (8 byte), 16 bit (2 byte), or 8 bit (1 byte) data element widths (or sizes); and a 16 byte vector operand length (or size) with 32 bit (4 byte), 64 bit (8 byte), 16 bit (2 byte), or 8 bit (1 byte) data element widths (or sizes); alternative embodiments may support more, less and/or different vector operand sizes (e.g., 256 byte vector operands) with more, less, or different data element widths (e.g., 128 bit (16 byte) data element widths).

The class A instruction templates in Figure 27A include: 1) within the no memory access 2705 instruction templates there is shown a no memory access, full round control type operation 2710 instruction template and a no memory access, data transform type operation 2715 instruction template; and 2) within the memory access 2720 instruction templates there is shown a memory access, temporal 2725 instruction template and a memory access, non-temporal 2730 instruction template. The class B instruction templates in Figure 27B include: 1) within the no memory access 2705 instruction templates there is shown a no memory access, write mask control, partial round control type operation 2712 instruction template and a no memory access, write mask control, vsize type operation 2717 instruction template; and 2) within the memory access 2720 instruction templates there is shown a memory access, write mask control 2727 instruction template.

The generic vector friendly instruction format 2700 includes the following fields listed below in the order illustrated in Figures 27A-27B.

Format field 2740 - a specific value (an instruction format identifier value) in this field uniquely identifies the vector friendly instruction format, and thus occurrences of instructions in the vector friendly instruction format in instruction streams. As such, this field is optional in the sense that it is not needed for an instruction set that has only the generic vector friendly instruction format.

Base operation field 2742 - its content distinguishes different base operations.

Register index field 2744 - its content, directly or through address generation, specifies the locations of the source and destination operands, be they in registers or in memory. These include a sufficient number of bits to select N registers from a PxQ (e.g. 32x512, 16x128, 32x1024, 64x1024) register file. While in one embodiment N may be up to three sources and one destination register, alternative embodiments may support more or less sources and destination registers (e.g., may support up to two sources where one of these sources also acts as the destination, may support up to three sources where one of these sources also acts as the destination, may support up to two sources and one destination).

Modifier field 2746 - its content distinguishes occurrences of instructions in the generic vector instruction format that specify memory access from those that do not; that is, between no memory access 2705 instruction templates and memory access 2720 instruction templates. Memory access operations read and/or write to the memory hierarchy (in some cases specifying the source and/or destination addresses using values in registers), while non-memory access operations do not (e.g., the source and destinations are registers). While in one embodiment this field also selects between three different ways to perform memory address calculations, alternative embodiments may support more, less, or different ways to perform memory address calculations.

Augmentation operation field 2750 - its content distinguishes which one of a variety of different operations to be performed in addition to the base operation. This field is context specific. In one embodiment of the disclosure, this field is divided into a class field 2768, an alpha field 2752, and a beta field 2754. The augmentation operation field 2750 allows common groups of operations to be performed in a single instruction rather than 2, 3, or 4 instructions.

Scale field 2760 - its content allows for the scaling of the index field's content for memory address generation (e.g., for address generation that uses $2^{scale}$ * index + base).

Displacement Field 2762A- its content is used as part of memory address generation (e.g., for address generation that uses $2^{scale}$ * index + base + displacement).

Displacement Factor Field 2762B (note that the juxtaposition of displacement field 2762A directly over displacement factor field 2762B indicates one or the other is used) - its content is used as part of address generation; it specifies a displacement factor that is to be scaled by the size of a memory access (N) - where N is the number of bytes in the memory access (e.g., for address generation that uses $2^{scale}$ * index + base + scaled displacement). Redundant low-order bits are ignored and hence, the displacement factor field's content is multiplied by the memory operands total size (N) in order to generate the final displacement to be used in calculating an effective address. The value of N is determined by the processor hardware at runtime based on the full opcode field 2774 (described later herein) and the data manipulation field 2754C. The displacement field 2762A and the displacement factor field 2762B are optional in the sense that they are not used for the no memory access 2705 instruction templates and/or different embodiments may implement only one or none of the two.

Data element width field 2764 - its content distinguishes which one of a number of data element widths is to be used (in some embodiments for all instructions; in other embodiments for only some of the instructions). This field is optional in the sense that it is not needed if only one data element width is supported and/or data element widths are supported using some aspect of the opcodes.

Write mask field 2770 - its content controls, on a per data element position basis, whether that data element position in the destination vector operand reflects the result of the base operation and augmentation operation. Class A instruction templates support merging-writemasking, while class B instruction templates support both merging- and zeroing-writemasking. When merging, vector masks allow any set of elements in the destination to be protected from updates during the execution of any operation (specified by the base operation and the augmentation operation); in other one embodiment, preserving the old value of each element of the destination where the corresponding mask bit has a 0. In contrast, when zeroing vector masks allow any set of elements in the destination to be zeroed during the execution of any operation (specified by the base operation and the augmentation operation); in one embodiment, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the write mask field 2770 allows for partial vector operations, including loads, stores, arithmetic, logical, etc. While embodiments of the disclosure are described in which the write mask field's 2770 content selects one of a number of write mask registers that contains the write mask to be used (and thus the write mask field's 2770 content indirectly identifies that masking to be performed), alternative embodiments instead or additional allow the mask write field's 2770 content to directly specify the masking to be performed.

Immediate field 2772 - its content allows for the specification of an immediate. This field is optional in the sense that is it not present in an implementation of the generic vector friendly format that does not support immediate and it is not present in instructions that do not use an immediate.

Class field 2768 - its content distinguishes between different classes of instructions. With reference to Figures 27A-B, the contents of this field select between class A and class B instructions. In Figures 27A-B, rounded corner squares are used to indicate a specific value is present in a field (e.g., class A 2768A and class B 2768B for the class field 2768 respectively in Figures 27A-B).

Instruction Templates of Class A

In the case of the non-memory access 2705 instruction templates of class A, the alpha field 2752 is interpreted as an RS field 2752A, whose content distinguishes which one of the different augmentation operation types are to be performed (e.g., round 2752A. 1 and data transform 2752A.2 are respectively specified for the no memory access, round type operation 2710 and the no memory access, data transform type operation 2715 instruction templates), while the beta field 2754 distinguishes which of the operations of the specified type is to be performed. In the no memory access 2705 instruction templates, the scale field 2760, the displacement field 2762A, and the displacement scale filed 2762B are not present.

No-Memory Access Instruction Templates - Full Round Control Type Operation

In the no memory access full round control type operation 2710 instruction template, the beta field 2754 is interpreted as a round control field 2754A, whose content(s) provide static rounding. While in the described embodiments of the disclosure the round control field 2754A includes a suppress all floating point exceptions (SAE) field 2756 and a round operation control field 2758, alternative embodiments may support may encode both these concepts into the same field or only have one or the other of these concepts/fields (e.g., may have only the round operation control field 2758).
SAE field 2756 - its content distinguishes whether or not to disable the exception event reporting; when the SAE field's 2756 content indicates suppression is enabled, a given instruction does not report any kind of floating-point exception flag and does not raise any floating point exception handler.
Round operation control field 2758 - its content distinguishes which one of a group of rounding operations to perform (e.g., Round-up, Round-down, Round-towards-zero and Round-to-nearest). Thus, the round operation control field 2758 allows for the changing of the rounding mode on a per instruction basis. In one embodiment of the disclosure where a processor includes a control register for specifying rounding modes, the round operation control field's 2750 content overrides that register value.

No Memory Access Instruction Templates - Data Transform Type Operation

In the no memory access data transform type operation 2715 instruction template, the beta field 2754 is interpreted as a data transform field 2754B, whose content distinguishes which one of a number of data transforms is to be performed (e.g., no data transform, swizzle, broadcast).
In the case of a memory access 2720 instruction template of class A, the alpha field 2752 is interpreted as an eviction hint field 2752B, whose content distinguishes which one of the eviction hints is to be used (in Figure 27A, temporal 2752B.1 and non-temporal 2752B.2 are respectively specified for the memory access, temporal 2725 instruction template and the memory access, non-temporal 2730 instruction template), while the beta field 2754 is interpreted as a data manipulation field 2754C, whose content distinguishes which one of a number of data manipulation operations (also known as primitives) is to be performed (e.g., no manipulation; broadcast; up conversion of a source; and down conversion of a destination). The memory access 2720 instruction templates include the scale field 2760, and optionally the displacement field 2762A or the displacement scale field 2762B.
Vector memory instructions perform vector loads from and vector stores to memory, with conversion support. As with regular vector instructions, vector memory instructions transfer data from/to memory in a data element-wise fashion, with the elements that are actually transferred is dictated by the contents of the vector mask that is selected as the write mask.

Memory Access Instruction Templates - Temporal

Temporal data is data likely to be reused soon enough to benefit from caching. This is, however, a hint, and different processors may implement it in different ways, including ignoring the hint entirely.

Memory Access Instruction Templates - Non-Temporal

Non-temporal data is data unlikely to be reused soon enough to benefit from caching in the 1st-level cache and should be given priority for eviction. This is, however, a hint, and different processors may implement it in different ways, including ignoring the hint entirely.

Instruction Templates of Class B

In the case of the instruction templates of class B, the alpha field 2752 is interpreted as a write mask control (Z) field 2752C, whose content distinguishes whether the write masking controlled by the write mask field 2770 should be a merging or a zeroing.

In the case of the non-memory access 2705 instruction templates of class B, part of the beta field 2754 is interpreted as an RL field 2757A, whose content distinguishes which one of the different augmentation operation types are to be performed (e.g., round 2757A. 1 and vector length (VSIZE) 2757A.2 are respectively specified for the no memory access, write mask control, partial round control type operation 2712 instruction template and the no memory access, write mask control, VSIZE type operation 2717 instruction template), while the rest of the beta field 2754 distinguishes which of the operations of the specified type is to be performed. In the no memory access 2705 instruction templates, the scale field 2760, the displacement field 2762A, and the displacement scale filed 2762B are not present.

In the no memory access, write mask control, partial round control type operation 2710 instruction template, the rest of the beta field 2754 is interpreted as a round operation field 2759A and exception event reporting is disabled (a given instruction does not report any kind of floating-point exception flag and does not raise any floating point exception handler).

Round operation control field 2759A - just as round operation control field 2758, its content distinguishes which one of a group of rounding operations to perform (e.g., Round-up, Round-down, Round-towards-zero and Round-to-nearest). Thus, the round operation control field 2759A allows for the changing of the rounding mode on a per instruction basis. In one embodiment of the disclosure where a processor includes a control register for specifying rounding modes, the round operation control field's 2750 content overrides that register value.

In the no memory access, write mask control, VSIZE type operation 2717 instruction template, the rest of the beta field 2754 is interpreted as a vector length field 2759B, whose content distinguishes which one of a number of data vector lengths is to be performed on (e.g., 128, 256, or 512 byte).

In the case of a memory access 2720 instruction template of class B, part of the beta field 2754 is interpreted as a broadcast field 2757B, whose content distinguishes whether or not the broadcast type data manipulation operation is to be performed, while the rest of the beta field 2754 is interpreted the vector length field 2759B. The memory access 2720 instruction templates include the scale field 2760, and optionally the displacement field 2762A or the displacement scale field 2762B.

With regard to the generic vector friendly instruction format 2700, a full opcode field 2774 is shown including the format field 2740, the base operation field 2742, and the data element width field 2764. While one embodiment is shown where the full opcode field 2774 includes all of these fields, the full opcode field 2774 includes less than all of these fields in embodiments that do not support all of them. The full opcode field 2774 provides the operation code (opcode).

The augmentation operation field 2750, the data element width field 2764, and the write mask field 2770 allow these features to be specified on a per instruction basis in the generic vector friendly instruction format.

The combination of write mask field and data element width field create typed instructions in that they allow the mask to be applied based on different data element widths.

The various instruction templates found within class A and class B are beneficial in different situations. In some embodiments of the disclosure, different processors or different cores within a processor may support only class A, only class B, or both classes. For instance, a high performance general purpose out-of-order core intended for general-purpose computing may support only class B, a core intended primarily for graphics and/or scientific (throughput) computing may support only class A, and a core intended for both may support both (of course, a core that has some mix of templates and instructions from both classes but not all templates and instructions from both classes is within the purview of the disclosure). Also, a single processor may include multiple cores, all of which support the same class or in which different cores support different class. For instance, in a processor with separate graphics and general purpose cores, one of the graphics cores intended primarily for graphics and/or scientific computing may support only class A, while one or more of the general purpose cores may be high performance general purpose cores with out of order execution and register renaming intended for general-purpose computing that support only class B. Another processor that does not have a separate graphics core, may include one more general purpose in-order or out-of-order cores that support both class A and class B. Of course, features from one class may also be implement in the other class in different embodiments of the disclosure. Programs written in a high level language would be put (e.g., just in time compiled or statically compiled) into an variety of different executable forms, including: 1) a form having only instructions of the class(es) supported by the target processor for execution; or 2) a form having alternative routines written using different combinations of the instructions of all classes and having control flow code that selects the routines to execute based on the instructions supported by the processor which is currently executing the code.

Exemplary Specific Vector Friendly Instruction Format

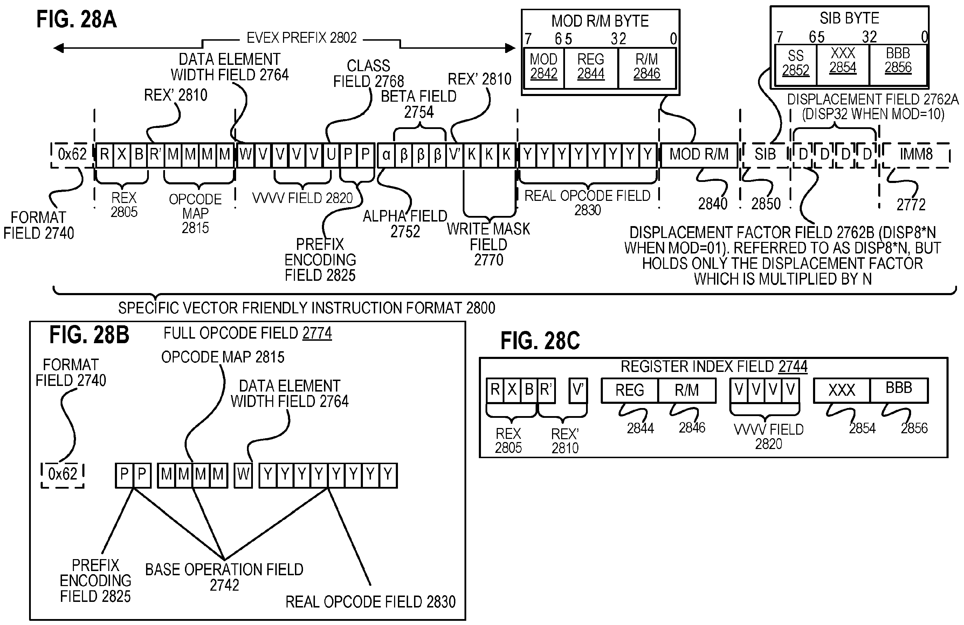

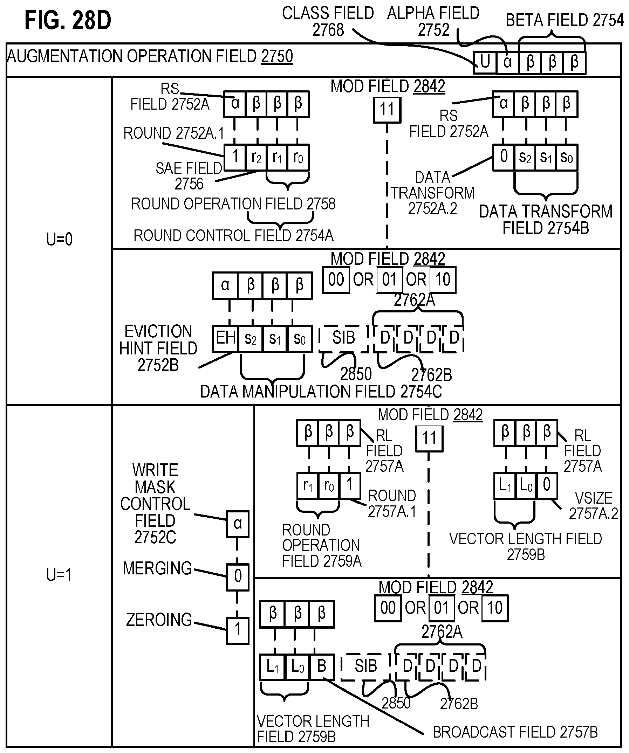

Figure 28 is a block diagram illustrating an exemplary specific vector friendly instruction format according to embodiments of the disclosure. Figure 28 shows a specific vector friendly instruction format 2800 that is specific in the sense that it specifies the location, size, interpretation, and order of the fields, as well as values for some of those fields. The specific vector friendly instruction format 2800 may be used to extend the x86 instruction set, and thus some of the fields are similar or the same as those used in the existing x86 instruction set and extension thereof (e.g., AVX). This format remains consistent with the prefix encoding field, real opcode byte field, MOD R/M field, SIB field, displacement field, and immediate fields of the existing x86 instruction set with extensions. The fields from Figure 27 into which the fields from Figure 28 map are illustrated.

It should be understood that, although embodiments of the disclosure are described with reference to the specific vector friendly instruction format 2800 in the context of the generic vector friendly instruction format 2700 for illustrative purposes, the disclosure is not limited to the specific vector friendly instruction format 2800 except where claimed. For example, the generic vector friendly instruction format 2700 contemplates a variety of possible sizes for the various fields, while the specific vector friendly instruction format 2800 is shown as having fields of specific sizes. By way of specific example, while the data element width field 2764 is illustrated as a one bit field in the specific vector friendly instruction format 2800, the disclosure is not so limited (that is, the generic vector friendly instruction format 2700 contemplates other sizes of the data element width field 2764).

The generic vector friendly instruction format 2700 includes the following fields listed below in the order illustrated in Figure 28A.

EVEX Prefix (Bytes 0-3) 2802 - is encoded in a four-byte form.

Format Field 2740 (EVEX Byte 0, bits [7:0]) - the first byte (EVEX Byte 0) is the format field 2740 and it contains 0x62 (the unique value used for distinguishing the vector friendly instruction format in one embodiment of the disclosure).

The second-fourth bytes (EVEX Bytes 1-3) include a number of bit fields providing specific capability.

REX field 2805 (EVEX Byte 1, bits [7-5]) - consists of a EVEX.R bit field (EVEX Byte 1, bit [7] - R), EVEX.X bit field (EVEX byte 1, bit [6] - X), and 2757BEX byte 1, bit[5] - B). The EVEX.R, EVEX.X, and EVEX.B bit fields provide the same functionality as the corresponding VEX bit fields, and are encoded using Is complement form, i.e. ZMM0 is encoded as 1111B, ZMM15 is encoded as 0000B. Other fields of the instructions encode the lower three bits of the register indexes as is known in the art (rrr, xxx, and bbb), so that Rrrr, Xxxx, and Bbbb may be formed by adding EVEX.R, EVEX.X, and EVEX.B.

REX' field 2710 - this is the first part of the REX' field 2710 and is the EVEX.R' bit field (EVEX Byte 1, bit [4] - R') that is used to encode either the upper 16 or lower 16 of the extended 32 register set. In one embodiment of the disclosure, this bit, along with others as indicated below, is stored in bit inverted format to distinguish (in the well-known x86 32-bit mode) from the BOUND instruction, whose real opcode byte is 62, but does not accept in the MOD R/M field (described below) the value of 11 in the MOD field; alternative embodiments of the disclosure do not store this and the other indicated bits below in the inverted format. A value of 1 is used to encode the lower 16 registers. In other words, R'Rrrr is formed by combining EVEX.R', EVEX.R, and the other RRR from other fields.

Opcode map field 2815 (EVEX byte 1, bits [3:0] - mmmm) - its content encodes an implied leading opcode byte (0F, OF 38, or OF 3).

Data element width field 2764 (EVEX byte 2, bit [7] - W) - is represented by the notation EVEX.W. EVEX.W is used to define the granularity (size) of the datatype (either 32-bit data elements or 64-bit data elements).

EVEX.vwv 2820 (EVEX Byte 2, bits [6:3]-vvvv)- the role of EVEX.vvvv may include the following: 1) EVEX.vvvv encodes the first source register operand, specified in inverted (Is complement) form and is valid for instructions with 2 or more source operands; 2) EVEX.vvvv encodes the destination register operand, specified in Is complement form for certain vector shifts; or 3) EVEX.vvvv does not encode any operand, the field is reserved and should contain 1111b. Thus, EVEX.vvvv field 2820 encodes the 4 low-order bits of the first source register specifier stored in inverted (Is complement) form. Depending on the instruction, an extra different EVEX bit field is used to extend the specifier size to 32 registers.

EVEX.U 2768 Class field (EVEX byte 2, bit [2]-U) - If EVEX.U = 0, it indicates class A or EVEX.U0; if EVEX.U = 1, it indicates class B or EVEX.U1.

Prefix encoding field 2825 (EVEX byte 2, bits [1:0]-pp) - provides additional bits for the base operation field. In addition to providing support for the legacy SSE instructions in the EVEX prefix format, this also has the benefit of compacting the SIMD prefix (rather than requiring a byte to express the SIMD prefix, the EVEX prefix requires only 2 bits). In one embodiment, to support legacy SSE instructions that use a SIMD prefix (66H, F2H, F3H) in both the legacy format and in the EVEX prefix format, these legacy SIMD prefixes are encoded into the SIMD prefix encoding field; and at runtime are expanded into the legacy SIMD prefix prior to being provided to the decode circuit's PLA (so the PLA can execute both the legacy and EVEX format of these legacy instructions without modification). Although newer instructions could use the EVEX prefix encoding field's content directly as an opcode extension, certain embodiments expand in a similar fashion for consistency but allow for different meanings to be specified by these legacy SIMD prefixes. An alternative embodiment may redesign the PLA to support the 2 bit SIMD prefix encodings, and thus not require the expansion.

Alpha field 2752 (EVEX byte 3, bit [7] - EH; also known as EVEX.EH, EVEX.rs, EVEX.RL, EVEX.write mask control, and EVEX.N; also illustrated with α) - as previously described, this field is context specific.

Beta field 2754 (EVEX byte 3, bits [6:4]-SSS, also known as EVEX.$s_{2-0}$, EVEX.$r_{2-0}$, EVEX.rr1, EVEX.LL0, EVEX.LLB; also illustrated with βββ) - as previously described, this field is context specific.

REX' field 2710 - this is the remainder of the REX' field and is the EVEX.V' bit field (EVEX Byte 3, bit [3] - V') that may be used to encode either the upper 16 or lower 16 of the extended 32 register set. This bit is stored in bit inverted format. A value of 1 is used to encode the lower 16 registers. In other words, V'VVVV is formed by combining EVEX.V', EVEX.vvvv.

Write mask field 2770 (EVEX byte 3, bits [2:0]-kkk) - its content specifies the index of a register in the write mask registers as previously described. In one embodiment of the disclosure, the specific value EVEX.kkk=000 has a special behavior implying no write mask is used for the particular instruction (this may be implemented in a variety of ways including the use of a write mask hardwired to all ones or hardware that bypasses the masking hardware).

Real Opcode Field 2830 (Byte 4) is also known as the opcode byte. Part of the opcode is specified in this field.

MOD R/M Field 2840 (Byte 5) includes MOD field 2842, Reg field 2844, and R/M field 2846. As previously described, the MOD field's 2842 content distinguishes between memory access and non-memory access operations. The role of Reg field 2844 can be summarized to two situations: encoding either the destination register operand or a source register operand, or be treated as an opcode extension and not used to encode any instruction operand. The role of R/M field 2846 may include the following: encoding the instruction operand that references a memory address, or encoding either the destination register operand or a source register operand.

Scale, Index, Base (SIB) Byte (Byte 6) - As previously described, the scale field's 2750 content is used for memory address generation. SIB.xxx 2854 and SIB.bbb 2856 - the contents of these fields have been previously referred to with regard to the register indexes Xxxx and Bbbb.

Displacement field 2762A (Bytes 7-10) - when MOD field 2842 contains 10, bytes 7-10 are the displacement field 2762A, and it works the same as the legacy 32-bit displacement (disp32) and works at byte granularity.

Displacement factor field 2762B (Byte 7) - when MOD field 2842 contains 01, byte 7 is the displacement factor field 2762B. The location of this field is that same as that of the legacy x86 instruction set 8-bit displacement (disp8), which works at byte granularity. Since disp8 is sign extended, it can only address between -128 and 127 bytes offsets; in terms of 64 byte cache lines, disp8 uses 8 bits that can be set to only four really useful values -128, -64, 0, and 64; since a greater range is often needed, disp32 is used; however, disp32 requires 4 bytes. In contrast to disp8 and disp32, the displacement factor field 2762B is a reinterpretation of disp8; when using displacement factor field 2762B, the actual displacement is determined by the content of the displacement factor field multiplied by the size of the memory operand access (N). This type of displacement is referred to as disp8*N. This reduces the average instruction length (a single byte of used for the displacement but with a much greater range). Such compressed displacement is based on the assumption that the effective displacement is multiple of the granularity of the memory access, and hence, the redundant low-order bits of the address offset do not need to be encoded. In other words, the displacement factor field 2762B substitutes the legacy x86 instruction set 8-bit displacement. Thus, the displacement factor field 2762B is encoded the same way as an x86 instruction set 8-bit displacement (so no changes in the ModRM/SIB encoding rules) with the only exception that disp8 is overloaded to disp8*N. In other words, there are no changes in the encoding rules or encoding lengths but only in the interpretation of the displacement value by hardware (which needs to scale the displacement by the size of the memory operand to obtain a byte-wise address offset). Immediate field 2772 operates as previously described.

Full Opcode Field

Figure 28B is a block diagram illustrating the fields of the specific vector friendly instruction format 2800 that make up the full opcode field 2774 according to one embodiment of the disclosure. Specifically, the full opcode field 2774 includes the format field 2740, the base operation field 2742, and the data element width (W) field 2764. The base operation field 2742 includes the prefix encoding field 2825, the opcode map field 2815, and the real opcode field 2830.

Register Index Field

Figure 28C is a block diagram illustrating the fields of the specific vector friendly instruction format 2800 that make up the register index field 2744 according to one embodiment of the disclosure. Specifically, the register index field 2744 includes the REX field 2805, the REX' field 2810, the MODR/M.reg field 2844, the MODR/M.r/m field 2846, the VVVV field 2820, xxx field 2854, and the bbb field 2856.

Augmentation Operation Field

Figure 28D is a block diagram illustrating the fields of the specific vector friendly instruction format 2800 that make up the augmentation operation field 2750 according to one embodiment of the disclosure. When the class (U) field 2768 contains 0, it signifies EVEX.U0 (class A 2768A); when it contains 1, it signifies EVEX.U1 (class B 2768B). When U=0 and the MOD field 2842 contains 11 (signifying a no memory access operation), the alpha field 2752 (EVEX byte 3, bit [7] - EH) is interpreted as the rs field 2752A. When the rs field 2752A contains a 1 (round 2752A.1), the beta field 2754 (EVEX byte 3, bits [6:4]- SSS) is interpreted as the round control field 2754A. The round control field 2754A includes a one bit SAE field 2756 and a two bit round operation field 2758. When the rs field 2752A contains a 0 (data transform 2752A.2), the beta field 2754 (EVEX byte 3, bits [6:4]- SSS) is interpreted as a three bit data transform field 2754B. When U=0 and the MOD field 2842 contains 00, 01, or 10 (signifying a memory access operation), the alpha field 2752 (EVEX byte 3, bit [7] - EH) is interpreted as the eviction hint (EH) field 2752B and the beta field 2754 (EVEX byte 3, bits [6:4]- SSS) is interpreted as a three bit data manipulation field 2754C.

When U=1, the alpha field 2752 (EVEX byte 3, bit [7] - EH) is interpreted as the write mask control (Z) field 2752C. When U=1 and the MOD field 2842 contains 11 (signifying a no memory access operation), part of the beta field 2754 (EVEX byte 3, bit [4]- So) is interpreted as the RL field 2757A; when it contains a 1 (round 2757A. 1) the rest of the beta field 2754 (EVEX byte 3, bit [6-5]- $S_{2-1}$) is interpreted as the round operation field 2759A, while when the RL field 2757A contains a 0 (VSIZE 2757.A2) the rest of the beta field 2754 (EVEX byte 3, bit [6-5]- $S_{2-1}$) is interpreted as the vector length field 2759B (EVEX byte 3, bit [6-5]- $L_{1-0}$). When U=1 and the MOD field 2842 contains 00, 01, or 10 (signifying a memory access operation), the beta field 2754 (EVEX byte 3, bits [6:4]- SSS) is interpreted as the vector length field 2759B (EVEX byte 3, bit [6-5]- $L_{1-0}$) and the broadcast field 2757B (EVEX byte 3, bit [4]-B).

Exemplary Register Architecture

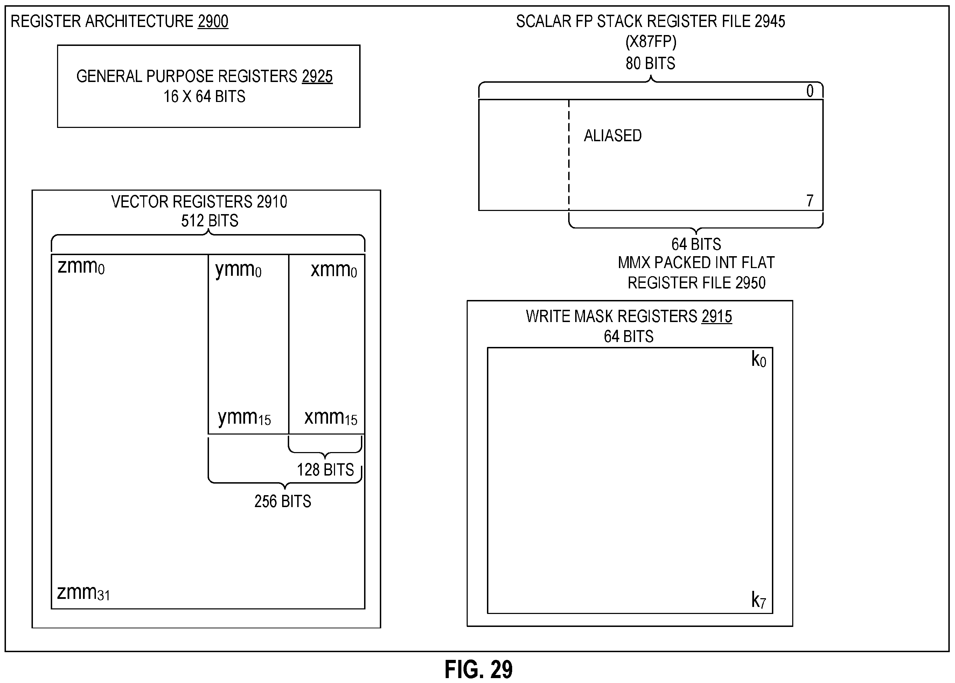

Figure 29 is a block diagram of a register architecture 2900 according to one embodiment of the disclosure. In the embodiment illustrated, there are 32 vector registers 2910 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15. The specific vector friendly instruction format 2800 operates on these overlaid register file as illustrated in the below tables.

| Adjustable Vector Length | Class | Operations | Registers |
|---|---|---|---|
| Instruction Templates that do not include the vector length field 2759B | A (Figure 27A; U=0) | 2710, 2715, 2725, 2730 | zmm registers (the vector length is 64 byte) |
| | B (Figure 27B; U=1) | 2712 | zmm registers (the vector length is 64 byte) |
| Instruction templates that do include the vector length field 2759B | B (Figure 27B; U=1) | 2717, 2727 | zmm, ymm, or xmm registers (the vector length is 64 byte, 32 byte, or 16 byte) depending on the vector length field 2759B |

In other words, the vector length field 2759B selects between a maximum length and one or more other shorter lengths, where each such shorter length is half the length of the preceding length; and instructions templates without the vector length field 2759B operate on the maximum vector length. Further, in one embodiment, the class B instruction templates of the specific vector friendly instruction format 2800 operate on packed or scalar single/double-precision floating point data and packed or scalar integer data. Scalar operations are operations performed on the lowest order data element position in an zmm/ymm/xmm register; the higher order data element positions are either left the same as they were prior to the instruction or zeroed depending on the embodiment.

Write mask registers 2915 - in the embodiment illustrated, there are 8 write mask registers (k0 through k7), each 64 bits in size. In an alternate embodiment, the write mask registers 2915 are 16 bits in size. As previously described, in one embodiment of the disclosure, the vector mask register k0 cannot be used as a write mask; when the encoding that would normally indicate k0 is used for a write mask, it selects a hardwired write mask of 0xFFFF, effectively disabling write masking for that instruction.

General-purpose registers 2925 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 2945, on which is aliased the MMX packed integer flat register file 2950 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the disclosure may use wider or narrower registers. Additionally, alternative embodiments of the disclosure may use more, less, or different register files and registers.

Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

Exemplary Core Architectures

In-order and out-of-order core block diagram

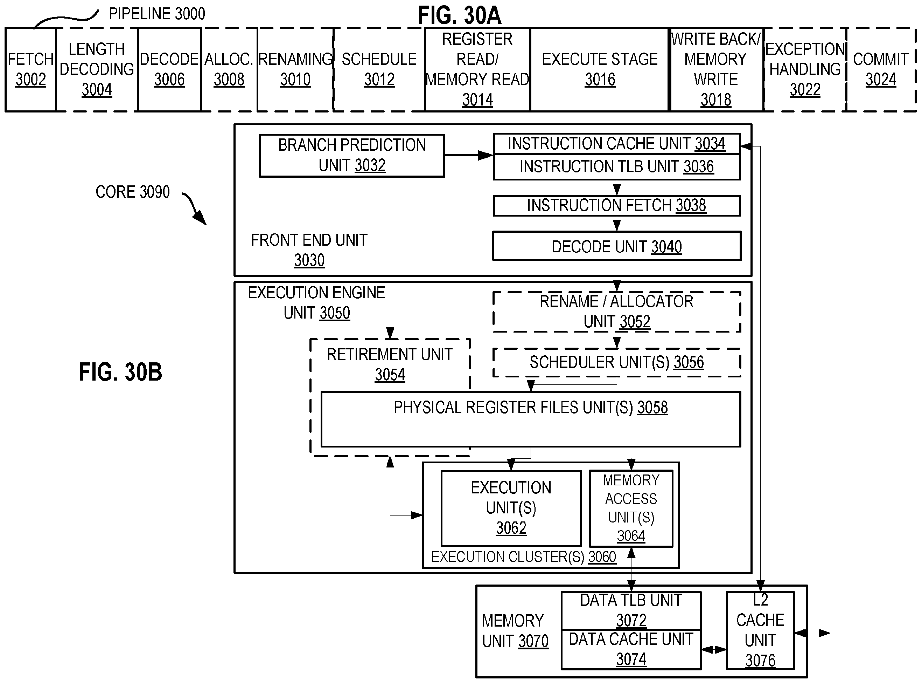

Figure 30A is a block diagram illustrating both an exemplary in-order pipeline and an exemplary register renaming, out-of-order issue/execution pipeline according to embodiments of the disclosure. Figure 30B is a block diagram illustrating both an exemplary embodiment of an in-order architecture core and an exemplary register renaming, out-of-order issue/execution architecture core to be included in a processor according to embodiments of the disclosure. The solid lined boxes in Figures 30A-B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In Figure 30A, a processor pipeline 3000 includes a fetch stage 3002, a length decode stage 3004, a decode stage 3006, an allocation stage 3008, a renaming stage 3010, a scheduling (also known as a dispatch or issue) stage 3012, a register read/memory read stage 3014, an execute stage 3016, a write back/memory write stage 3018, an exception handling stage 3022, and a commit stage 3024.

Figure 30B shows processor core 3090 including a front end unit 3030 coupled to an execution engine unit 3050, and both are coupled to a memory unit 3070. The core 3090 may be a reduced instruction set computing (RISC) core, a complex instruction set computing (CISC) core, a very long instruction word (VLIW) core, or a hybrid or alternative core type. As yet another option, the core 3090 may be a special-purpose core, such as, for example, a network or communication core, compression engine, coprocessor core, general purpose computing graphics processing unit (GPGPU) core, graphics core, or the like.

The front end unit 3030 includes a branch prediction unit 3032 coupled to an instruction cache unit 3034, which is coupled to an instruction translation lookaside buffer (TLB) 3036, which is coupled to an instruction fetch unit 3038, which is coupled to a decode unit 3040. The decode unit 3040 (e.g., decode circuit) may decode instructions (e.g., macro-instructions), and generate as an output one or more micro-operations, micro-code entry points, micro-instructions, other instructions, or other control signals, which are decoded from, or which otherwise reflect, or are derived from, the original instructions. The decode unit 3040 may be implemented using various different mechanisms. Examples of suitable mechanisms include, but are not limited to, look-up tables, hardware implementations, programmable logic arrays (PLAs), microcode read only memories (ROMs), etc. In one embodiment, the core 3090 includes a microcode ROM or other medium that stores microcode for certain macro-instructions (e.g., in decode unit 3040 or otherwise within the front end unit 3030). The decode unit 3040 is coupled to a rename/allocator unit 3052 in the execution engine unit 3050.

The execution engine unit 3050 includes the rename/allocator unit 3052 coupled to a retirement unit 3054 and a set of one or more scheduler unit(s) 3056. The scheduler unit(s) 3056 represents any number of different schedulers, including reservations stations, central instruction window, etc. The scheduler unit(s) 3056 is coupled to the physical register file(s) unit(s) 3058. Each of the physical register file(s) units 3058 represents one or more physical register files, different ones of which store one or more different data types, such as scalar integer, scalar floating point, packed integer,

packed floating point, vector integer, vector floating point,, status (e.g., an instruction pointer that is the address of the next instruction to be executed), etc. In one embodiment, the physical register file(s) unit 3058 comprises a vector registers unit, a write mask registers unit, and a scalar registers unit. These register units may provide architectural vector registers, vector mask registers, and general purpose registers. The physical register file(s) unit(s) 3058 is overlapped by the retirement unit 3054 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 3054 and the physical register file(s) unit(s) 3058 are coupled to the execution cluster(s) 3060. The execution cluster(s) 3060 includes a set of one or more execution units 3062 (e.g., execution circuits) and a set of one or more memory access units 3064. The execution units 3062 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 3056, physical register file(s) unit(s) 3058, and execution cluster(s) 3060 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 3064). It should also be understood that where separate pipelines are used, one or more of these pipelines may be out-of-order issue/execution and the rest in-order.

The set of memory access units 3064 is coupled to the memory unit 3070, which includes a data TLB unit 3072 coupled to a data cache unit 3074 coupled to a level 2 (L2) cache unit 3076. In one exemplary embodiment, the memory access units 3064 may include a load unit, a store address unit, and a store data unit, each of which is coupled to the data TLB unit 3072 in the memory unit 3070. The instruction cache unit 3034 is further coupled to a level 2 (L2) cache unit 3076 in the memory unit 3070. The L2 cache unit 3076 is coupled to one or more other levels of cache and eventually to a main memory.

By way of example, the exemplary register renaming, out-of-order issue/execution core architecture may implement the pipeline 3000 as follows: 1) the instruction fetch 3038 performs the fetch and length decoding stages 3002 and 3004; 2) the decode unit 3040 performs the decode stage 3006; 3) the rename/allocator unit 3052 performs the allocation stage 3008 and renaming stage 3010; 4) the scheduler unit(s) 3056 performs the schedule stage 3012; 5) the physical register file(s) unit(s) 3058 and the memory unit 3070 perform the register read/memory read stage 3014; the execution cluster 3060 perform the execute stage 3016; 6) the memory unit 3070 and the physical register file(s) unit(s) 3058 perform the write back/memory write stage 3018; 7) various units may be involved in the exception handling stage 3022; and 8) the retirement unit 3054 and the physical register file(s) unit(s) 3058 perform the commit stage 3024.

The core 3090 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 3090 includes logic to support a packed data instruction set extension (e.g., AVX1, AVX2), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyper-Threading technology).

While register renaming is described in the context of out-of-order execution, it should be understood that register renaming may be used in an in-order architecture. While the illustrated embodiment of the processor also includes separate instruction and data cache units 3034/3074 and a shared L2 cache unit 3076, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

Specific Exemplary In-Order Core Architecture

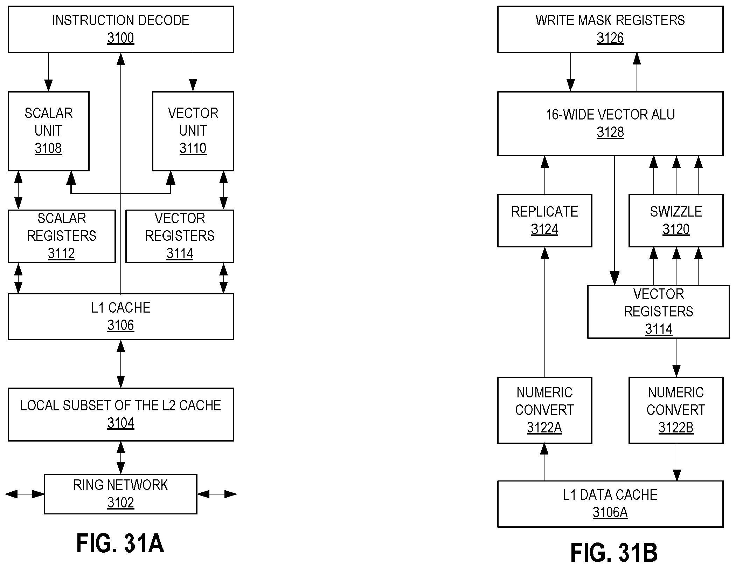

Figures 31A-B illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

Figure 31A is a block diagram of a single processor core, along with its connection to the on-die interconnect network 3102 and with its local subset of the Level 2 (L2) cache 3104, according to embodiments of the disclosure. In one embodiment, an instruction decode unit 3100 supports the x86 instruction set with a packed data instruction set extension. An L1 cache 3106 allows low-latency accesses to cache memory into the scalar and vector units. While in one embodiment (to simplify the design), a scalar unit 3108 and a vector unit 3110 use separate register sets (respectively, scalar registers 3112 and vector registers 3114) and data transferred between them is written to memory and then read back in from a level 1 (L1) cache 3106, alternative embodiments of the disclosure may use a different approach (e.g., use a single register set or include a communication path that allow data to be transferred between the two register files without being written and read back).

The local subset of the L2 cache 3104 is part of a global L2 cache that is divided into separate local subsets, one per processor core. Each processor core has a direct access path to its own local subset of the L2 cache 3104. Data read by a processor core is stored in its L2 cache subset 3104 and can be accessed quickly, in parallel with other processor cores accessing their own local L2 cache subsets. Data written by a processor core is stored in its own L2 cache subset 3104 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

Figure 31B is an expanded view of part of the processor core in Figure 31A according to embodiments of the disclosure. Figure 31B includes an L1 data cache 3106A part of the L1 cache 3104, as well as more detail regarding the vector unit 3110 and the vector registers 3114. Specifically, the vector unit 3110 is a 16-wide vector processing unit (VPU) (see the 16-wide ALU 3128), which executes one or more of integer, single-precision float, and double-precision float instructions. The VPU supports swizzling the register inputs with swizzle unit 3120, numeric conversion with numeric convert units 3122A-B, and replication with replication unit 3124 on the memory input. Write mask registers 3126 allow predicating resulting vector writes.

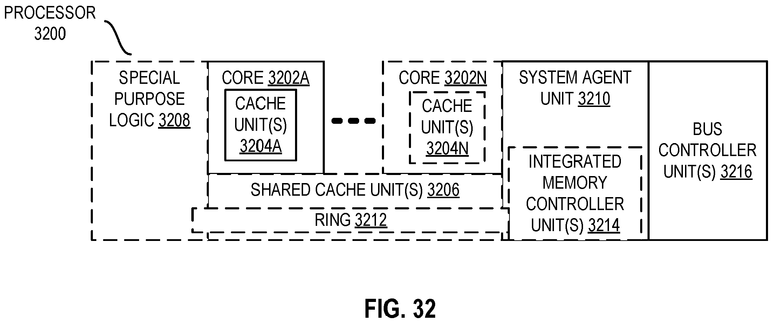

Figure 32 is a block diagram of a processor 3200 that may have more than one core, may have an integrated memory controller, and may have integrated graphics according to embodiments of the disclosure. The solid lined boxes in Figure 32 illustrate a processor 3200 with a single core 3202A, a system agent 3210, a set of one or more bus controller units 3216, while the optional addition of the dashed lined boxes illustrates an alternative processor 3200 with multiple cores 3202A-N, a set of one or more integrated memory controller unit(s) 3214 in the system agent unit 3210, and special purpose logic 3208.

Thus, different implementations of the processor 3200 may include: 1) a CPU with the special purpose logic 3208 being integrated graphics and/or scientific (throughput) logic (which may include one or more cores), and the cores 3202A-N being one or more general purpose cores (e.g., general purpose in-order cores, general purpose out-of-order cores, a combination of the two); 2) a coprocessor with the cores 3202A-N being a large number of special purpose cores intended primarily for graphics and/or scientific (throughput); and 3) a coprocessor with the cores 3202A-N being a large number of general purpose in-order cores. Thus, the processor 3200 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 3200 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 3206, and external memory (not shown) coupled to the set of integrated memory controller units 3214. The set of shared cache units 3206 may include one or more mid-level caches, such as level 2 (L2), level 3 (L3), level 4 (L4), or other levels of cache, a last level cache (LLC), and/or combinations thereof. While in one embodiment a ring based interconnect unit 3212 interconnects the integrated graphics logic 3208, the set of shared cache units 3206, and the system agent unit 3210/integrated memory controller unit(s) 3214, alternative embodiments may use any number of well-known techniques for interconnecting such units. In one embodiment, coherency is maintained between one or more cache units 3206 and cores 3202-A-N.

In some embodiments, one or more of the cores 3202A-N are capable of multithreading. The system agent 3210 includes those components coordinating and operating cores 3202A-N. The system agent unit 3210 may include for example a power control unit (PCU) and a display unit. The PCU may be or include logic and components needed for regulating the power state of the cores 3202A-N and the integrated graphics logic 3208. The display unit is for driving one or more externally connected displays.

The cores 3202A-N may be homogenous or heterogeneous in terms of architecture instruction set; that is, two or more of the cores 3202A-N may be capable of execution the same instruction set, while others may be capable of executing only a subset of that instruction set or a different instruction set.

Exemplary Computer Architectures

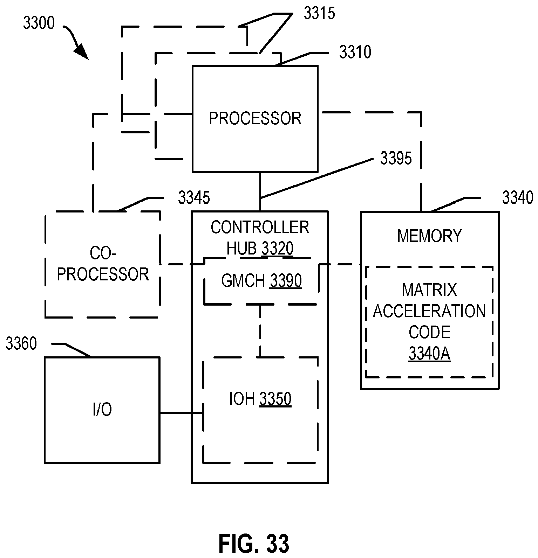

Figures 33-36 are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to Figure 33, shown is a block diagram of a system 3300 in accordance with one embodiment of the present disclosure. The system 3300 may include one or more processors 3310, 3315, which are coupled to a controller hub 3320. In one embodiment the controller hub 3320 includes a graphics memory controller hub (GMCH) 3390 and an Input/Output Hub (IOH) 3350 (which may be on separate chips); the GMCH 3390 includes memory and graphics controllers to which are coupled memory 3340 and a coprocessor 3345; the IOH 3350 is couples input/output (I/O) devices 3360 to the GMCH 3390. Alternatively, one or both of the memory and graphics controllers are integrated within the processor (as described herein), the memory 3340 and the coprocessor 3345 are coupled directly to the processor 3310, and the controller hub 3320 in a single chip with the IOH 3350. Memory 3340 may include matrix acceleration code 3340A, for example, that stores code that when executed causes a processor to perform any method of this disclosure.

The optional nature of additional processors 3315 is denoted in Figure 33 with broken lines. Each processor 3310, 3315 may include one or more of the processing cores described herein and may be some version of the processor 3200.

The memory 3340 may be, for example, dynamic random access memory (DRAM), phase change memory (PCM), or a combination of the two. For at least one embodiment, the controller hub 3320 communicates with the processor(s) 3310, 3315 via a multi-drop bus, such as a frontside bus (FSB), point-to-point interface such as Quickpath Interconnect (QPI), or similar connection 3395.

In one embodiment, the coprocessor 3345 is a special-purpose processor, such as, for example, a high-throughput MIC processor, a network or communication processor, compression engine, graphics processor, GPGPU, embedded processor, or the like. In one embodiment, controller hub 3320 may include an integrated graphics accelerator.

There can be a variety of differences between the physical resources 3310, 3315 in terms of a spectrum of metrics of merit including architectural, microarchitectural, thermal, power consumption characteristics, and the like.

In one embodiment, the processor 3310 executes instructions that control data processing operations of a general type. Embedded within the instructions may be coprocessor instructions. The processor 3310 recognizes these coprocessor instructions as being of a type that should be executed by the attached coprocessor 3345. Accordingly, the processor 3310 issues these coprocessor instructions (or control signals representing coprocessor instructions) on a coprocessor bus or other interconnect, to coprocessor 3345. Coprocessor(s) 3345 accept and execute the received coprocessor instructions.

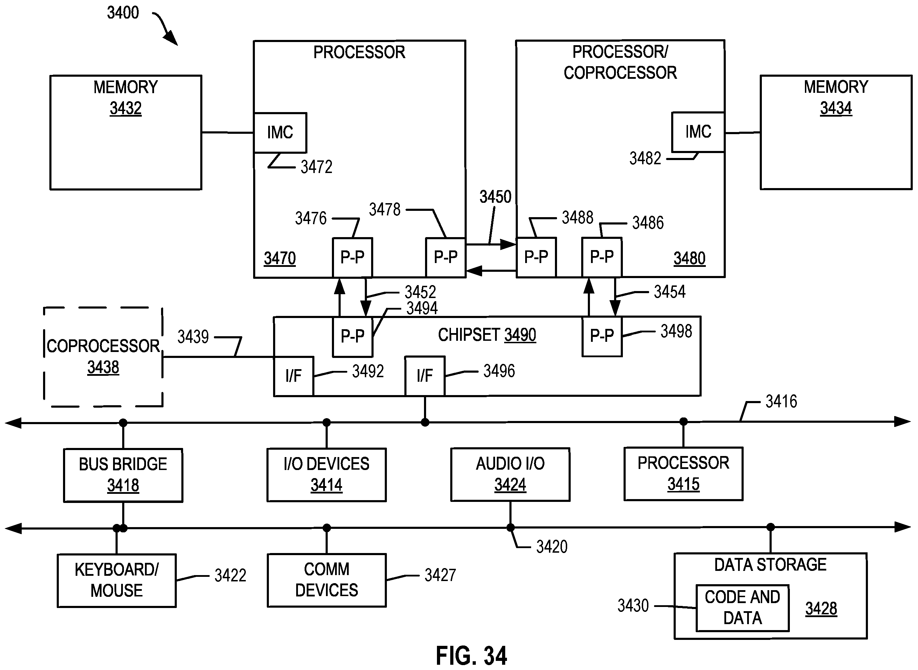

Referring now to Figure 34, shown is a block diagram of a first more specific exemplary system 3400 in accordance with an embodiment of the present disclosure. As shown in Figure 34, multiprocessor system 3400 is a point-to-point interconnect system, and includes a first processor 3470 and a second processor 3480 coupled via a point-to-point interconnect 3450. Each of processors 3470 and 3480 may be some version of the processor 3200. In one embodiment of the disclosure, processors 3470 and 3480 are respectively processors 3310 and 3315, while coprocessor 3438 is coprocessor 3345. In another embodiment, processors 3470 and 3480 are respectively processor 3310 coprocessor 3345.

Processors 3470 and 3480 are shown including integrated memory controller (IMC) units 3472 and 3482, respectively. Processor 3470 also includes as part of its bus controller units point-to-point (P-P) interfaces 3476 and 3478; similarly, second processor 3480 includes P-P interfaces 3486 and 3488. Processors 3470, 3480 may exchange information via a point-to-point (P-P) interface 3450 using P-P interface circuits 3478, 3488. As shown in Figure 34, IMCs 3472 and 3482 couple the processors to respective memories, namely a memory 3432 and a memory 3434, which may be portions of main memory locally attached to the respective processors.

Processors 3470, 3480 may each exchange information with a chipset 3490 via individual P-P interfaces 3452, 3454 using point to point interface circuits 3476, 3494, 3486, 3498. Chipset 3490 may optionally exchange information with the coprocessor 3438 via a high-performance interface 3439. In one embodiment, the coprocessor 3438 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 3490 may be coupled to a first bus 3416 via an interface 3496. In one embodiment, first bus 3416 may be a Peripheral Component Interconnect (PCI) bus, or a bus such as a PCI Express bus or another third generation I/O interconnect bus, although the scope of the present disclosure is not so limited.

As shown in Figure 34, various I/O devices 3414 may be coupled to first bus 3416, along with a bus bridge 3418 which couples first bus 3416 to a second bus 3420. In one embodiment, one or more additional processor(s) 3415, such as coprocessors, high-throughput MIC processors, GPGPU's, accelerators (such as, e.g., graphics accelerators or digital signal processing (DSP) units), field programmable gate arrays, or any other processor, are coupled to first bus 3416. In one embodiment, second bus 3420 may be a low pin count (LPC) bus. Various devices may be coupled to a second bus 3420 including, for example, a keyboard and/or mouse 3422, communication devices 3427 and a storage unit 3428 such as a disk drive or other mass storage device which may include instructions/code and data 3430, in one embodiment. Further, an audio I/O 3424 may be coupled to the second bus 3420. Note that other architectures are possible. For example, instead of the point-to-point architecture of Figure 34, a system may implement a multi-drop bus or other such architecture.

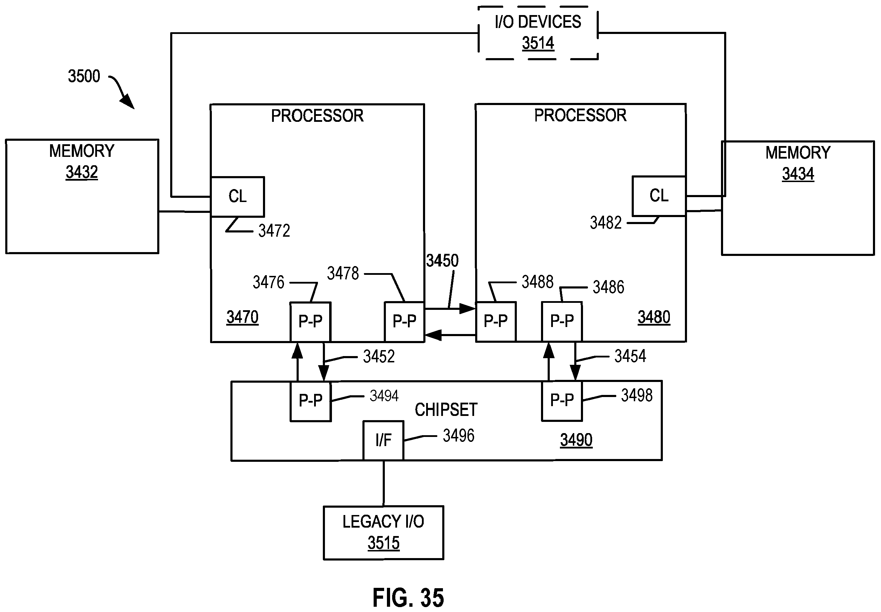

Referring now to Figure 35, shown is a block diagram of a second more specific exemplary system 3500 in accordance with an embodiment of the present disclosure. Like elements in Figures 34 and 35 bear like reference numerals, and certain aspects of Figure 34 have been omitted from Figure 35 in order to avoid obscuring other aspects of Figure 35.

Figure 35 illustrates that the processors 3470, 3480 may include integrated memory and I/O control logic ("CL") 3472 and 3482, respectively. Thus, the CL 3472, 3482 include integrated memory controller units and include I/O control logic. Figure 35 illustrates that not only are the memories 3432, 3434 coupled to the CL 3472, 3482, but also that I/O devices 3514 are also coupled to the control logic 3472, 3482. Legacy I/O devices 3515 are coupled to the chipset 3490.

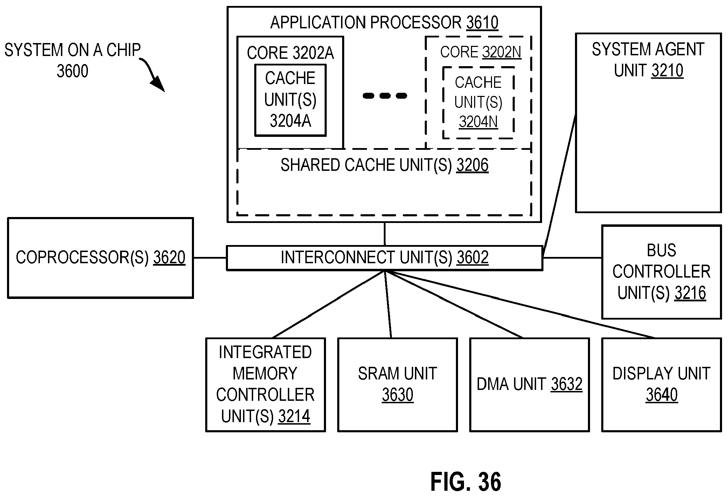

Referring now to Figure 36, shown is a block diagram of a SoC 3600 in accordance with an embodiment of the present disclosure. Similar elements in Figure 32 bear like reference numerals. Also, dashed lined boxes are optional features on more advanced SoCs. In Figure 36, an interconnect unit(s) 3602 is coupled to: an application processor 3610 which includes a set of one or more cores 202A-N and shared cache unit(s) 3206; a system agent unit 3210; a bus controller unit(s) 3216; an integrated memory controller unit(s) 3214; a set or one or more coprocessors 3620 which may include integrated graphics logic, an image processor, an audio processor, and a video processor; an static random access memory (SRAM) unit 3630; a direct memory access (DMA) unit 3632; and a display unit 3640 for coupling to one or more external displays. In one embodiment, the coprocessor(s) 3620 include a special-purpose processor, such as, for example, a network or communication processor, compression engine, GPGPU, a high-throughput MIC processor, embedded processor, or the like.

Embodiments (e.g., of the mechanisms) disclosed herein may be implemented in hardware, software, firmware, or a combination of such implementation approaches. Embodiments of the disclosure may be implemented as computer programs or program code executing on programmable systems comprising at least one processor, a storage system (including volatile and non-volatile memory and/or storage elements), at least one input device, and at least one output device.

Program code, such as code 3430 illustrated in Figure 34, may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the disclosure also include non-transitory, tangible machine-readable media containing instructions or containing design data, such as Hardware Description Language (HDL), which defines structures, circuits, apparatuses, processors and/or system features described herein. Such embodiments may also be referred to as program products.

Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

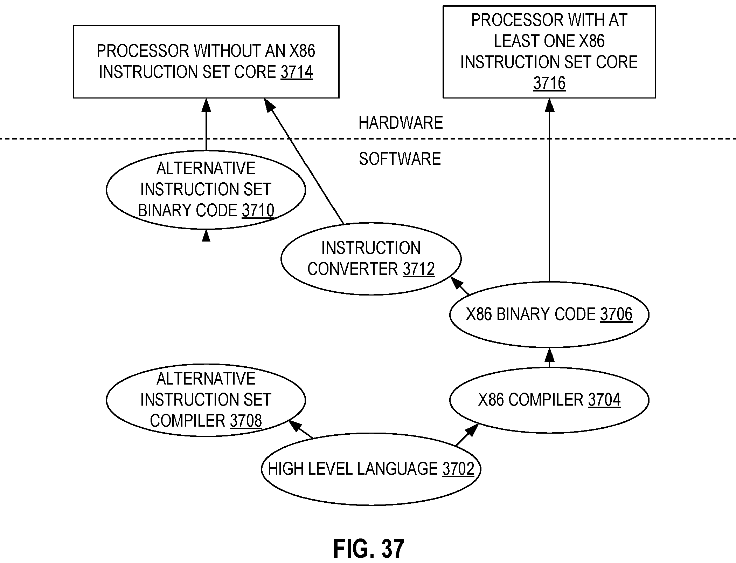

Figure 37 is a block diagram contrasting the use of a software instruction converter to convert binary instructions in a source instruction set to binary instructions in a target instruction set according to embodiments of the disclosure. In the illustrated embodiment, the instruction converter is a software instruction converter, although alternatively the instruction converter may be implemented in software, firmware, hardware, or various combinations thereof. Figure 37 shows a program in a high level language 3702 may be compiled using an x86 compiler 3704 to generate x86 binary code 3706 that may be natively executed by a processor with at least one x86 instruction set core 3716. The processor with at least one x86 instruction set core 3716 represents any processor that can perform substantially the same functions as an Intel® processor with at least one x86 instruction set core by compatibly executing or otherwise processing (1) a substantial portion of the instruction set of the Intel® x86 instruction set core or (2) object code versions of applications or other software targeted to run on an Intel® processor with at least one x86 instruction set core, in order to achieve substantially the same result as an Intel® processor with at least one x86 instruction set core. The x86 compiler 3704 represents a compiler that is operable to generate x86 binary code 3706 (e.g., object code) that can, with or without additional linkage processing, be executed on the processor with at least one x86 instruction set core 3716. Similarly, Figure 37 shows the program in the high level language 3702 may be compiled using an alternative instruction set compiler 3708 to generate alternative instruction set binary code 3710 that may be natively executed by a processor without at least one x86 instruction set core 3714 (e.g., a processor with cores that execute the MIPS instruction set of MIPS Technologies of Sunnyvale, CA and/or that execute the ARM instruction set of ARM Holdings of Sunnyvale, CA). The instruction converter 3712 is used to convert the x86 binary code 3706 into code that may be natively executed by the processor without an x86 instruction set core 3714. This converted code is not likely to be the same as the alternative instruction set binary code 3710 because an instruction converter capable of this is difficult to make; however, the converted code will accomplish the general operation and be made up of instructions from the alternative instruction set. Thus, the instruction converter 3712 represents software, firmware, hardware, or a combination thereof that, through emulation, simulation or any other process, allows a processor or other electronic device that does not have an x86 instruction set processor or core to execute the x86 binary code 3706.

**Claims**

1. An apparatus comprising:

   a matrix operations accelerator circuit comprising a two-dimensional grid of fused multiply accumulate circuits;
   a first plurality of registers that represents at least one first input two-dimensional matrix coupled to the matrix operations accelerator circuit;
   a second plurality of registers that represents at least one second input two-dimensional matrix coupled to the matrix operations accelerator circuit;
   a decoder, of a core coupled to the matrix operations accelerator circuit, to decode a single instruction into a decoded single instruction, the single instruction including a field that identifies a resultant storage; and
   an execution circuit of the core to execute the decoded single instruction to:
   switch the matrix operations accelerator circuit from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from the at least one first input two-dimensional matrix and the at least one second input two-dimensional matrix, and store the output values in the resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

2. The apparatus of claim 1, wherein the single instruction comprises a second field to indicate the matrix operations accelerator circuit is to execute in the first mode when the second field is a first value and in the second mode when the second field is a second value.

3. The apparatus of claim 2, wherein the second field is an immediate of the single instruction.

4. The apparatus of any one of claims 1-3, wherein the resultant storage is a third plurality of registers that represents at least one output two-dimensional matrix formed by execution of the decoded single instruction.

5. The apparatus of claim 4, wherein the execution of the decoded single instruction is to:

in the first mode, add values from the third plurality of registers that represents at least one third input two-dimensional matrix initially stored in the third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

6. The apparatus of claim 1, wherein the execution of the decoded single instruction is to:

in the first mode, add values from at least one third input two-dimensional matrix initially stored in a third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

7. The apparatus of any one of claims 1-6, wherein the resultant storage is a third plurality of registers that represents a plurality of output two-dimensional matrices formed by execution of the decoded single instruction.

8. The apparatus of any one of claims 1-7, wherein the first proper subset of fused multiply accumulate circuits is one of a row or a column of the two-dimensional grid of fused multiply accumulate circuits and the second proper subset of fused multiply accumulate circuits is another of the one of the row or the column of the two-dimensional grid of fused multiply accumulate circuits.

9. A method comprising:

decoding, with a decoder of a processor core, a single instruction into a decoded single instruction, wherein the processor core is coupled to a matrix operations accelerator circuit comprising a two-dimensional grid of fused multiply accumulate circuits, the matrix operations accelerator circuit is coupled to a first plurality of registers that represents at least one first input two-dimensional matrix and a second plurality of registers that represents at least one second input two-dimensional matrix, and the single instruction includes a field that identifies a resultant storage; and
executing the decoded single instruction with an execution circuit of the processor core to:
switch the matrix operations accelerator circuit from a first mode where a respective output of each of a first proper subset of fused multiply accumulate circuits of the two-dimensional grid is transmitted downstream to a respective input of each of a second proper subset of fused multiply accumulate circuits of the two-dimensional grid to form output values from the at least one first input two-dimensional matrix and the at least one second input two-dimensional matrix, and store the output values in the resultant storage, to a second mode where the respective output of each of the first proper subset of fused multiply accumulate circuits of the two-dimensional grid form first output values from a first subset of the at least one first input two-dimensional matrix and the at least one second input two-dimensional matrix, and store the first output values in the resultant storage, and a respective output of each of the second proper subset of fused multiply accumulate circuits of the two-dimensional grid form second output values from a second subset of the at least one first input two-dimensional matrix and the at least one second input two-dimensional matrix, and store the second output values in the resultant storage.

10. The method of claim 9, wherein the single instruction comprises a second field indicating that the matrix operations accelerator circuit is to execute in the first mode when the second field is a first value and in the second mode when the second field is a second value.

11. The method of claim 10, wherein the second field is an immediate of the single instruction.

12. The method of any one of claims 9-11, wherein the resultant storage is a third plurality of registers that represents at least one output two-dimensional matrix formed by execution of the decoded single instruction.

13. The method of any one of claims 9-12, wherein the executing the decoded single instruction is to:

in the first mode, add values from at least one third input two-dimensional matrix initially stored in a third plurality of registers to the output values to form updated output values and store the updated output values, instead of the output values, into the resultant storage, and
in the second mode, add values from the at least one third input two-dimensional matrix initially stored in the third plurality of registers to the first output values and the second output values to form updated first output values and updated second output values and store the updated first output values and updated second output values, instead of the first output values and the second output values, into the resultant storage.

14. The method of any one of claims 9-13, wherein the resultant storage is a third plurality of registers that represents a plurality of output two-dimensional matrices formed by execution of the decoded single instruction.

15. The method of any one of claims 9-14, wherein the first proper subset of fused multiply accumulate circuits is one of a row or a column of the two-dimensional grid of fused multiply accumulate circuits and the second proper subset of fused multiply accumulate circuits is another of the one of the row or the column of the two-dimensional grid of fused multiply accumulate circuits.

Tile t0
K=8, N=32,
Size = 4B, pair=no
104

Tile t1
K=8, N=32,
Size = 4B, pair=no
106

Tile t2
K=8, N=16,
Size = 8B, pair=no
108

Tile t3
K=8, N=16,
Size = 8B, pair=no
110

Load /
Store

| t0 | t1 | t2 | t3 |

Application Memory 102

**FIG. 1A**

Tile t4L
K=8, N=32,
Size = 4B, pair=yes
124

Tile t4R
K=8, N=32,
Size = 4B, pair=yes
126

Tile t5L
K=8, N=16,
Size = 8B, pair=yes
128

Tile t5R
K=8, N=16,
Size = 8B, pair=yes
130

Load /
Store

| t4L | t4R | t5L | t5R |

Application Memory 122

**FIG. 1B**

**FIG. 2**

FIG. 3

EP 3 798 823 A1

MEMORY
403

PROCESSOR
401

MATRIX
OPERATIONS
CIRCUITRY
405

**FIG. 4**

MATRIX
OPERATIONS
CIRCUITRY
505

PROCESSOR
501

TILE
MEMORY
507

HOST
MEMORY
503

**FIG. 5**

FIG. 6

SIGNED
SOURCE 1
ELEMENTS
701

3      2

| 3 | 2 |

3      2

| 0 | -1 |

SIGNED
SOURCE 2
ELEMENTS
703

MULTIPLIER
705

MULTIPLIER
707

INIT/
PREVIOUS
RESULT
709

| 1 |

ADDER
711

ADDER
713

ITERATION
RESULT
715

| -1 |

**FIG. 7**

45

SIGNED
SOURCE 1
ELEMENTS
801

| 3 | 2 |
|---|---|
| 3 | 2 |

| 3 | 2 |
|---|---|
| 0 | 1 |

SIGNED
SOURCE 2
ELEMENTS
803

MULTIPLIER
805

MULTIPLIER
807

INIT/
PREVIOUS
RESULT
809

| 1 |
|---|

ADDER/
SATURATION
813

ITERATION
RESULT
815

| 3 |
|---|

FIG. 8

FIG. 9

FIG. 10

ACCUMULATOR 2X INPUT SIZES 1101

| SOURCES | BITS | ACCUMULATOR | BITS |
|---------|------|-------------|------|
| BYTE | 8 | WORD/HPFP | 16 |
| WORD | 16 | INT32/SPFP | 32 |
| SPFP/INT32 | 32 | INT64/DPFP | 64 |

ACCUMULATOR 4X INPUT SIZES 1103

| SOURCES | BITS | ACCUMULATOR | BITS |
|---------|------|-------------|------|
| BYTE | 8 | INT32/SPFP | 32 |
| WORD | 16 | INT64/DPFP | 64 |

ACCUMULATOR 8X INPUT SIZES 1105

| SOURCES | BITS | ACCUMULATOR | BITS |
|---------|------|-------------|------|
| BYTE | 8 | INT64/DPFP | 64 |

FIG. 11

```
┌──────────┐      ┌──────────┐      ┌ ─ ─ ─ ─ ─ ┐
│  CORE 0  │      │  CORE 1  │        MATRIX
│   1201   │      │   1203   │      │OPERATIONS│
│          │      │┌────────┐│       CIRCUITRY
│          │      ││MAT. OP.││      │   1211   │
│          │      ││SUPPORT ││      └ ─ ─ ─ ─ ─ ┘
│          │      ││  1251  ││              ┌ RING
│          │      │└────────┘│                1245
└──────────┘      └──────────┘

┌──────────┐  ┌──────────────────────────────────┐  ┌──────────┐
│  MEMORY  │  │                                  │  │  MEMORY  │
│CONTROLLER│  │                                  │  │CONTROLLER│
│    1     ├──┤                                  ├──┤    N     │
│   1223   │  │                                  │  │   1225   │
└──────────┘  └──────────────────────────────────┘  └──────────┘

┌──────────┐  ┌ ─ ─ ─ ─ ┐  ┌──────────┐  ┌──────────┐  ┌──────────┐
│  MEMORY  │    MATRIX    │  CORE N  │  │  CORE 2  │  │  MEMORY  │
│   1233   │  │OPERATIONS│ │   1207   │  │   1205   │  │   1231   │
│          │   CIRCUITRY                                 │          │
│          │  │   1213   │ │          │  │          │  │          │
└──────────┘  └ ─ ─ ─ ─ ┘  └──────────┘  └──────────┘  └──────────┘
```

**FIG. 12**

Core
1390

| | | |
| INSTRUCTION STORAGE 1301 | BRANCH/DECODE CIRCUITRY 1303 | MICROCODE 1305 |

ALLOCATE/RENAME 1307

SCHEDULER CIRCUITRY 1309

RETIREMENT CIRCUIT 1317

PHYSICAL REGISTER FILES 1315

EXECUTION CIRCUITRY 1311

MATRIX OPERATIONS CIRCUITRY 1327

SCALAR CIRCUITRY 1321

VECTOR/SIMD CIRCUITRY 1323

MEMORY ACCESS CIRCUITRY 1325

CACHE 1313

FIG. 13

EP 3 798 823 A1

Core
1490

INSTRUCTION STORAGE 1401 → BRANCH/DECODE CIRCUITRY 1403 ↔ MICROCODE 1405

ALLOCATE/RENAME 1407

SCHEDULER CIRCUITRY 1409

RETIREMENT CIRCUIT 1417

PHYSICAL REGISTER FILES 1415

EXECUTION CIRCUITRY 1411

MATRIX OPERATIONS CIRCUITRY 1427

MEMORY ACCESS CIRCUITRY 1425

CACHE 1413

FIG. 14

EP 3 798 823 A1

$$A = \begin{bmatrix} A_{11} & A_{12} & A_{13} \\ A_{21} & A_{22} & A_{23} \end{bmatrix}$$

| ADDR | VALUE |
|------|-------|
| 0 | $A_{11}$ |
| 1 | $A_{12}$ |
| 2 | $A_{13}$ |
| 3 | $A_{21}$ |
| 4 | $A_{22}$ |
| 5 | $A_{23}$ |

ROW MAJOR

| ADDR | VALUE |
|------|-------|
| 0 | $A_{11}$ |
| 1 | $A_{21}$ |
| 2 | $A_{12}$ |
| 3 | $A_{22}$ |
| 4 | $A_{13}$ |
| 5 | $A_{23}$ |

COLUMN MAJOR

**FIG. 15**

C
1601

A
1603

B
1605

```
TILECONFIG [RAX]
// ASSUME SOME OUTER LOOPS DRIVING THE CACHE TILING (NOT SHOWN)
{
TILELOAD TMM0, RSI+RDI // SRCDST, RSI POINTS TO C, RDI HAS
TILELOAD TMM1, RSI+RDI+N // SECOND TILE OF C, UNROLLING IN SIMD DIMENSION N
MOV KK, 0
LOOP:
TILELOAD TMM2, R8+R9 // SRC2 IS STRIDED LOAD OF A, REUSED FOR 2 TMMA INSTR.
TILELOAD TMM3, R10+R11 // SRC1 IS STRIDED LOAD OF B
TMMAPS TMM0, TMM2, TMM3 // UPDATE LEFT TILE OF C
TILELOAD TMM3, R10+R11+N // SRC1 LOADED WITH B FROM NEXT RIGHTMOST TILE
TMMAPS TMM1, TMM2, TMM3 // UPDATE RIGHT TILE OF C
ADD R8, K // UPDATE POINTERS BY CONSTANTS KNOWN OUTSIDE OF LOOP
ADD R10, K*R11
ADD KK, K
CMP KK, LIMIT
JNE LOOP
TILESTORE RSI+RDI, TMM0 // UPDATE THE C MATRIX IN MEMORY
TILESTORE RSI+RDI+M, TMM1
} // END OF OUTER LOOP
TILERELEASE // RETURN TILES TO INIT STATE
```

**FIG. 16**

EP 3 798 823 A1

```
┌─────────────────────────────────────────────────────────┐
│                                                         │
│        CONFIGURE USAGE OF MATRICES (TILES) 1701         │
│                                                         │
└─────────────────────────────────────────────────────────┘
                            │
                            ▼
┌─────────────────────────────────────────────────────────┐
│                                                         │
│      LOAD AT LEAST ONE MATRIX (TILE) FROM MEMORY 1703   │
│                                                         │
└─────────────────────────────────────────────────────────┘
                            │
                            ▼
┌─────────────────────────────────────────────────────────┐
│                                                         │
│      PERFORM AT LEAST ONE MATRIX (TILE) OPERATION 1705  │
│                                                         │
└─────────────────────────────────────────────────────────┘
                            │
                            ▼
┌─────────────────────────────────────────────────────────┐
│                                                         │
│      STORE AT LEAST ONE MATRIX (TILE) TO MEMORY 1707    │
│                                                         │
└─────────────────────────────────────────────────────────┘
                            │
                            ▼
┌─────────────────────────────────────────────────────────┐
│                                                         │
│              CONTEXT SWITCH 1709                        │
│                                                         │
└─────────────────────────────────────────────────────────┘
```

**FIG. 17**

MEMORY 1801

TILE DESCRIPTION 1803

PROCESSOR/CORE 1805

INSTRUCTION
EXECUTION
RESOURCES
1811

TILE
CONFIGURATIONS 1817

PALETTE
TABLE 1813

REGISTER(S)
1819

DATA

FIG. 18

| PALETTE ID 1901 | STARTM 1903 |
|---|---|
| STARTP 1905 | PAIR INDICATORS 1907 |
| 0 | 0 |
| 0 | 0 |

. . .

| 0 | 0 |
|---|---|
| TMM0 ROWS 1913 | TMM0 COLUMNS 1915 |
| TMM1 ROWS | TMM1 COLUMNS |
| ■ ■ ■ | |
| TMM15 ROWS | TMM15 COLUMNS |
| 0 | |

FIG. 19

REGISTERS 1819

| TMM0 CONFIG 2001 | STARTP 2011 | |
| . . . | | STATUS 2015 |
| TMMN CONFIG 2003 | STARTROW 2013 | |

**FIG. 20(A)**

REGISTERS 1819

| TMM0 ROW CONFIG 2021 | TMM0 COL. CONFIG 2023 | STARTP 2011 | |
| . . . | . . . | | STATUS 2015 |
| TMMN ROW CONFIG | TMMN COL. CONFIG | STARTROW 2013 | |

**FIG. 20(B)**

REGISTERS 1819

| TMM CONFIGS 2031 | STARTP 2011 | STARTROW 2013 | STATUS 2015 |

**FIG. 20(C)**

REGISTERS 1819

| TMM CONFIGS 2031 | | |
| STARTP 2011 | STARTROW 2013 | STATUS 2015 |

**FIG. 20(D)**

FIG. 21

INSTRUCTION 2201

| OPCODE TILEPARTIALDOTPRODUCT 2202 | DESTINATION/SOURCE LOCATION (REG/TILE/MEM) 2204 | SOURCE LOCATION 1 (REG/TILE/MEM) 2206 | SOURCE LOCATION 2 (REG/TILE/MEM) 2208 | M 2210 | K 2212 | IMMEDIATE (N) 2214 |
|---|---|---|---|---|---|---|

2200

A1 | A1'
A2 | A2'
A 2222

B1
B1'
B 2224

C1 | C1'
C2 | C2'
C (ORIGINAL) 2226

MATRIX OPERATIONS ACCELERATOR CIRCUIT 2220

C1 | C1'
C2 | C2'
C (UPDATED) 2226

FIG. 22

EP 3 798 823 A1

2300

FETCH, USING FETCH CIRCUITRY, AN INSTRUCTION WITH A FORMAT HAVING FIELDS TO SPECIFY AN OPCODE AND LOCATIONS OF SOURCE TILES AND A DESTINATION TILE, WHEREIN THE OPCODE INDICATES THAT THE PROCESSOR IS TO PERFORM A DOT PRODUCT OPERATION ON A PROPER SUBSET OF THE DATA OF EACH MATRIX OF MULTIPLE MATRICES IN A SINGLE SOURCE TILE
2301

DECODE, USING DECODE CIRCUITRY, THE FETCHED INSTRUCTION
2303

SCHEDULE EXECUTION OF THE DECODED MATRIX INSTRUCTION
2305

RESPOND, USING EXECUTION CIRCUITRY, TO THE DECODED INSTRUCTION BY THE DOT PRODUCT OPERATIONS ON THE PROPER SUBSETS OF THE DATA AND SAVING RESULTANTS INTO THE DESTINATION TILE
2307

COMMIT THE RESULTANTS OF THE EXECUTED INSTRUCTION
2309

FIG. 23

FIG. 24

**FIG. 25**

FIG. 26

FIG.27A

FULL OPCODE FIELD 2774

| FORMAT FIELD 2740 | BASE OPERATION FIELD 2742 | REGISTER INDEX FIELD 2744 | MODIFIER FIELD 2746 | AUGMENTATION OPERATION FIELD 2750 | | | SCALE FIELD 2760 | DISP. F. 2762A / DISP. F. F. 2762B | DATA ELEMENT WIDTH FIELD 2764 | WRITE MASK FIELD 2770 | IMMEDIATE FIELD 2772 |
|---|---|---|---|---|---|---|---|---|---|---|---|
| | | | | CLASS FIELD 2768 | ALPHA FIELD 2752 | BETA FIELD 2754 | | | | | |

GENERIC VECTOR FRIENDLY INSTRUCTION FORMAT 2700

NO MEMORY ACCESS 2705

NO MEMORY ACCESS, FULL ROUND CNTRL TYPE OP. 2710

RS FIELD 2752A

| FORMAT FIELD 2740 | BASE OPERATION FIELD 2742 | REGISTER INDEX FIELD 2744 | NO MEMORY ACCESS 2746A | CLASS A 2768A | ROUND 2752A.1 | ROUND CONTROL FIELD 2754A — SAE FIELD 2756 | ROUND OPERATION FIELD 2758 | DATA ELEMENT WIDTH FIELD 2764 | WRITE MASK FIELD 2770 | IMMEDIATE FIELD 2772 |

NO MEMORY ACCESS, DT TYPE OPERATION 2715

| FORMAT FIELD 2740 | BASE OPERATION FIELD 2742 | REGISTER INDEX FIELD 2744 | NO MEMORY ACCESS 2746A | CLASS A 2768A | DATA TRANSFORM 2752A.2 | DATA TRANSFORM FIELD 2754B | DATA ELEMENT WIDTH FIELD 2764 | WRITE MASK FIELD 2770 | IMMEDIATE FIELD 2772 |

MEMORY ACCESS 2720

MEMORY ACCESS, TEMPORAL 2725

EVICTION HINT (EH) FIELD 2752B

| FORMAT FIELD 2740 | BASE OPERATION FIELD 2742 | REGISTER INDEX FIELD 2744 | MEMORY ACCESS 2746B | CLASS A 2768A | TEMPORAL 2752B.1 | DATA MANIPULATION FIELD 2754C | SCALE FIELD 2760 | DISP. F. 2762A / DISP. F. F. 2762B | DATA ELEMENT WIDTH FIELD 2764 | WRITE MASK FIELD 2770 | IMMEDIATE FIELD 2772 |

MEMORY ACCESS, NONTEMPORAL 2730

| FORMAT FIELD 2740 | BASE OPERATION FIELD 2742 | REGISTER INDEX FIELD 2744 | MEMORY ACCESS 2746B | CLASS A 2768A | NON-TEMPORAL 2752B.2 | DATA MANIPULATION FIELD 2754C | SCALE FIELD 2760 | DISP. F. 2762A / DISP. F. F. 2762B | DATA ELEMENT WIDTH FIELD 2764 | WRITE MASK FIELD 2770 | IMMEDIATE FIELD 2772 |

EP 3 798 823 A1

FIG. 27B

FULL OPCODE FIELD 2774

| FORMAT FIELD 2740 | BASE OPERATION FIELD 2742 | REGISTER INDEX FIELD 2744 | MODIFIER FIELD 2746 | AUGMENTATION OPERATION FIELD 2750 | | | SCALE FIELD 2760 | DISP. F. 2762A / DISP. F. F. 2762B | DATA ELEMENT WIDTH FIELD 2764 | WRITE MASK FIELD 2770 | IMMEDIATE FIELD 2772 |
|---|---|---|---|---|---|---|---|---|---|---|---|
| | | | | CLASS FIELD 2768 | ALPHA FIELD 2752 | BETA FIELD 2754 | | | | | |

GENERIC VECTOR FRIENDLY INSTRUCTION FORMAT 2700

NO MEMORY ACCESS 2705

NO MEM. ACC., W.M.C., PART. RND. CNTRL. TYPE OP. 2712

| FORMAT FIELD 2740 | BASE OPERATION FIELD 2742 | REGISTER INDEX FIELD 2744 | NO MEMORY ACCESS 2746A | CLASS B 2768B | WRITE MASK CONTROL FIELD 2752C | RND 2757A.1 | ROUND OPERATION FIELD 2759A | DATA ELEMENT WIDTH FIELD 2764 | WRITE MASK FIELD 2770 | IMMEDIATE FIELD 2772 |
|---|---|---|---|---|---|---|---|---|---|---|

RL FIELD 2757A

NO MEM. ACC., W.M.C., VSIZE TYPE OP. 2717

| FORMAT FIELD 2740 | BASE OPERATION FIELD 2742 | REGISTER INDEX FIELD 2744 | NO MEMORY ACCESS 2746A | CLASS B 2768B | WRITE MASK CONTROL FIELD 2752C | VSIZE 2757A.2 | VECTOR LENGTH FIELD 2759B | DATA ELEMENT WIDTH FIELD 2764 | WRITE MASK FIELD 2770 | IMMEDIATE FIELD 2772 |
|---|---|---|---|---|---|---|---|---|---|---|

MEMORY ACCESS 2720

MEM. ACC, W.M.C., 2727

| FORMAT FIELD 2740 | BASE OPERATION FIELD 2742 | REGISTER INDEX FIELD 2744 | MEMORY ACCESS 2746B | CLASS B 2768B | WRITE MASK CONTROL FIELD 2752C | BROADCAST FIELD 2757B | VECTOR LENGTH FIELD 2759B | SCALE FIELD 2760 | DISP. F. 2762A / DISP. F. F. 2762B | DATA ELEMENT WIDTH FIELD 2764 | WRITE MASK FIELD 2770 | IMMEDIATE FIELD 2772 |
|---|---|---|---|---|---|---|---|---|---|---|---|---|

FIG. 28A

EVEX PREFIX 2802

MOD R/M BYTE
7 6 5 3 2 0
| MOD 2842 | REG 2844 | R/M 2846 |

SIB BYTE
7 6 5 3 2 0
| SS 2852 | XXX 2854 | BBB 2856 |

DATA ELEMENT WIDTH FIELD 2764
CLASS FIELD 2768
REX' 2810
BETA FIELD 2754
REX' 2810

DISPLACEMENT FIELD 2762A (DISP32 WHEN MOD=10)

0x62 R X B R' M M M M W V V V V U P P α β β β V' K K K Y Y Y Y Y Y Y Y MOD R/M SIB D D D D IMM8

FORMAT FIELD 2740
REX 2805
OPCODE MAP 2815
VVVV FIELD 2820
ALPHA FIELD 2752
PREFIX ENCODING FIELD 2825
WRITE MASK FIELD 2770
REAL OPCODE FIELD 2830
2840
2850
2772

DISPLACEMENT FACTOR FIELD 2762B (DISP8*N WHEN MOD=01). REFERRED TO AS DISP8*N, BUT HOLDS ONLY THE DISPLACEMENT FACTOR WHICH IS MULTIPLIED BY N

SPECIFIC VECTOR FRIENDLY INSTRUCTION FORMAT 2800

FIG. 28B

FULL OPCODE FIELD 2774
OPCODE MAP 2815
DATA ELEMENT WIDTH FIELD 2764
FORMAT FIELD 2740

0x62 P P M M M M W Y Y Y Y Y Y Y Y

PREFIX ENCODING FIELD 2825
BASE OPERATION FIELD 2742
REAL OPCODE FIELD 2830

FIG. 28C

REGISTER INDEX FIELD 2744

R X B R' | V' | REG R/M | V V V V | XXX BBB

REX 2805
REX' 2810
2844
2846
VVVV FIELD 2820
2854
2856

EP 3 798 823 A1

**FIG. 28D**

AUGMENTATION OPERATION FIELD 2750

CLASS FIELD 2768  ALPHA FIELD 2752  BETA FIELD 2754

U=0

RS FIELD 2752A
ROUND 2752A.1
SAE FIELD 2756
ROUND OPERATION FIELD 2758
ROUND CONTROL FIELD 2754A

MOD FIELD 2842
RS FIELD 2752A
DATA TRANSFORM 2752A.2
DATA TRANSFORM FIELD 2754B

EVICTION HINT FIELD 2752B
MOD FIELD 2842
2762A
DATA MANIPULATION FIELD 2754C

U=1

WRITE MASK CONTROL FIELD 2752C
MERGING
ZEROING

MOD FIELD 2842
RL FIELD 2757A
ROUND 2757A.1
ROUND OPERATION FIELD 2759A

RL FIELD 2757A
VSIZE 2757A.2
VECTOR LENGTH FIELD 2759B

MOD FIELD 2842
2762A
VECTOR LENGTH FIELD 2759B
BROADCAST FIELD 2757B

REGISTER ARCHITECTURE <u>2900</u>

GENERAL PURPOSE REGISTERS <u>2925</u>
16 X 64 BITS

VECTOR REGISTERS 2910
512 BITS

$zmm_0$     $ymm_0$     $xmm_0$

$ymm_{15}$     $xmm_{15}$

128 BITS

256 BITS

$zmm_{31}$

SCALAR FP STACK REGISTER FILE 2945
(X87FP)
80 BITS

0

ALIASED

7

64 BITS
MMX PACKED INT FLAT
REGISTER FILE 2950

WRITE MASK REGISTERS <u>2915</u>
64 BITS

$k_0$

$k_7$

**FIG. 29**

**FIG. 30A**

PIPELINE 3000

| FETCH 3002 | LENGTH DECODING 3004 | DECODE 3006 | ALLOC. 3008 | RENAMING 3010 | SCHEDULE 3012 | REGISTER READ/ MEMORY READ 3014 | EXECUTE STAGE 3016 | WRITE BACK/ MEMORY WRITE 3018 | EXCEPTION HANDLING 3022 | COMMIT 3024 |
|---|---|---|---|---|---|---|---|---|---|---|

CORE 3090

**FIG. 30B**

FRONT END UNIT 3030

BRANCH PREDICTION UNIT 3032

INSTRUCTION CACHE UNIT 3034

INSTRUCTION TLB UNIT 3036

INSTRUCTION FETCH 3038

DECODE UNIT 3040

EXECUTION ENGINE UNIT 3050

RENAME / ALLOCATOR UNIT 3052

RETIREMENT UNIT 3054

SCHEDULER UNIT(S) 3056

PHYSICAL REGISTER FILES UNIT(S) 3058

EXECUTION CLUSTER(S) 3060

EXECUTION UNIT(S) 3062

MEMORY ACCESS UNIT(S) 3064

MEMORY UNIT 3070

DATA TLB UNIT 3072

DATA CACHE UNIT 3074

L2 CACHE UNIT 3076

EP 3 798 823 A1

EP 3 798 823 A1

## FIG. 31A

```
┌─────────────────────────────────┐
│      INSTRUCTION DECODE          │
│             3100                 │
└─────────────────────────────────┘
     │           ↑           │
     ↓           │           ↓
┌──────────┐     │     ┌──────────┐
│ SCALAR   │     │     │ VECTOR   │
│ UNIT     │     │     │ UNIT     │
│ 3108     │     │     │ 3110     │
└──────────┘     │     └──────────┘
   ↑  ↑──────────┘          ↑
   ↓                        ↓
┌──────────┐        ┌──────────┐
│ SCALAR   │        │ VECTOR   │
│ REGISTERS│        │ REGISTERS│
│ 3112     │        │ 3114     │
└──────────┘        └──────────┘
     ↕                   ↕
┌─────────────────────────────────┐
│          L1 CACHE                │
│            3106                  │
└─────────────────────────────────┘
              ↕
┌─────────────────────────────────┐
│  LOCAL SUBSET OF THE L2 CACHE    │
│            3104                  │
└─────────────────────────────────┘
              ↕
     ┌─────────────────────┐
  ←→ │   RING NETWORK      │ ←→
     │      3102           │
     └─────────────────────┘
```

**FIG. 31A**

## FIG. 31B

```
┌─────────────────────────────────┐
│     WRITE MASK REGISTERS         │
│            3126                  │
└─────────────────────────────────┘
        │              ↑
        ↓              │
┌─────────────────────────────────┐
│      16-WIDE VECTOR ALU          │
│            3128                  │
└─────────────────────────────────┘
     ↑              ↑   ↑  ↑
     │              │   │  │
┌──────────┐   ┌──────────┐
│ REPLICATE│   │ SWIZZLE  │
│   3124   │   │  3120    │
└──────────┘   └──────────┘
     ↕           ↑  ↑  ↑
           ┌──────────────┐
           │   VECTOR     │
           │  REGISTERS   │
           │    3114      │
           └──────────────┘
     ↑              ↓
┌──────────┐   ┌──────────┐
│ NUMERIC  │   │ NUMERIC  │
│ CONVERT  │   │ CONVERT  │
│  3122A   │   │  3122B   │
└──────────┘   └──────────┘
     ↑              ↓
┌─────────────────────────────────┐
│       L1 DATA CACHE              │
│           3106A                  │
└─────────────────────────────────┘
```

**FIG. 31B**

PROCESSOR 3200

SPECIAL PURPOSE LOGIC 3208

CORE 3202A
CACHE UNIT(S) 3204A

CORE 3202N
CACHE UNIT(S) 3204N

SHARED CACHE UNIT(S) 3206

RING 3212

SYSTEM AGENT UNIT 3210

INTEGRATED MEMORY CONTROLLER UNIT(S) 3214

BUS CONTROLLER UNIT(S) 3216

FIG. 32

FIG. 33

FIG. 34

**FIG. 35**

EP 3 798 823 A1

EP 3 798 823 A1

APPLICATION PROCESSOR 3610

CORE 3202A

CACHE UNIT(S) 3204A

CORE 3202N

CACHE UNIT(S) 3204N

SHARED CACHE UNIT(S) 3206

SYSTEM ON A CHIP 3600

SYSTEM AGENT UNIT 3210

COPROCESSOR(S) 3620

INTERCONNECT UNIT(S) 3602

BUS CONTROLLER UNIT(S) 3216

INTEGRATED MEMORY CONTROLLER UNIT(S) 3214

SRAM UNIT 3630

DMA UNIT 3632

DISPLAY UNIT 3640

FIG. 36

PROCESSOR WITH AT LEAST ONE X86 INSTRUCTION SET CORE 3716

PROCESSOR WITHOUT AN X86 INSTRUCTION SET CORE 3714

HARDWARE

SOFTWARE

X86 BINARY CODE 3706

X86 COMPILER 3704

HIGH LEVEL LANGUAGE 3702

INSTRUCTION CONVERTER 3712

ALTERNATIVE INSTRUCTION SET BINARY CODE 3710

ALTERNATIVE INSTRUCTION SET COMPILER 3708

**FIG. 37**

**Europäisches Patentamt**
**European Patent Office**
**Office européen des brevets**

# EUROPEAN SEARCH REPORT

Application Number

EP 20 17 8989

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 409 608 B2 (HYPERION CORE INC [US]) 10 September 2019 (2019-09-10) * column 3, line 62 * * column 5, line 32 - line 35 * * column 5, line 32 - line 41 * * column 5, line 63 - line 67 * * column 10, line 24 - line 27 * * column 10, line 56 - line 58 * * column 44, line 54 - line 57 * ----- | 1-15 | INV. G06F9/30 |
| A | US 5 717 943 A (BARKER THOMAS NORMAN [US] ET AL) 10 February 1998 (1998-02-10) * the whole document * ----- | 1-15 | |

TECHNICAL FIELDS
SEARCHED     (IPC)

G06F

The present search report has been drawn up for all claims

| Place of search | Date of completion of the search | Examiner |
|---|---|---|
| The Hague | 3 December 2020 | Gratia, Romain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 17 8989

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2020

| Patent document cited in search report | | Publication date | Patent family member(s) | | Publication date |
|---|---|---|---|---|---|
| US 10409608 | B2 | 10-09-2019 | EP | 2366144 A2 | 21-09-2011 |
| | | | EP | 2996035 A1 | 16-03-2016 |
| | | | US | 2012216012 A1 | 23-08-2012 |
| | | | US | 2016048394 A1 | 18-02-2016 |
| | | | US | 2018181403 A1 | 28-06-2018 |
| | | | US | 2020241879 A1 | 30-07-2020 |
| | | | WO | 2010043401 A2 | 22-04-2010 |
| US 5717943 | A | 10-02-1998 | EP | 0570950 A2 | 24-11-1993 |
| | | | JP | 2710536 B2 | 10-02-1998 |
| | | | JP | H06231092 A | 19-08-1994 |
| | | | US | 5590345 A | 31-12-1996 |
| | | | US | 5710935 A | 20-01-1998 |
| | | | US | 5717943 A | 10-02-1998 |
| | | | US | 5842031 A | 24-11-1998 |

EPO FORM P0459

For more details about this annex : see Official Journal of the European Patent Office, No. 12/82